(19) **Europäisches Patentamt / European Patent Office / Office européen des brevets**

(11) **EP 4 718 205 A1**

(12) # EUROPEAN PATENT APPLICATION
published in accordance with Art. 153(4) EPC

(43) Date of publication:
01.04.2026 Bulletin 2026/14

(21) Application number: 24872708.3

(22) Date of filing: 05.08.2024

(51) International Patent Classification (IPC):
*G06F 1/16* (2006.01)        *G06V 40/13* (2022.01)
*H04M 1/23* (2006.01)        *H04M 1/02* (2006.01)

(52) Cooperative Patent Classification (CPC):
G06F 1/16; G06V 40/13; H04M 1/02; H04M 1/23

(86) International application number:
PCT/KR2024/011529

(87) International publication number:
WO 2025/070999 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.09.2023  KR 20230128626
25.10.2023  KR 20230144124
03.11.2023  KR 20230151241
08.12.2023  KR 20230177722
08.12.2023  KR 20230177723
13.12.2023  KR 20230181263
17.07.2024  PCT/KR2024/010319

(71) Applicant: Samsung Electronics Co., Ltd.
Suwon-si, Gyeonggi-do 16677 (KR)

(72) Inventors:
• KIM, Namwoo
  Suwon-si Gyeonggi-do 16677 (KR)
• AHN, Jaeuk
  Suwon-si Gyeonggi-do 16677 (KR)
• HONG, Hyunchul
  Suwon-si Gyeonggi-do 16677 (KR)
• CHOI, Junyoung
  Suwon-si Gyeonggi-do 16677 (KR)
• JUNG, Soli
  Suwon-si Gyeonggi-do 16677 (KR)
• YOON, Yeonggyu
  Suwon-si Gyeonggi-do 16677 (KR)
• PARK, Changi
  Suwon-si Gyeonggi-do 16677 (KR)
• KIM, Minho
  Suwon-si Gyeonggi-do 16677 (KR)
• KANG, Jeongho
  Suwon-si Gyeonggi-do 16677 (KR)
• YOON, Byounguk
  Suwon-si Gyeonggi-do 16677 (KR)

(74) Representative: Appleyard Lees IP LLP
G Mill
Dean Clough Industrial Park
Halifax HX3 5AH (GB)

(54) **FOLDABLE ELECTRONIC DEVICE COMPRISING GEARS**

(57) This foldable electronic device comprises: a housing including a first housing part, a second housing part, and a third housing part; a first hinge assembly rotatably connecting the first housing part and the third housing part, and including a first gear set for rotating the third housing part together with the rotation of the first housing part; and a second hinge assembly rotatably connecting the second housing part and the third housing part, and including a second gear set for rotating the third housing part together with the rotation of the second housing part. The number of gears included in the second gear set is greater than the number of gears included in the first gear set.

EP 4 718 205 A1

FIG. 4A

## Description

**[Technical Field]**

The present disclosure relates to a foldable electronic device comprising gears.

**[Background Art]**

In order to provide improved user experience, an electronic device may include a foldable electronic device including a flexible display. For example, the foldable electronic device may include a plurality of housing parts. A foldable housing may have a structure in which the plurality of housing parts may be folded or unfolded more than once. For example, the foldable housing may include three housing parts that are rotatably coupled with each other through two hinge assemblies. A structure of each of the two hinge assemblies may differ according to how the foldable housing is folded.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

A foldable electronic device is provided. The foldable electronic device may comprise a housing including a first housing part, a second housing part, and a third housing part. The foldable electronic device may comprise a first hinge assembly rotatably connecting the third housing part to the first housing part, the first hinge assembly including a first set of gears to rotate the third housing part in conjunction with rotation of the first housing part. The foldable electronic device may comprise a second hinge assembly rotatably connecting the third housing part to the second housing part, the second hinge assembly including a second set of gears to rotate the third housing part in conjunction with rotation of the second housing part. The number of gears included in the second set of gears may be greater than the number of gears included in the first set of gears to provide a folded state of the foldable electronic device, in which a front side of the first housing part faces a front side of the third housing part and a rear side of the first housing part faces a front side of the second housing part.

**[Description of the Drawings]**

FIG. 1 is a block diagram of an electronic device in a network environment according to an embodiment.
FIG. 2 illustrates a foldable electronic device according to an embodiment.
FIG. 3A illustrates a housing and hinge assemblies of a foldable electronic device according to an embodiment.
FIG. 3B illustrates states of a foldable electronic device according to an embodiment.
FIG. 4A is an exploded view of a second hinge assembly.
FIG. 4B illustrates a portion of a second hinge assembly.
FIG. 5A illustrates a first rotating member of a second hinge assembly.
FIG. 5B illustrates a guide member of a second hinge assembly.
FIG. 5C illustrates a state in which the first rotating member illustrated in FIG. 5A and the guide member illustrated in FIG. 5B are coupled to each other.
FIG. 6A is a cross-sectional view of a second hinge assembly cut along line A-A' of FIG. 5C.
FIG. 6B illustrates an operation of a first rotating member in a case that a first arm and a second arm are not linked to each other.
FIG. 6C illustrates an operation of a first rotating member in a case that a first arm and a second arm are linked to each other.
FIG. 7A illustrates a first set of gears of a first hinge assembly.
FIG. 7B illustrates a second set of gears of a second hinge assembly.
FIG. 7C schematically illustrates a first hinge assembly and a second hinge assembly.
FIG. 8A illustrates shafts of a first hinge assembly and shafts of a second hinge assembly.
FIG. 8B illustrates a second rotating member of a second hinge assembly.
FIG. 9A illustrates a coupling relationship between a first rotating member, a connecting member, and a second rotating member of a second hinge assembly.

FIG. 9B is a perspective view of a portion of a second hinge assembly.

FIG. 9C illustrates a portion of a second hinge assembly in a first state or a second state.

FIG. 9D illustrates a portion of a second hinge assembly in a third state.

FIG. 10A illustrates an operation process of a second hinge assembly.

FIG. 10B illustrates a cross-section between a foldable housing and a second hinge assembly.

FIG. 11A illustrates an operation process of a second hinge assembly.

FIG. 11B is a cross-sectional view of a connecting portion between a first rotating member and a guide member in a first state or a second state.

FIG. 11C illustrates a portion of a second hinge assembly.

FIG. 12A illustrates a portion of a first hinge assembly and a portion of a second hinge assembly.

FIG. 12B is a cross-sectional view of a second hinge assembly cut along line C-C' of FIG. 12A.

FIG. 12C illustrates a slot and a protrusion of a second hinge assembly.

FIG. 12D illustrates states of a second hinge assembly according to a rotational angle of the second hinge assembly.

FIG. 12E illustrates a third elastic member disposed in a slot.

FIG. 13 illustrates a portion of a second hinge assembly.

FIG. 14A is an exploded perspective view of a second hinge assembly and an exemplary second support plate.

FIG. 14B illustrates a state in which a second support plate is coupled to a second hinge cover.

FIG. 14C illustrates a flexible display according to a state of a foldable electronic device according to an embodiment.

FIG. 15A schematically illustrates a deformation process of a flexible display according to an operation of a second hinge assembly.

FIG. 15B illustrates a second hinge assembly and a second support plate.

FIG. 15C illustrates a first hinge assembly and a second hinge assembly.

FIG. 16A is a view for comparing a foldable electronic device including a second support plate and a foldable electronic device not including the second support plate.

FIGS. 16B and 16C illustrate a portion of a foldable electronic device including a second support plate.

FIG. 17 illustrates a process in which a foldable electronic device is deformed from an unfolded state to a folded state according to an embodiment.

FIG. 18 is a cross-sectional view of a foldable electronic device according to an embodiment.

FIG. 19 illustrates a flexible display, a first hinge assembly, and a second hinge assembly in a folded state.

FIG. 20A is a perspective view of a foldable electronic device according to an embodiment.

FIG. 20B illustrates a foldable electronic device according to a comparative example.

FIG. 21 illustrates a foldable electronic device according to an embodiment in a folded state.

**[Mode for Invention]**

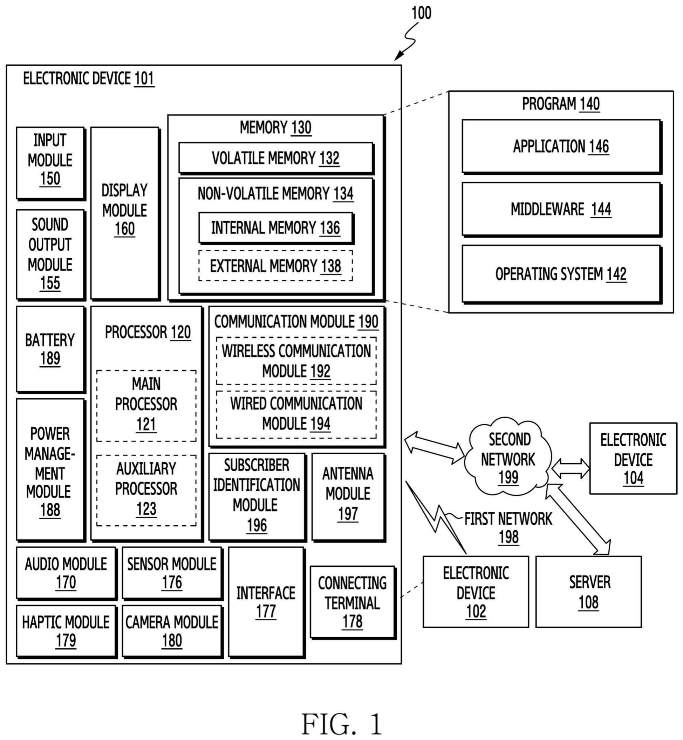

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation.

According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g.,

commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the present disclosure, relative terms such as "upper," "lower," "a side," "another side," "an end," and "another end" may be used to describe a relative positional relationship between components, rather than indicating absolute positions of the components. For example, in a case that an electronic device 101 illustrated in the drawings is flipped, "upper" and "lower" may be swapped with each other. For example, in a case that the electronic device 101 illustrated in the drawings is flipped, "an end" and "another end" may be swapped with each other.

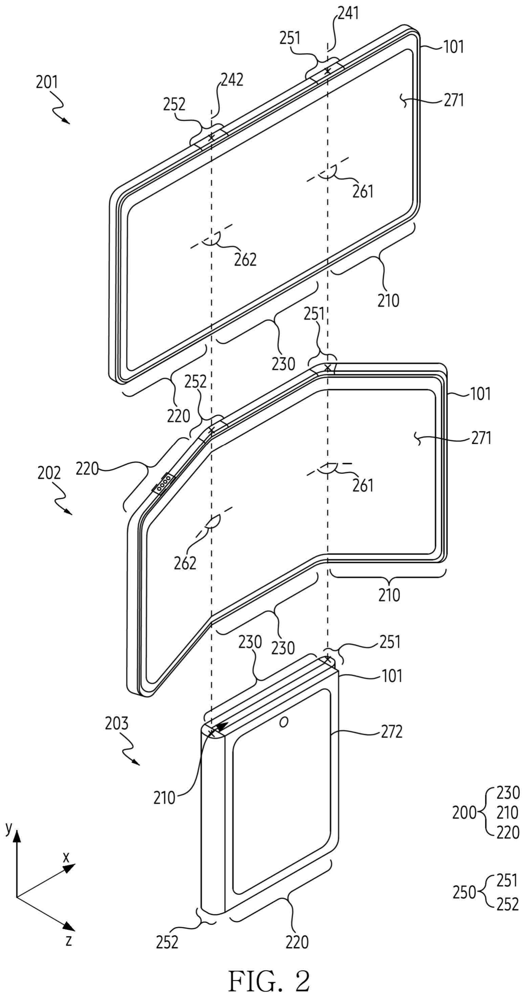

FIG. 2 illustrates a foldable electronic device according to an embodiment.

Referring to FIG. 2, an electronic device (e.g., the electronic device 101 of FIG. 1) may include a foldable electronic device 101. The foldable electronic device 101 according to an embodiment may include a deformable housing (e.g., a foldable housing 200). The housing may include the foldable housing 200 configured to be folded or unfolded. For example, the foldable housing 200 may be referred to as a multi foldable housing in that it includes three rotatably connected housing parts. For example, the foldable housing 200 may include a first housing part 210, a second housing part 220, and a third housing part 230 rotatably coupled to each other. In the present disclosure, the foldable housing 200 is described as a structure including the first housing part 210, the second housing part 220, and the third housing part 230, but is not limited thereto. For example, the foldable housing 200 may also include four or more housing parts.

For example, the electronic device 101 may include a hinge assembly 250 (e.g., a first hinge assembly 251 and a second hinge assembly 252) for the deformable structure of the foldable housing 200. For example, the hinge assembly 250 may rotatably connect the first housing part 210, the second housing part 220, and the third housing part 230 to each other. For example, according to the structure in which the foldable housing 200 is folded, a connection relationship between the hinge assembly 250 and the housing parts may be different.

Referring to FIG. 2, the first housing part 210 may be rotatably coupled to a side (e.g., +x direction side) of the third housing part 230 with respect to a first folding axis 241. For example, the second housing part 220 may be rotatably coupled to another side (e.g., -x direction side) of the third housing part 230 with respect to a second folding axis 242. For example, the hinge assembly 250 may include a first hinge assembly 251 rotatably connecting the first housing part 210 to the side of the third housing part 230, and a second hinge assembly 252 that rotatably connecting the second housing part 220 to the other side of the third housing part 230. The electronic device 101 may have a structure that may be folded more than once by the first hinge assembly 251 and the second hinge assembly 252.

According to an embodiment, the second folding axis 242 may be parallel to the first folding axis 241. For example, the first folding axis 241 and the second folding axis 242 may be parallel to a y axis. For example, the first folding axis 241 may be a rotational axis that is a center of rotation of the first housing part 210 and the third housing part 230 connected by the first hinge assembly 251. For example, the second folding axis 242 may be a rotational axis that is a center of rotation of the second housing part 220 and the third housing part 230 connected by the second hinge assembly 252.

For example, as the first housing part 210 and/or the third housing part 230 rotates with respect to the first folding axis 241, a first angle 261 between the first housing part 230 and the third housing part 230 may change. For example, as the second housing part 220 and/or the third housing part 230 rotates with respect to the second folding axis 242, a second angle 262 between the second housing part 220 and the third housing part 230 may change. In terms of including a plurality of folding axes, such as the first folding axis 241 and the second folding axis 242, the foldable electronic device 101 according to an embodiment may be referred to as a multi foldable electronic device.

The foldable electronic device 101 according to an embodiment may include a flexible display 271 disposed on the foldable housing 200. For example, the flexible display 271may extend from at least a portion of a front of the first housing part 210 to at least a portion of a front of the second housing part 220 across at least a portion of a front of the third housing part 230. For example, in a case that the foldable housing 200 is folded or unfolded, at least a portion of the flexible display 271 may be folded or unfolded.

Referring to FIG. 2, different states of the electronic device 101 distinguished by a shape of the foldable housing 200 are illustrated. For example, the flexible display 271 of the electronic device 101 illustrated in FIG. 2 may be covered by the first housing part 210, the second housing part 220, and the third housing part 230, folded along the first folding axis 241 and the second folding axis 242. The states described in the present disclosure may indicate states of the foldable electronic device 101 or states of the foldable housing 200.

A first state 201 of FIG. 2 may indicate a state in which the first housing part 210, the second housing part 220, and the third housing part 230 are fully unfolded. For example, in the first state 201, the first angle 261 and the second angle 262 may be substantially straight angles (e.g., about 180 degrees). The first state 201 may be referred to as an open state, a flat state, an outspread state, and/or an unfolded state in terms of the first housing part 210, the second housing part 220, and the third housing part 230 being fully unfolded. In the first state 201, the flexible display 271 may be substantially flat. For example, in the first state 201, the third housing part 230 may be positioned between the first housing part 210 and the second housing part 220.

A second state 202 of FIG. 2 may indicate a state in which at least one of the first angle 261 or the second angle 262 is less than a straight angle. For example, as the first housing part 210 rotates with respect to the third housing part 230, or the second housing part 220 rotates with respect to the third housing part 230, the electronic device 101 may change from the first state 201 to the second state 202. For example, a state of the electronic device 101 in which the first angle 261 and/or the second angle 262 is less than the straight angle may be referred to as an in-fold state, a sub-unfold state (or a sub-fold state), an intermediate state, and/or a concave state. In the second state 202, a portion of the flexible display 271 may be folded. For example, a portion of the flexible display 271 corresponding to the first folding axis 241 and/or the second folding axis 242 may be folded at an angle corresponding to the first angle 261 and/or the second angle 262.

A third state 203 of FIG. 2 may indicate a state in which the first housing part 210, the second housing part 220, and the third housing part 230 are fully folded. For example, in the third state 203, the first angle 261 and the second angle 262 may be substantially 0 degrees. For example, in the third state 203, the flexible display 271 may not be exposed to the outside of the electronic device 101 by being covered by the first housing part 210, the second housing part 220, and the third housing part 230. For example, in the third state 203, a cover display 272 disposed on the second housing part 220 may be exposed to the outside.

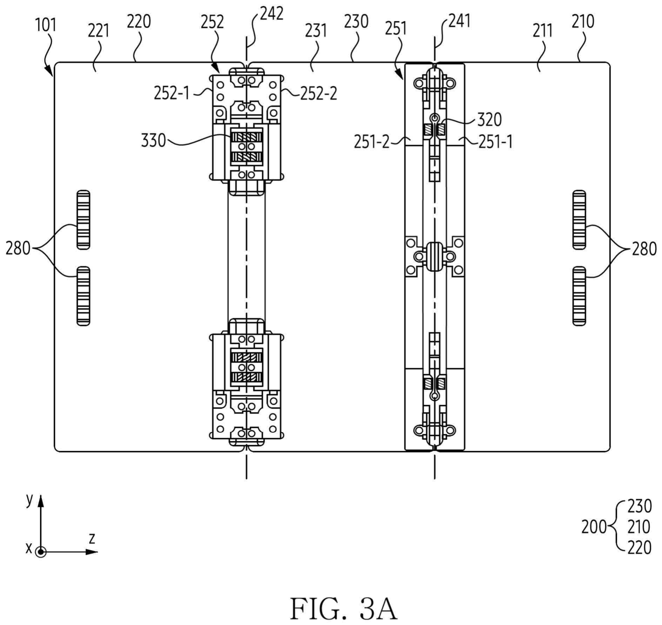

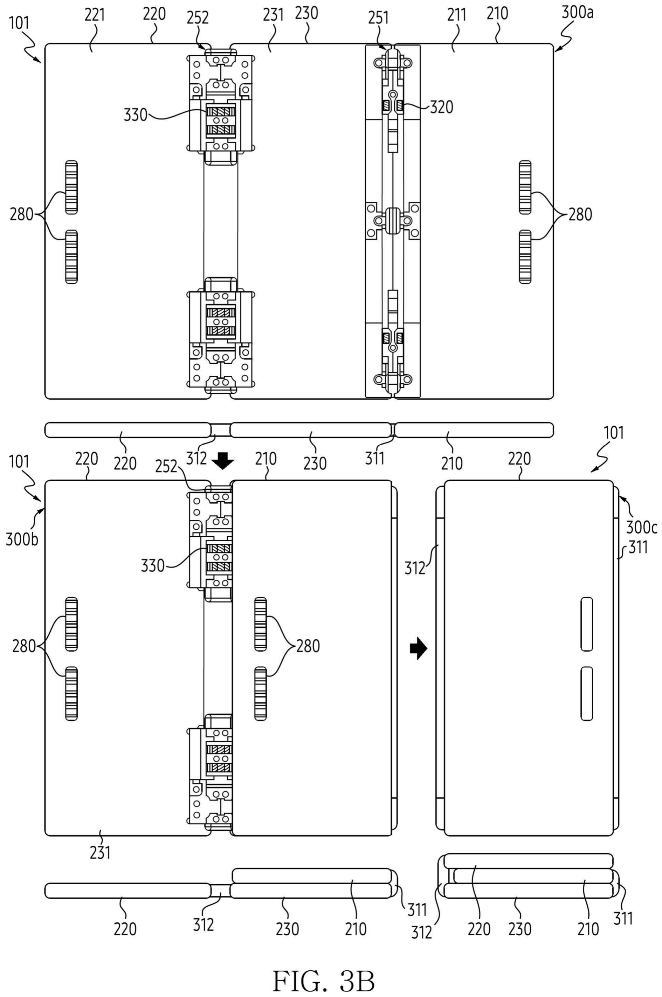

FIG. 3A illustrates a housing and hinge assemblies of a foldable electronic device according to an embodiment. FIG. 3B illustrates states of a foldable electronic device according to an embodiment.

According to an embodiment, a foldable housing 200 may include a first housing part 210, a second housing part 220, and a third housing part 230. For example, the first housing part 210 may include a first support member 211. For example, the second housing part 220 may include a second support member 221. For example, the third housing part 230 may include a third support member 231. The first support member 211, the second support member 221, and the third support member 231 may support a flexible display (e.g., the flexible display 271 of FIG. 2) and electronic components disposed inside the foldable housing 200.

According to an embodiment, a foldable electronic device 101 may include a first hinge assembly 251 and a second hinge assembly 252 that provide deformation of the foldable housing 200. For example, the first hinge assembly 251 may be disposed between the first housing part 210 and the third housing part 230. For example, the first hinge assembly 251 may rotatably connect the first housing part 210 and the third housing part 230 with respect to a first folding axis 241. For example, when a user applies an external force to fold the first housing part 210, the first housing part 210 may rotate with respect to the third housing part 230 through the first hinge assembly 251. For example, the first housing part 210 may be folded inward with respect to the third housing part 230. In terms of the first housing part 210 being folded inward with respect to the third housing part 230, the first housing part 210, the first hinge assembly 251, and the third housing part 230 may be referred to as an in-fold structure.

According to an embodiment, the second hinge assembly 252 may be disposed between the second housing part 220 and the third housing part 230. For example, the second hinge assembly 252 may rotatably connect the second housing part 220 and the third housing part 230 with respect to a second folding axis 242. For example, when the user applies an external force to fold the second housing part 220, the second housing part 220 may rotate with respect to the third housing part 230 through the second hinge assembly 252. For example, the second housing part 220 may be folded inward with respect to the third housing part 230. In terms of the second housing part 220 being folded inward with respect to the third housing part 230, the third housing part 230, the second hinge assembly 252, and the second housing part 220 may be referred to as an in-fold structure. For example, the foldable electronic device 101 may include coupling members (e.g., magnets) 280 to maintain a folded state of the foldable electronic device 101. For example, when the foldable housing 200 is folded, the foldable electronic device 101 may be configured to maintain the folded state based on an attraction force between the magnets.

According to an embodiment, the first hinge assembly 251 may include a first rotating plate 251-1 coupled to the first housing part 210 and a second rotating plate 251-2 coupled to the third housing part 230. The first rotating plate 251-1 and the second rotating plate 251-2 may rotate with respect to each other through a first set 320 of gears. The second hinge assembly 252 may include a third rotating plate 252-1 coupled to the second housing part 220 and a fourth rotating plate 252-2 coupled to the third housing part 230. The third rotating plate 252-1 and the fourth rotating plate 252-2 may rotate with respect to each other through a second set of gears 330.

According to an embodiment, the second hinge assembly 252 may be different from the first hinge assembly 251. For example, according to how the foldable housing 200 is folded, a structural difference between the first hinge assembly 251 and the second hinge assembly 252 may be required. As described above, since the first housing part 210 and the second housing part 220 are respectively folded inward with respect to the third housing part 230, a structure of the second hinge assembly 252 may be different from a structure of the first hinge assembly 251.

Referring to FIG. 3B, the foldable housing 200 may be configured to provide a first state (e.g., a state 300a), a second state (e.g., a state 300b), and a third state (e.g., a state 300c).

For example, the state 300a of FIG. 3B may be referred to as the first state in which the first housing part 210, the second housing part 220, and the third housing part 230 are disposed on substantially the same plane. For example, the state 300b of FIG. 3B may be referred to as the second state in which the first housing part 210 is folded inward with respect to the third housing part 230 through the first hinge assembly 251. The second state of FIG. 3B may be referred to as a state in which only the first housing part is folded from among the first housing part 210 and the second housing part 220. For example, in the second state, the state 300c of FIG. 3B may be referred to as the third state in which the second housing part 220 is positioned above the first housing part 210 as the second housing part 220 is folded inward with respect to the third housing part 230 through the second hinge assembly 252. The first state may be referred to as an open state, a flat state, an outspread state, and/or an unfold state. The second state may be referred to as an in-fold state, a sub-unfold state (or a sub-fold state), and/or a semi-unfold state (or a semi-fold state). The third state may be referred to as a closed state, a fully folded state, a folded state and/or a drawn state.

According to an embodiment, in the third state (e.g., the folded state), a front side 210a of the first housing part 210 may face a front side 230a of the third housing part 230. In the third state, a rear side 210b of the first housing part 210 may face a front side 220a of the second housing part 220. The folded state of the foldable electronic device 101 may be referred to as a state in which the front side 210a of the first housing part 210 faces the front side 230a of the third housing part 230, and the rear side 210b of the first housing part 210 faces the front side 220a of the second housing part 220.

The foldable electronic device 101 may be used in the first state to provide a flexible display (e.g., the flexible display 271 of FIG. 2) of a large screen. The foldable electronic device 101 may be switched from the first state to the third state so that it may be easily carried by the user. For example, the foldable electronic device 101 may be switched from the first state, via the second state, to the third state. For example, in the first state, the first housing part 210 may first be folded inward with respect to the third housing part 230 (the second state), and then the second housing part 220 may be folded inward with respect to the third housing part 230 (the third state). For example, in the third state, when the foldable electronic device 101 is viewed from a lateral side, the first housing part 210 may be positioned between the third housing part 230 and the second housing part 220.

For example, the second hinge assembly 252 may be different from the first hinge assembly 251 to provide the third state (e.g., the folded state). In a case that a size of the second hinge assembly 252 is substantially the same as or similar to a size of the first hinge assembly 251, when the second housing part 220 and the third housing part 230 are folded, a space in which the first housing part 210 may be positioned may not be formed between the second housing part 220 and the third housing part 230. For example, in the third state, in order to provide the space in which the first housing part 210 may be positioned between the third housing part 230 and the second housing part 220, the size of the second hinge assembly 252 may be larger than the size of the first hinge assembly 251. For example, a width of the second hinge assembly 252 may be wider than a width of the first hinge assembly 251. In terms of having a relatively narrow width, the first hinge assembly 251 may be referred to as a narrow hinge, and in terms of having a relatively wider width, the second hinge assembly 252 may be referred to as a wide hinge.

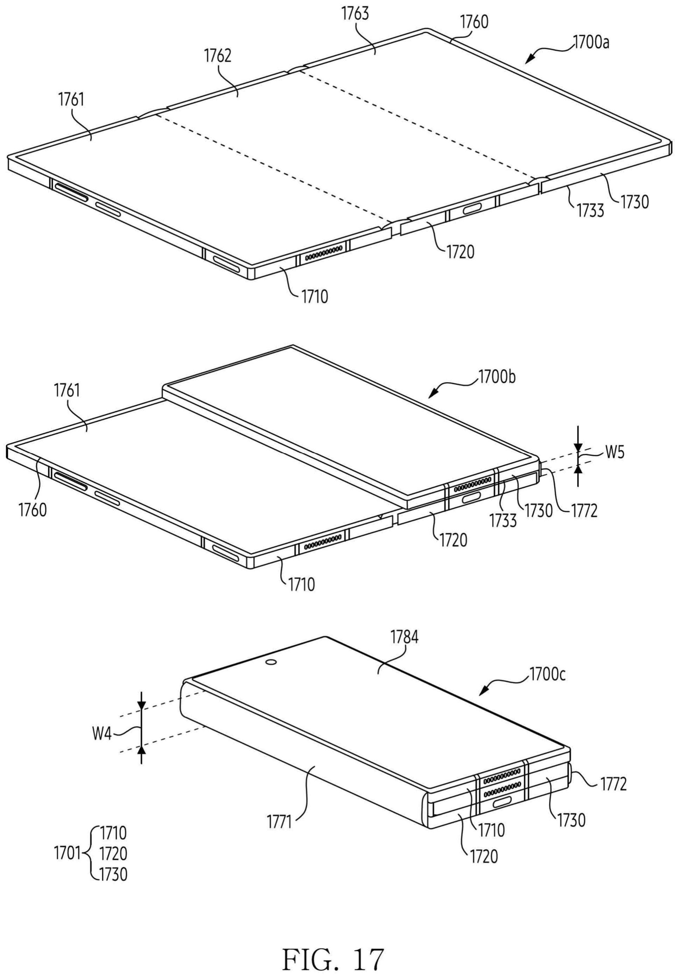

The foldable electronic device 101 according to an embodiment may include a first hinge cover 311 and a second hinge cover 312. For example, the first hinge cover 311 may at least partially accommodate the first hinge assembly 251. For example, the second hinge cover 312 may at least partially accommodate the second hinge assembly 252. For example, since the size of the second hinge assembly 252 is larger than the size of the first hinge assembly 251, it may be larger than a size of the second hinge cover 312. For example, a width (e.g., a width W4 of FIG. 17) of the second hinge cover 312 may be wider than a width (e.g., a width W5 of FIG. 17) of the first hinge cover 311. Due to a difference between the size of the first hinge cover 311 and the size of the second hinge cover 312, in the first state, whether the first hinge cover 311 and the second hinge cover 312 are exposed to the outside of the foldable electronic device 101 may be different. For example, referring to FIG. 3B, in the first state, the first hinge cover 311 may be substantially covered by the first housing part 210 and the third housing part 230. For example, the first hinge cover 311 having a relatively small size may not be substantially visually recognized in the first state. For example, at least a portion of the second hinge cover 312 may be exposed between the second housing part 220 and the third housing part 230 in the first state. For example, the second hinge cover 312 having a relatively large size may be visually recognized in the first state.

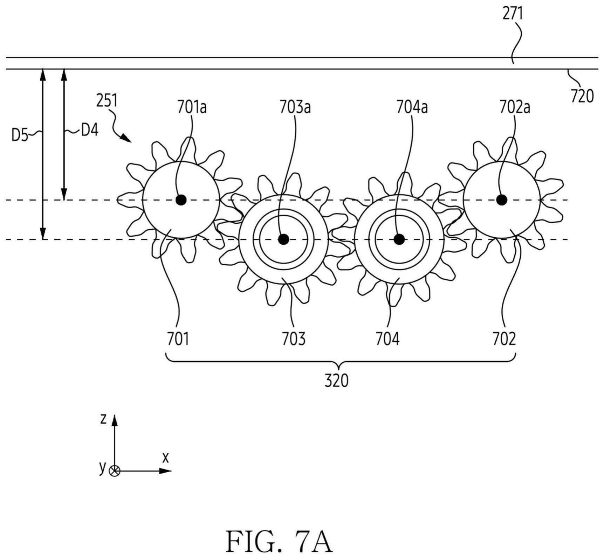

According to an embodiment, the first hinge assembly 251 and the second hinge assembly 252 may respectively include a plurality of gears for deformation of the foldable housing 200. For example, the first hinge assembly 251 may include the first set of gears 320. When an external force causing rotation of the first housing part 210 is applied to the first housing part 210, gears included in the first set of gears 320 may rotate by the external force. The first set of gears 320 may rotate the third housing part 230 in conjunction with the rotation of the first housing part 210. A structure of the first set of gears 320 will be described later with reference to FIG. 7A.

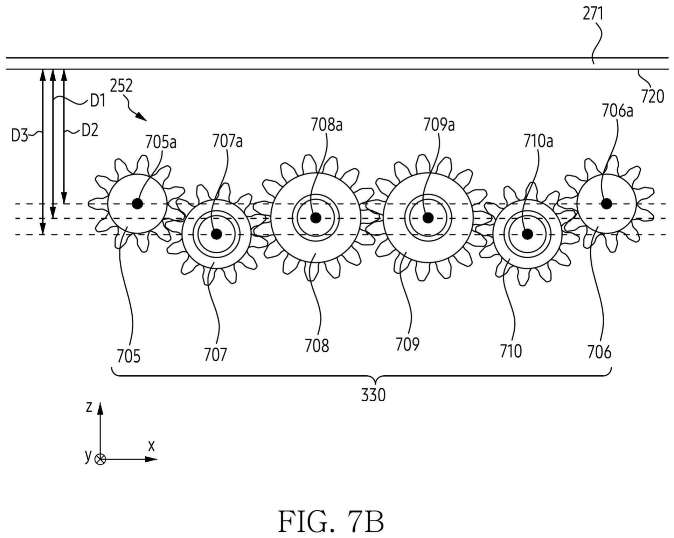

For example, the second hinge assembly 252 may include the second set of gears 330. When an external force causing rotation of the second housing part 220 is applied to the second housing part 220, gears included in the second set of gears 330 may rotate by the external force. The second set of gears 330 may rotate the third housing part 230 in conjunction with the rotation of the second housing part 220. The structure of the second set of gears 330 will be described later with reference to FIG. 7B.

According to an embodiment, the second hinge assembly 252 may include more gears than the first hinge assembly 251 since the second hinge assembly 252 has a larger size than the size of the first hinge assembly 251 and should form a space for the first housing part 210 in the third state (e.g., the folded state). For example, the number of the gears included in the second set of gears 330 may be greater than the number of the gears included in the first set of gears 320. Since the second set of gears 330 includes more gears than the first set of gears 320, it may have an arrangement structure different from an arrangement structure of the first set of gears 320 for stable driving.

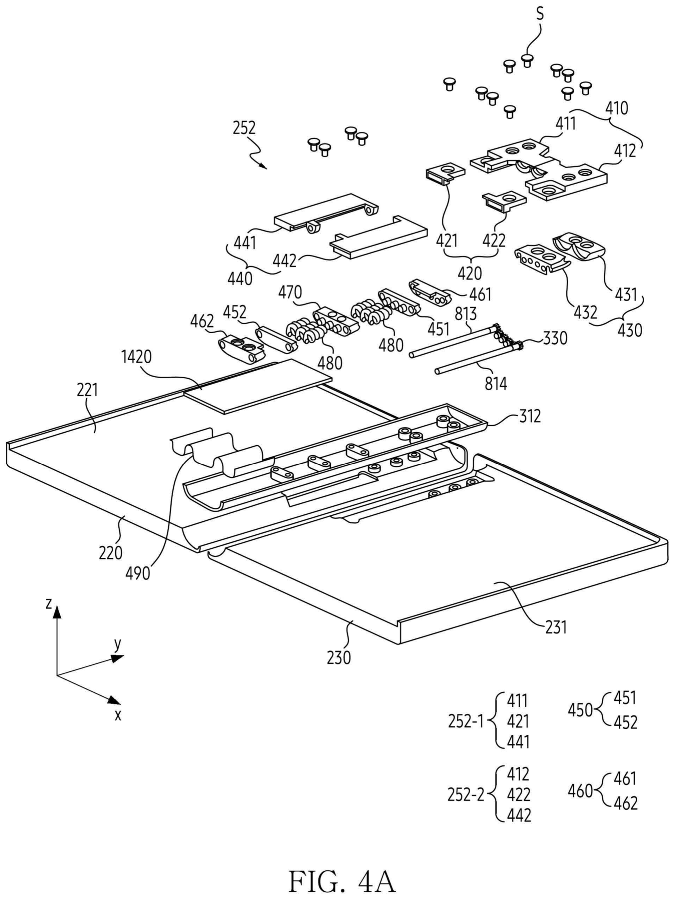

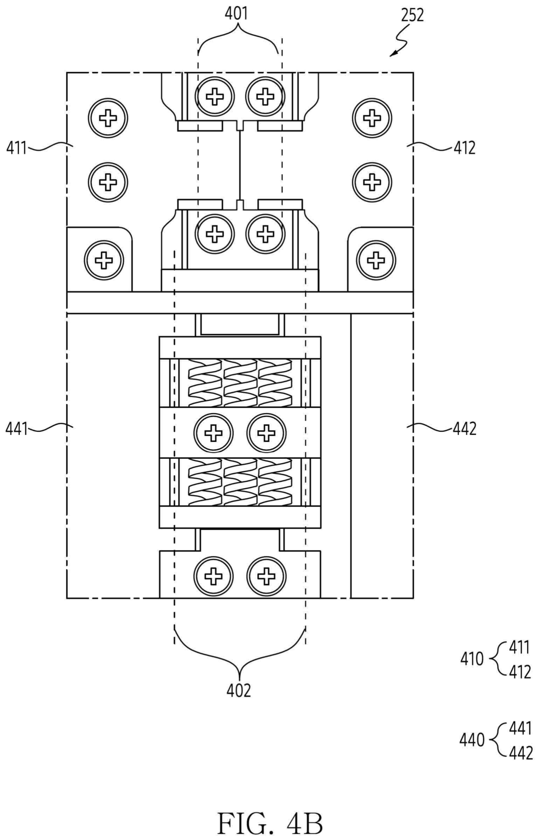

FIG. 4A is an exploded view of a second hinge assembly. FIG. 4B illustrates a portion of a second hinge assembly.

According to an embodiment, a second hinge assembly 252 may be disposed between a third support member 231 of a third housing part 230 and a second support member 221 of a second housing part 220. For example, a second hinge cover (e.g., the second hinge cover 312 of FIG. 3B) may at least partially cover components of the second hinge assembly 252. For example, a portion (e.g., a first guide member 421, or a second guide member 422) among the components of the second hinge assembly 252 may be fixed to the second hinge cover 312 by being coupled to the second hinge cover 312. The second hinge cover 312 may reduce an inflow of a foreign substance to the inside of the second hinge assembly 252 and protect the components, by covering the components of the second hinge assembly 252.

According to an embodiment, the second hinge assembly 252 may include rotating plates that are rotatable by an external force from a user. For example, the second hinge assembly 252 may include a third rotating plate 252-1 coupled to the second housing part 220 and a fourth rotating plate 252-2 coupled to the third housing part 230. Each of the third rotating plate 252-1 and the fourth rotating plate 252-2 may include a first rotating member 410, a guide member 420, a connecting member 430, a second rotating member 440, and a second set of gears 330. For example, a first arm 411, the first guide member 421, and a first arm support 441 may be included in the third rotating plate 252-1. For example, a second arm 412, the second guide member 422, and a second arm support 442 may be included in the fourth rotating plate 252-2.

According to an embodiment, the first rotating member 410 may include the first arm 411 and the second arm 412. For example, the first arm 411 and the second arm 412 may cause rotation of the second housing part 220 and the third housing part 230 by being respectively coupled with the second support member 221 and the third support member 231. The first arm 411 may be coupled to the second support member 221. The second arm 442 may be coupled to the third support member 231.

According to an embodiment, the guide member 420 may guide rotational motion of the first rotating member 410. For example, the guide member 420 may include the first guide member 421 and the second guide member 422. For example, the first guide member 421 may be coupled to the first arm 411 and the first arm support 441. For example, the second guide member 422 may be coupled to the second arm 412 and the second arm support 442.

According to an embodiment, the connecting member 430 may be linked to the first rotating member 410 and the second rotating member 440, and may limit a rotation range. The first rotating member 410 and the second rotating member 440 may move together through the connecting member 430. For example, the connecting member 430 may be disposed between the first arm 411 and the second arm 412. For example, the connecting member 430 may include a first connecting member 431 and a second connecting member 432. The first connecting member 431 and the second connecting member 432 may face each other.

According to an embodiment, the second rotating member 440 may be configured to transmit a force to the first rotating member 410 through the connecting member 430 by being linked to an operation of the second set of gears 330. For example, the second rotating member 440 may include the first arm support 441 and the second arm support 442.

According to an embodiment, the second set of gears 330 may link a rotational operation of the second housing part 220 and a rotational operation of the third housing part 230. The second set of gears 330 may convert an external force applied to a foldable housing 200 into rotational motion of the second housing part 220 and the third housing part 230. The third housing part 230 may rotate in conjunction with the second housing part 220 by the second set 330 gears.

For example, the second hinge assembly 252 may further include a friction body 450, a cover 460, a holder 470, at least two second elastic members 480 and a screw S.

For example, the friction body 450 may cause a restoring force of the at least two second elastic members 480 by pressing the at least two second elastic members 480. For example, the friction body 450 may enable a free-stop or flex mode by providing a force (e.g., torque) resisting rotation of the second rotating member 440, based on the restoring force. For example, the friction body 450 may include a first friction body 451 and a second friction body 452.

For example, the cover 460 may be in contact with the friction body 450. For example, the cover 460 may include a first cover 461 and a second cover 462.

For example, the holder 470 may fix the at least two second elastic members 480, and cause the restoring force of the at least two second elastic members 480 in conjunction with the friction body 450.

For example, the screw S may be used to fix partial components (e.g., the first rotating member 410, the connecting member 430, and/or the holder 470) of the second hinge assembly 252. For example, the screw S may be used to fix a second support plate 1420 to the second hinge cover 312.

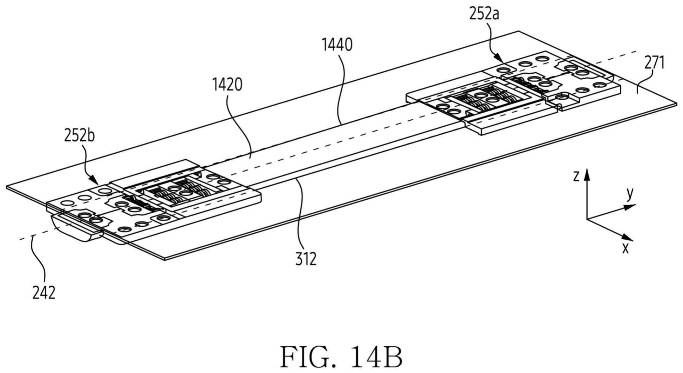

For example, a foldable electronic device 101 may include the second support plate 1420. For example, by supporting a portion (e.g., a second bending portion 1440 of FIG. 14B) of a flexible display (e.g., the flexible display 271 of FIG. 2), the second support plate 1420 may reduce a curvature that the flexible display 271 is folded. For example, the second support plate 1420 may be disposed above (e.g., +z direction) a flexible printed circuit board 490.

Referring to FIG. 4B, the second hinge assembly 252 may be configured to perform rotational motion with respect to two rotational axes. For example, the second hinge assembly 252 may have 1 degree of freedom through the components illustrated in FIG. 4A.

For example, the two rotational axes may include a first rotational axis 401 and a second rotational axis 402. For example, the first rotating member 410 may be rotatable with respect to the first rotational axis 401. For example, the first arm 411 and the second arm 412 may rotate about 90 degrees with respect to the first rotational axis 401. Since the first rotating member 410 may perform rotational motion with respect to the first rotational axis 401, it may have 1 degree of freedom.

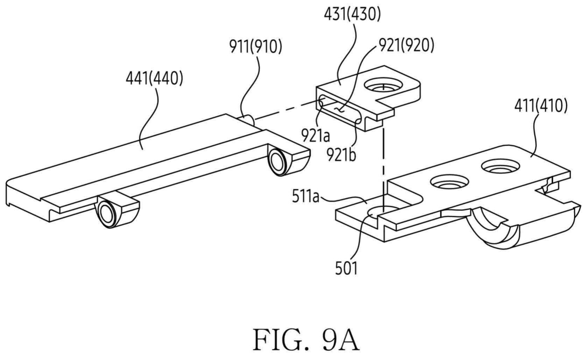

For example, the second rotating member 440 may be rotatable with respect to the second rotational axis 402. For example, the first arm support 441 and the second arm support 442 may rotate about 90 degrees with respect to the second rotational axis 402. For example, the second rotating member 440 may include a protrusion (e.g., a protrusion 910 of FIG. 9A) inserted into a slot (e.g., a slot 920 of FIG. 9A) of the connecting member 430. For example, the second rotating member 440 may perform linear motion along the slot 920. Since the second rotating member 440 may perform rotational motion with respect to the second rotational axis 402 and may perform the linear motion along the slot 920, it may have 2 degrees of freedom. According to Equation 1, which is the Gruebler-Kutzbach's equation below, the second hinge assembly may move with 1 degree of freedom.

【Equation 1】

$$DOF = 3(N-1) - 2P_1 - P_2$$

(DOF: degree of freedom, N: number of links, $P_1$: number of 1-degree of freedom joints, P2: number of 2 degrees of freedom joints)

When calculating a degree of freedom for the exemplary second hinge assembly 252 (see : 3(3-1)-2×2-1=1), the 1 degree of freedom may be calculated.

Hereinafter, a structure and a function of the components of the second hinge assembly 252 will be described with reference to the drawings.

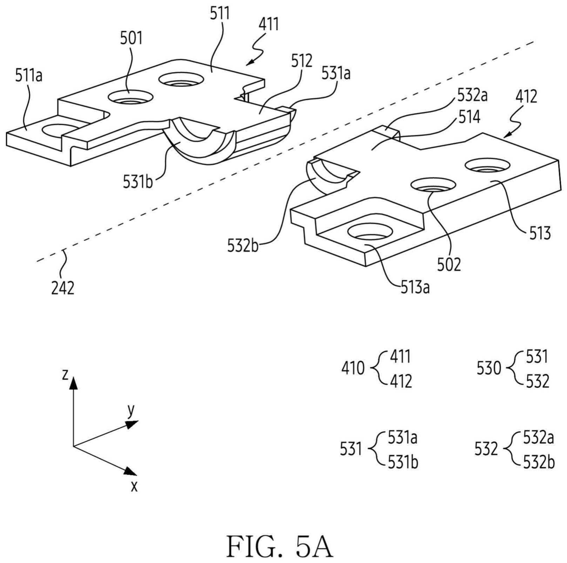

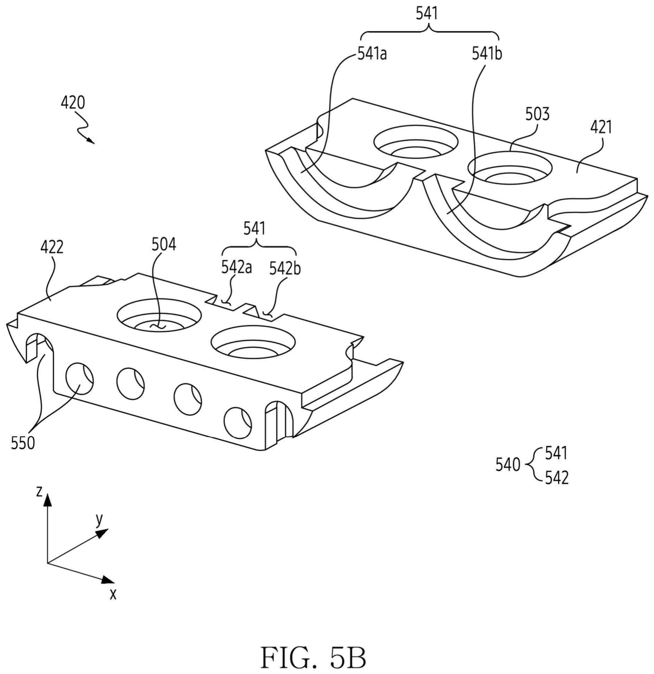

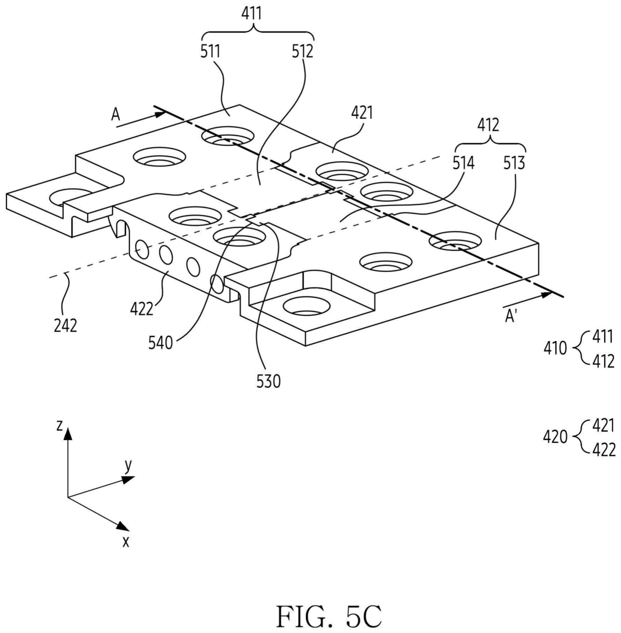

FIG. 5A illustrates a first rotating member of a second hinge assembly. FIG. 5B illustrates a guide member of a second hinge assembly. FIG. 5C illustrates a state in which the first rotating member illustrated in FIG. 5A and the guide member illustrated in FIG. 5B are coupled to each other.

Referring to FIG. 5A, a first rotating member 410 may include a first arm 411 and a second arm 412. For example, a structure of the first arm 411 and a structure of the second arm 412 may be symmetrical with respect to a second folding axis (e.g., the second folding axis 242 of FIG. 3A). For example, the first arm 411 and the second arm 412 may be disposed symmetrically to each other with the second folding axis 242 interposed therebetween.

For example, the first rotating member 410 may be fixed to a second housing part (e.g., the second housing part 220 of FIG. 3A) and a third housing part (e.g., the third housing part 230 of FIG. 3A), and may rotate in conjunction with a second set of gears (e.g., the second set of gears 330 of FIG. 3A). For example, the first rotating member 410 may be configured to transmit an operation of a second hinge assembly (e.g., the second hinge assembly 252 of FIG. 3A) to the second housing part 220 and/or the third housing part 230.

For example, the first rotating member 410 may be coupled to a foldable housing (e.g., the foldable housing 200 of FIG. 3A). For example, the first arm 411 may be coupled to the second housing part 220. For example, the second arm 412 may be coupled to the third housing part 230. For example, the first arm 411 and the second arm 412 may include at least one through hole 501 or 502 into which a screw (e.g., the screw S of FIG. 4A) is inserted. For example, the first arm 411 may be coupled to the second housing part 220, as the screw S is inserted into a second support member (e.g., the second support member 221 of FIG. 3A) by passing through at least one first through hole 501 of the first arm 411. For example, the second arm 412 may be coupled to the third housing part 230, as the screw S is inserted into a third support member (e.g., the third support member 231 of FIG. 3A) by passing through at least one second through hole 502 of the second arm 412.

For example, the first arm 411 may include a first portion 511 and a second portion 512. For example, the first portion 511 may be a portion of the first arm 411 coupled to the second support member 221. For example, the at least one first through hole 501 may be formed in the first portion 511. For example, the second portion 512 may protrude from the first portion 511 toward the second folding axis 242. For example, a size of the second portion 512 may be smaller than a size of the first portion 511. For example, the first portion 511 may include a first recess 511a where a portion of a connecting member (e.g., the connecting member 430 of FIG. 4A) is placed. For example, as the connecting member 430 is coupled on the first recess 511a, an upper surface (a surface facing a +z direction) of the connecting member 430 and an upper surface of the first arm 411 may form substantially the same plane.

For example, the second arm 412 may include a third portion 513 and a fourth portion 514. For example, the third portion 513 may be a portion of the second arm 412 coupled to the third support member 231. For example, the at least one second through hole 502 may be formed in the third portion 513. For example, the fourth portion 514 may protrude from the third portion 513 toward the second folding axis 242. For example, a size of the fourth portion 514 may be smaller than a size of the third portion 513. For example, the third portion 513 may include a second recess 513a where a portion of the connecting member 430 is placed. For example, as the connecting member 430 is coupled on the second recess 513a, the upper surface of the connecting member 430 and an upper surface of the second arm 412 may form substantially the same plane.

For example, the first rotating member 410 may include a rotary rail 530. For example, the rotary rail 530 may be inserted into a guide groove (e.g., the guide groove 540 of FIG. 5B) of the guide member (e.g., the guide member 420 of FIG. 5B), and may move along the guide groove 540 based on an external force applied to the foldable housing 200. For example, the rotary rail 530 may have a protrusion shape curved to have a certain curvature, but is not limited thereto. As the rotary rail 530 moves along the guide groove 540, rotational motion of the first rotating member 410 is possible.

For example, the first arm 411 may include a first rotary rail 531. For example, the first rotary rail 531 may be formed on both surfaces of the second portion 512. For example, the first rotary rail 531 may include a first rail 531a and a second rail 531b. For example, the first rail 531a may be formed on a surface (e.g., a surface facing a +y direction) of the second portion 512. For example, the second rail 531b may be formed on another surface (e.g., a surface facing a -y direction) of the second portion 512. For example, the second portion 512 may partially have a curvature to correspond to a shape of the first rotary rail 531.

For example, the second arm 412 may include a second rotary rail 532. For example, the second rotary rail 532 may be formed on both surfaces of the fourth portion 514. For example, the second rotary rail 532 may include a third rail 532a and a fourth rail 532b. For example, the third rail 532a may be formed on a surface (e.g., a surface facing the +y direction) of the fourth portion 514. For example, the fourth rail may be formed on another surface (e.g., a surface facing the -y direction) of the fourth portion 514. For example, the fourth portion 514 may partially have a curvature to correspond to a shape of the second rotary rail 532.

The first rotating member 410 may be coupled to the guide member 420. The rotary rail 530 may be inserted into the guide groove 540 of the guide member 420.

Referring to FIG. 5B, the guide member 420 may include a first guide member 421 and a second guide member 422. For example, the guide member 420 may guide rotation of a first rotating member (e.g., the first rotating member 410 of FIG. 5A). For example, the guide member 420 may include the guide groove 540, into which a rotary rail (e.g., the rotary rail 530 of FIG. 5A) is inserted, for guiding rotation of the rotary rail 530. For example, a shape of the guide groove 540 may correspond to a shape of the rotary rail 530.

For example, the guide member 420 may be coupled to a second hinge cover (e.g., the second hinge cover 312 of FIG. 4A). For example, the first guide member 421 and the second guide member 422 may include at least one through hole 503 or 504 into which the screw S is inserted. For example, as the screw S is inserted into the second hinge cover 312 by passing through at least one third through hole 503 of the first guide member 421, the first guide member 421 may be coupled to the second hinge cover 312. For example, as the screw S is inserted into the second hinge cover 312 by passing through at least one fourth through hole 504 of the second guide member 422, the second guide member 422 may be coupled to the second hinge cover 312.

For example, the first guide member 421 may include a first guide groove 541. For example, the first guide groove 541 may include a first groove 541a capable of accommodating a first rail (e.g., the first rail 531a of FIG. 5A) of the first arm 411 and a second groove 541b capable of accommodating a third rail (e.g., the third rail 532a of FIG. 5A) of the second arm 412. For example, the first rail 531a may move along the first groove 541a in a state of being inserted into the first groove 541a. For example, the third rail 532a may move along the second groove 541b in a state of being inserted into the second groove 541b.

For example, the second guide member 422 may include a second guide groove 542. For example, the second guide groove 542 may include a third groove 542a capable of accommodating a second rail (e.g., the second rail 531b of FIG. 5A) of the first arm 411 and a fourth groove 542b capable of accommodating a fourth rail (e.g., the fourth rail 532b of FIG. 5A) of the second arm 412. For example, the second rail 531b may move along the third groove 542a in a state of being inserted into the third groove 542a. For example, the fourth rail 532b may move along the fourth groove 542b in a state of being inserted into the fourth groove 542b.

For example, the second guide member 422 may include openings 550 in which shafts connected to a second set of gears (e.g., the second set of gears 330 of FIG. 3A) may be coupled. For example, in a case that the second set of gears 330 includes six gears, the second guide member 422 may include six openings 550. The shafts of the second set of gears 330 may rotate within the openings 550 of the second guide member 422.

Referring to FIG. 5C, since the size of the second portion 512 is smaller than the size of the first portion 511, and the size of the fourth portion 514 is smaller than the size of the third portion 513, a space in which the guide member 420 may be coupled may be formed between the first arm 411 and the second arm 412. For example, the first guide member 421 may be coupled to a side (e.g., +y direction) of the first rotating member 410. For example, the first guide member 421 may be coupled to the side of the second portion 512 and the fourth portion 514. For example, the second guide member 422 may be coupled to another side (e.g., -y direction) of the second rotating member 440. For example, the second guide member 422 may be coupled to the other side of the second portion 512 and the fourth portion 514. For example, the first guide member 421 and the second guide member 422 may be spaced apart from each other along a direction (e.g., the y-axis direction) in which the second folding axis 242 extends, with the second portion 512 and the fourth portion 514 interposed therebetween. For example, as the rotary rail 530 moves along the guide groove 540, the first rotating member 410 may rotate. For example, in a first state or a second state in which a second housing part (e.g., the second housing part 220 of FIG. 3A) and a third housing part (e.g., the third housing part 230 of FIG. 3A) are unfolded, the first arm 411 may rotate clockwise with respect to the second folding axis 242, and the second arm 412 may rotate counterclockwise with respect to the second folding axis 242. For example, in a third state in which the second housing part 220 and the third housing part 230 are folded, the first arm 411 may rotate counterclockwise with respect to the second folding axis 242, and the second arm 412 may rotate clockwise with respect to the second folding axis 242.

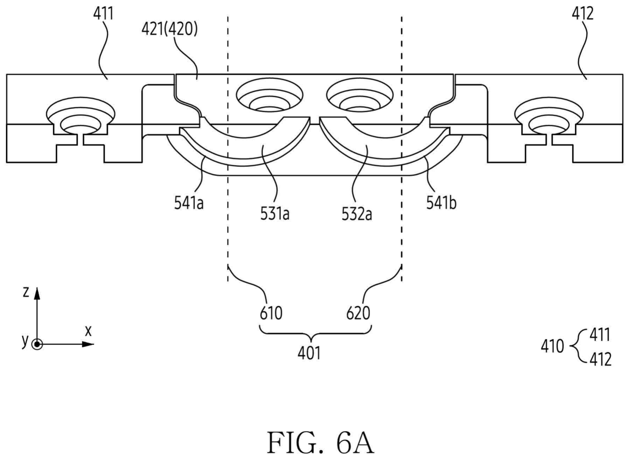

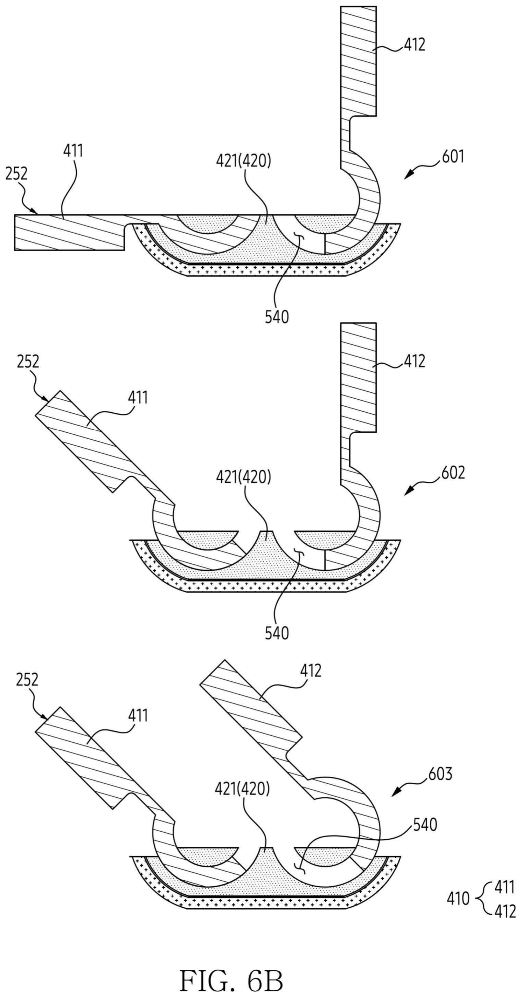

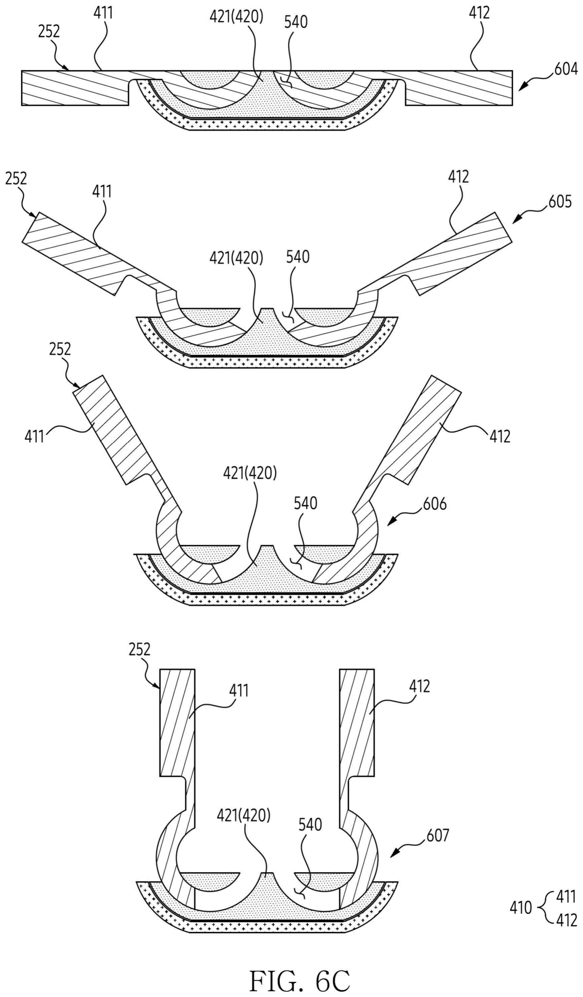

FIG. 6A is a cross-sectional view of a second hinge assembly cut along line A-A' of FIG. 5C. FIG. 6B illustrates an operation of a first rotating member in a case that a first arm and a second arm are not linked to each other. FIG. 6C illustrates an operation of a first rotating member in a case that a first arm and a second arm are linked to each other.

Referring to FIG. 6A, a guide member 420 may guide rotation of a first rotating member 410. For example, a first rail 531a of a first arm 411 may be inserted into a first groove 541a of a first guide member 421, and a third rail 532a of a second arm 412 may be inserted into a second groove 541b of the first guide member 421. By an external force applied to a foldable housing 200, the first rail 531a may slide along the first groove 541a, and a second rail 531b may slide along the second groove 541b.

For example, the first rotating member 410 may rotate with respect to a first rotational axis 401. For example, the first rotational axis 401 may include a first axis 610 that is a rotational axis of the first arm 411, and a second axis 620 that is a rotational axis of the second arm 412. For example, as the first arm 411 rotates clockwise with respect to the first axis 610, a second housing part (e.g., the second housing part 220 of FIG. 3A) may rotate clockwise. For example, as the second arm 412 rotates counterclockwise with respect to the second axis 620, a third housing part (e.g., the third housing part 230 of FIG. 3A) may rotate counterclockwise. By the counterclockwise rotation of the third housing part 230 and the clockwise rotation of the second housing part 220, the third housing part 230 and the second housing part 220 may be folded. For example, as the first arm 411 rotates counterclockwise with respect to the first axis 610, the second housing part 220 may rotate counterclockwise. For example, as the second arm 412 rotates clockwise with respect to the second axis 620, the third housing part 230 may rotate clockwise. By the clockwise rotation of the third housing part 230 and the counterclockwise rotation of the second housing part 220, the second housing part 220 and the third housing part 230 may be unfolded.

Referring to FIG. 6B, when the first rotating member 410 rotates by using only the guide member 420, the rotation of the second housing part 220 and the rotation of the third housing part 230 may not be linked to each other. For example, in a case that a structure (e.g., a second set of gears 330) that links the rotation of the first arm 411 and the rotation of the second arm 412, and a structure that restricts the rotation of the first arm 411 and the rotation of the second arm 412 (e.g., a slot 920 of a connecting member 430) are not present, each of the first arm 411 and the second arm 412 may rotate independently, be separated from the guide member 420, or damage a flexible display (e.g., the flexible display 271 of FIG. 2) and/or a second hinge assembly 252.

For example, in a case that the first arm 411 and the second arm 412 are not linked, each of the first arm 411 and the second arm 412 may rotate independently. Referring to 601 of FIG. 6B, even if the second arm 412 rotates, the first arm 411 may not rotate. Referring to 602 of FIG. 6B, a rotational angle of the first arm 411 may be different from a rotational angle of the second arm 412. Referring to FIG. 6B, in a case that the rotational angle of the second arm 412 (or the first arm 411) is too large (e.g., an obtuse angle exceeding 90 degrees), the second arm 412 (or the first arm 411) may be separated from the guide groove 540.

Referring to FIG. 6C, in a case that the first arm 411 and the second arm 412 are linked, the rotational angle of the first arm 411 may correspond to the rotational angle of the second arm 412. For example, 604 of FIG. 6C illustrates the first arm 411 and the second arm 412 in a first state (or a second state). For example, 607 of FIG. 6C illustrates the first arm 411 and the second arm 412 in a third state. For example, when a foldable electronic device 101 switches from the first state (or the second state) to the third state, the first rotating member 410 may go through 605 of FIG. 6C and 606 of FIG. 6C. For example, referring to 604 of FIG. 6C, the first arm 411 and the second arm 412 may be disposed on substantially the same plane in the first state. For example, the first arm 411 and the second arm 412 may rotate along the guide groove 540 of the guide member 420 by an external force applied to the foldable housing 200. Referring to 605 of FIG. 6C and 606 of FIG. 6C, the first arm 411 and the second arm 412 may rotate by being linked to each other. For example, as the rotation of the first arm 411 causes the rotation of the second arm 412, the rotational angle of the second arm 412 may correspond to the rotational angle of the first arm 411. As illustrated in FIG. 6C, as the first arm 411 and the second arm 412 rotate in a state of being linked to each other, the second housing part (e.g., the second housing part 220 of FIG. 3A) and the third housing part (e.g., the third housing part 230 of FIG. 3A) may rotate in a state of being linked to each other. An operation of folding or unfolding the second housing part 220 and the third housing part 230 may be stably performed.

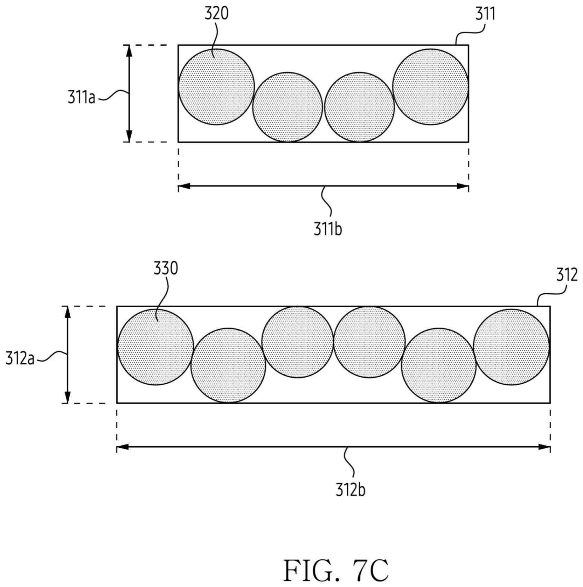

Hereinafter, a structure for linking the rotation of the second housing part 220 with the rotation of the third housing part 230 will be described. Referring to FIGS. 7A, 7B, and 7C, an engagement structure of gears will be described.

FIG. 7A illustrates a first set of gears of a first hinge assembly. FIG. 7B illustrates a second set of gears of a second hinge assembly. FIG. 7C schematically illustrates a first hinge assembly and a second hinge assembly.

Referring to FIG. 7A, a first hinge assembly 251 may include a first set 320 of gears. For example, the first set of gears 320 may include a first gear 701, a second gear 702, a third gear 703, and a fourth gear 704. For example, the first gear 701 may be disposed at an end portion among gears included in the first set of gears 320, and the second gear 702 may be disposed at another end portion among the gears included in the first set of gears 320 opposite to the end portion. For example, the third gear 703 and the fourth gear 704 may be disposed between the first gear 701 and the second gear 702.

For example, a rotational direction of the first gear 701 may be different from a rotational direction of the second gear 702. For example, when the first gear 701 rotates clockwise (or counterclockwise), the second gear 702 may rotate counterclockwise (or clockwise).

For example, the third gear 703 may be disposed between the first gear 701 and the fourth gear 704. For example, the fourth gear 704 may be disposed between the third gear 703 and the second gear 702. For example, the third gear 703 may be engaged with the first gear 701 and the fourth gear 704. For example, the fourth gear 704 may be engaged with the third gear 703 and the second gear 702. For example, when the first gear 701 rotates clockwise, the third gear 703 engaged with the first gear 701 may rotate counterclockwise. As the third gear 703 rotates counterclockwise, the fourth gear 704 engaged with the third gear 703 may rotate clockwise. As the fourth gear 704 rotates clockwise, the second gear 702 engaged with the fourth gear 704 may rotate counterclockwise. The first gear 701 and the second gear 702, which are spaced apart from each other, may rotate in different directions, thereby enabling a folding or unfolding operation of a first housing part (e.g., the first housing part 210 of FIG. 3A) and a third housing part (e.g., the third housing part 230 of FIG. 3A).

Referring to FIG. 7B, a second hinge assembly 252 may include a second set of gears 330. For example, the second set of gears 330 may include a fifth gear 705, a sixth gear 706, a seventh gear 707, an eighth gear 708, a ninth gear 709, and a tenth gear 710. For example, the second set of gears 330 may include more gears than a first set of gears (e.g., the first set of gears 320 of FIG. 7A). For example, the first set of gears 320 may include four gears, and the second set of gears 330 may include six gears. For example, the first set of gears 320 may include two idler gears (e.g., the third gear 703 and the fourth gear 704), and the second set of gears 330 may include four idler gears (e.g., the seventh gear 707, the eighth gear 708, the ninth gear 709, and the tenth gear 710). For example, a second number n2 of idler gears (e.g., the seventh gear 707, the eighth gear 708, the ninth gear 709, and the tenth gear 710) included in the second set of gears 330 may be greater than a first number n1 of idler gears (e.g., the third gear 703 and the fourth gear 704) included in the first set of gears 320 by an even number or more (e.g., two, four, or eight).

For example, the fifth gear 705 may be disposed at an end portion among the gears included in the second set of gears 330, and the sixth gear 706 may be disposed at another end portion among the gears included in the second set of gears 330 opposite to the end portion.

For example, the seventh gear 707, the eighth gear 708, the ninth gear 709, and the tenth gear 710 may be disposed between the fifth gear 705 and the sixth gear 706. For example, the fifth gear 705 may be engaged with the seventh gear 707. The sixth gear 706 may be engaged with the tenth gear 710. The seventh gear 707 may be engaged with the fifth gear 705 and the eighth gear 708 between the fifth gear 705 and the sixth gear 706. The eighth gear 708 may be engaged with the seventh gear 707 and the ninth gear 709 between the fifth gear 705 and the sixth gear 706. The ninth gear 709 may be engaged with the eighth gear 708 and the tenth gear 710 between the fifth gear 705 and the sixth gear 706. The tenth gear 710 may be engaged with the sixth gear 706 and the ninth gear 709. For example, the second set of gears 330 may be disposed in an order of the fifth gear 705 - the seventh gear 707 - the eighth gear 708 - the ninth gear 709 - the tenth gear 710 - the sixth gear 706.

For example, a rotational direction of the fifth gear 705 may be different from a rotational direction of the sixth gear 706. For example, when the fifth gear 705 rotates clockwise (or counterclockwise), the sixth gear 706 may rotate counterclockwise (or clockwise).

For example, when the fifth gear 705 rotates clockwise, the seventh gear 707 engaged with the fifth gear 705 may rotate counterclockwise. As the seventh gear 707 rotates counterclockwise, the eighth gear 708 engaged with the seventh gear 707 may rotate clockwise. As the eighth gear 708 rotates clockwise, the ninth gear 709 engaged with the eighth gear 708 may rotate counterclockwise. As the ninth gear 709 rotates counterclockwise, the tenth gear 710 engaged with the ninth gear 709 may rotate clockwise. As the tenth gear 710 rotates clockwise, the sixth gear 706 engaged with the tenth gear 710 may rotate counterclockwise. The fifth gear 705 and the sixth gear 706 spaced apart from each other may rotate in different directions, thereby enabling a folding or unfolding operation of a second housing part (e.g., the second housing part 220 of FIG. 3A) and a third housing part (e.g., the third housing part 230 of FIG. 3A).

For example, the first hinge assembly 251 may include a rotational axis 701a of the first gear 701, a rotational axis 702a of the second gear 702, a rotational axis 703a of the third gear 703, and a rotational axis 704a of the fourth gear 704. The second hinge assembly 252 may include a rotational axis 705a of the fifth gear 705, a rotational axis 706a of the sixth gear 706, a rotational axis 707a of the seventh gear 707, a rotational axis 708a of the eighth gear 708, a rotational axis 709a of the ninth gear 709, and a rotational axis 710a of the tenth gear 710. For example, the second hinge assembly 252 may include more rotational axes than the first hinge assembly 251. For example, the number of rotational axes of the second hinge assembly 252 may be greater than the number of rotational axes of the first hinge assembly 251 by an even number or more (e.g., two, four, or eight).

FIG. 7C schematically illustrates a first hinge cover 311 in which the first set of gears 320 is accommodated, and a second hinge cover 312 in which the second set of gears 330 is accommodated. As described above, the size of the second hinge cover 312 may be larger than the size of the first hinge cover 311.

Referring back to FIG. 3A, in a first state, a first support member 211, a second support member 221, and a third support member 231 may form substantially the same plane. In a case that the first support member 211, the second support member 221, and the third support member 231 do not form substantially the same plane in the first state, a surface of a flexible display (e.g., the flexible display 271 of FIG. 2) disposed above (e.g., +z direction) the support members 211, 221, and 231 may not be flat. In a case that the surface of the flexible display 271 is not flat, visibility of a screen displayed in a display area of the flexible display 271 may deteriorate. For example, the first support member 211, the second support member 221, and the third support member 231 may have substantially the same thickness. As the first support member 211, the second support member 221, and the third support member 231 have substantially the same thickness, a thickness of the first hinge cover 311 and a thickness of the second hinge cover 312 may be substantially the same.

Referring back to FIG. 7C, a thickness 312a of the second hinge cover 312 may be substantially the same as a thickness 311a of the first hinge cover 311. For example, since the number (e.g., four) of the first set of gears 320 and the number (e.g., six) of the second set of gears 330 are different, a width 312b of the second hinge cover 312 may be different from a width 311b of the first hinge cover 311. For example, the width 312b of the second hinge cover 312 may be wider than the width 311b of the first hinge cover 311.

For example, the first set of gears 320 may include four gears in consideration of a thickness of a foldable housing 200 and the minimum dimensions of the gears. For example, the second set of gears 330 may include six gears in consideration of the thickness of the foldable housing 200, the thickness 312a and the width 312b of the second hinge cover 312, and the minimum dimensions of the gears.

For example, in a case that the second set of gears 330 includes less than six gears (e.g., four), less than six gears may not be suitable for the size of the second hinge cover 312. For example, in a case that diameters of the four gears are designed to fill the width 312b of the second hinge cover 312, the thickness 312a of the second hinge cover 312 may be insufficient. In a case that the thickness 312a of the second hinge cover 312 is increased to accommodate the four gears, an increase in the thickness of the foldable housing 200 may be caused. For example, if the four gears with a diameter corresponding to the thickness 312a of the second hinge cover 312 are disposed to be positioned on both ends of the second hinge cover 312, the four gears may not be engaged with each other.

For example, in a case that the second set of gears 330 includes more than six gears (e.g., eight), more than six gears may not be suitable for the minimum dimensions of the gears. For example, in a case that the eight gears are accommodated in the second hinge cover 312, diameters of the eight gears may become so small that it is difficult to manufacture, and may have low durability. For example, dimensions of shafts for the eight gears may be formed so small that the shafts are difficult to manufacture and may have reduced durability.

For example, the second set of gears 330 may include six gears. The six gears are suitable to be accommodated in the second hinge cover 312, do not cause an increase in the thickness of the foldable housing 200, and may have manufacturable diameters.

Referring back to FIG. 7B, the second set of gears 330 may be paired. For example, the fifth gear 705 may be paired with the sixth gear 706. For example, the seventh gear 707 may be paired with the tenth gear 710. For example, the eighth gear 708 may be paired with the ninth gear 709. For example, a size of the fifth gear 705 may be substantially the same as a size of the sixth gear 706. For example, a size of the seventh gear 707 may be substantially the same as a size of the tenth gear 710. For example, a size of the eighth gear 708 may be substantially the same as a size of the ninth gear 709.

Referring back to FIG. 4A, in a case that the thickness of the second hinge cover 312 is constant, damage to the second hinge cover 312 may be caused by rotation of the second housing part 220 and the third housing part 230. As illustrated in FIG. 4A, the second hinge cover 312 may have a shape in which thicknesses of both end portions become thinner. For example, both end portions of the second hinge cover 312 may be partially curved to correspond to a rotational curvature of the second housing part 220 and the third housing part 230. For example, by having the shape, the second hinge cover 312 may not interfere with the rotation of the second housing part 220 and the third housing part 230.

Referring back to FIG. 7B, as described above, since it has a shape in which the thicknesses of both end portions of the second hinge cover (e.g., the second hinge cover 312 of FIG. 4A) become thinner, the second set of gears 330 may be disposed to correspond to the shape of the second hinge cover. For example, the flexible display (e.g., the flexible display 271 of FIG. 2) may be disposed above (e.g., +z direction) the second hinge cover 312.

According to an embodiment, in a folded state of the foldable electronic device 101, a distance D1 between the rotational axis 708a of the eighth gear 708 (or the rotational axis 709a of the ninth gear 709) and a rear side 720 of the flexible display 271 may be longer than a distance D2 between the rotational axis 705a of the fifth gear 705 (or the rotational axis 706a of the sixth gear 706) and the rear side 720 of the flexible display 271, and may be shorter than a distance D3 between the rotational axis 707a of the seventh gear 707 (or the rotational axis 710a of the tenth gear 710) and the rear side 720 of the flexible display 270. When the second gear set 330 is viewed from a front, the gears included in the second set of gears 330 may be arranged in an approximately alphabet W shape.

For example, the second set of gears 330 may have various sizes to correspond to the shape of the second hinge cover 312. For example, the eighth gear 708 and the ninth gear 709 may have the largest size among the second set of gears 330. For example, the fifth gear 705 and the sixth gear 706 may have the smallest size among the second set of gears 330. For example, the size of the eighth gear 708 (or the size of the ninth gear 709) may be larger than the size of the fifth gear 705 (or the size of the sixth gear 706) and the size of the seventh gear 707 (or the size of the tenth gear 710). For example, the size of the fifth gear 705 (or the size of the sixth gear 706) may be smaller than the size of the seventh gear 707 (or the size of the tenth gear 710).

The second set of gears 330 may operate stably in the second hinge cover 312 by the arrangement structure and the size of the second set of gears 330 described above.

Referring back to FIG. 7A, the first set of gears 320 may not be disposed in a line to correspond to a shape of the first hinge cover 311.

According to an embodiment, in the folded state of the foldable electronic device 101, a distance D4 between the rotational axis 701a of the first gear 701 (or the rotational axis 702a of the second gear 702) and the rear side 720 of the flexible display 271 may be shorter than a distance D5 between the rotational axis 703a of the third gear 703 (or the rotational axis 704a of the fourth gear 704) and the rear side 720 of the flexible display 271.

For example, a size of the first gear 701 may be substantially the same as a size of the second gear 702. For example, a size of the third gear 703 may be substantially the same as a size of the fourth gear 704. For example, the size of the first gear 701 (or the size of the second gear 702) may be different from the size of the third gear 703 (or the size of the fourth gear 704).

Hereinafter, a linking structure of a first rotating member 410 and a second rotating member 440 will be described.

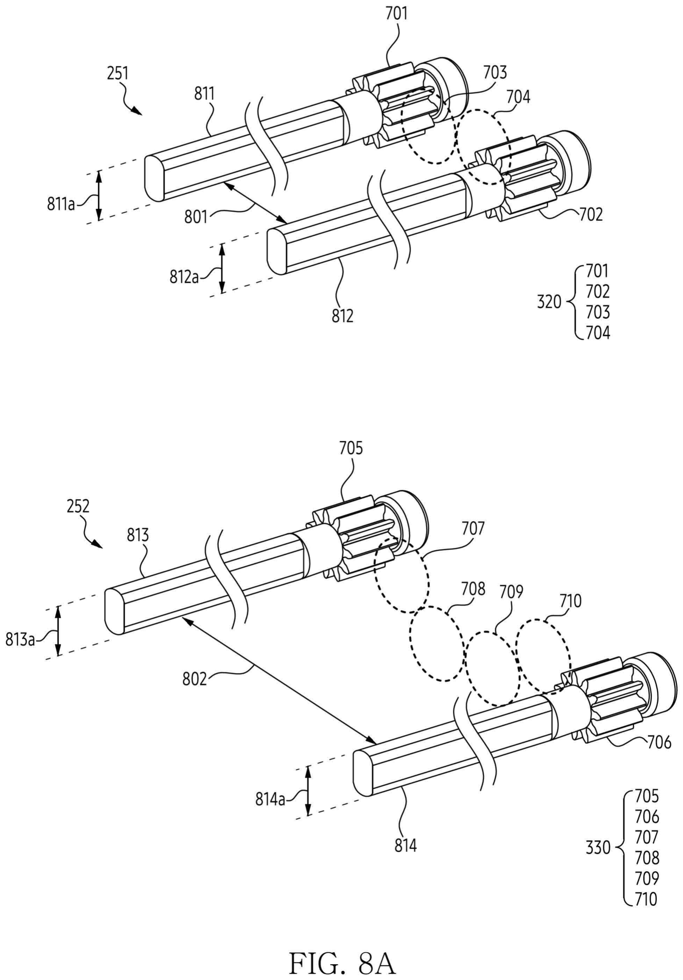

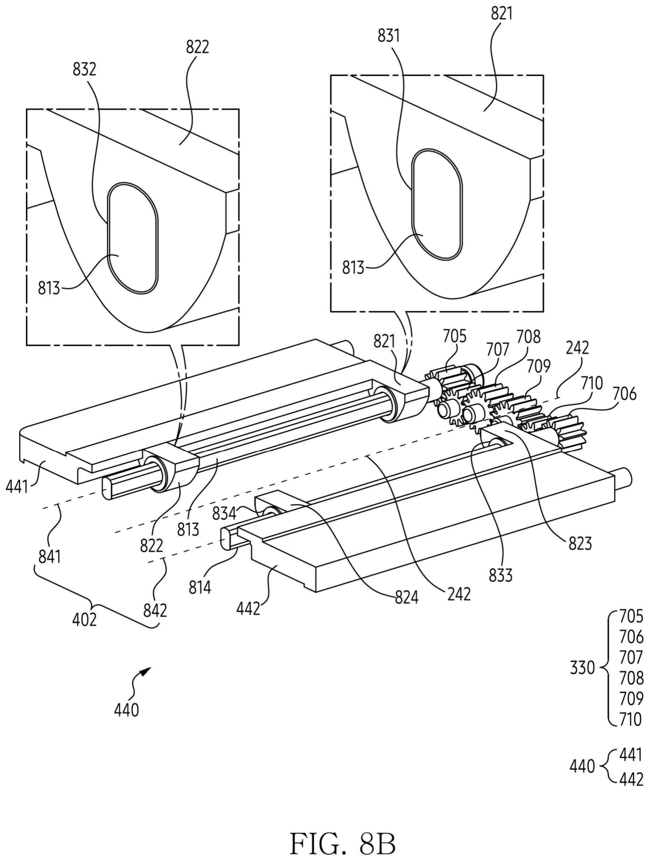

FIG. 8A illustrates shafts of a first hinge assembly and shafts of a second hinge assembly. FIG. 8B illustrates a second rotating member of a second hinge assembly.

In a first hinge assembly 251 illustrated in FIG. 8A, among gears included in a first set 320 of gears, gears between a first gear 701 and a fourth gear 704 disposed at both end portions were omitted. In a second hinge assembly 252 illustrated in FIG. 8A, among gears included in a second set of gears 330, gears between a fifth gear 705 and a sixth gear 706 disposed at both end portions were omitted.

Referring to FIG. 8A, the first hinge assembly 251 may include a first shaft 811 and a second shaft 812. For example, the first shaft 811 may be coupled to the first gear 701. For example, the second shaft 812 may be coupled to a second gear 702.

For example, the second hinge assembly 252 may include a third shaft 813 and a fourth shaft 814. For example, the third shaft 813 may be connected to the sixth gear 706. For example, the fourth shaft 814 may be connected to the sixth gear 706.

For example, since a size of the second hinge assembly 252 is larger than a size of the first hinge assembly 251, a first distance 801 between the third shaft 813 and the fourth shaft 814 may be wider than a second distance 802 between the first shaft 811 and the second shaft 812. For example, the second gear 702 and a third gear 703 may be disposed within the first distance 801. For example, a seventh gear 707, an eighth gear 708, a ninth gear 709, and a tenth gear 710 may be disposed within the second distance 802.

For example, a diameter 813a of the third shaft 813 and a diameter 814a of the fourth shaft 814 may be larger than a diameter 811a of the first shaft 811 and a diameter 812a of the second shaft 812. For example, a rotation range of a second housing part (e.g., the second housing part 220 of FIG. 3A) and a third housing part (e.g., the third housing part 230 of FIG. 3A) rotated by the second hinge assembly 252 may be larger than a rotation range of a first housing part (e.g., the first housing part 210 of FIG. 3A) and the third housing part 230 rotated by the first hinge assembly 251. In a case of the second hinge assembly 252 causing a relatively large rotation range, a force applied to the third shaft 813 and the fourth shaft 814 may be relatively large. In order to increase rigidity of the third shaft 813 and rigidity of the fourth shaft 814 to withstand the force, the diameter 813a of the third shaft 813 and the diameter 814a of the fourth shaft 814 may be relatively larger than the diameter 811a of the first shaft 811 and the diameter 812a of the second shaft 812.

For example, the first hinge assembly 251 may be configured to rotate the third housing part 230 in conjunction with rotation of the first housing part 210, by rotating the first shaft 811 according to the rotation of the first housing part 210, rotating the first gear 701 according to the rotation of the first shaft 811, rotating the third gear 703 according to the rotation of the first gear 701, rotating a fourth gear 704 according to the rotation of the third gear 703, rotating the second shaft 812 according to the rotation of the fourth gear 704, and rotating the third housing part 230 according to the rotation of the second shaft 812.

For example, the second hinge assembly 252 may be configured to rotate the third housing part 230 in conjunction with rotation of the second housing part 220, by rotating the third shaft 813 according to the rotation of the second housing part 220, rotating the fifth gear 705 according to the rotation of the third shaft 813, rotating the seventh gear 707 according to the rotation of the fifth gear 705, rotating the eighth gear 708 according to the rotation of the seventh gear 707, rotating the ninth gear 709 according to the rotation of the eighth gear 708, rotating the tenth gear 710 according to the rotation of the ninth gear 709, rotating the sixth gear 706 according to the rotation of the tenth gear 710, rotating a fourth shaft 814 according to the rotation of the sixth gear 706, and rotating the third housing part 230 according to the rotation of the fourth shaft 814.

Referring to FIG. 8B, a second rotating member 440 may rotate by being linked to an operation of the second set of gears 330. For example, the rotation of the second rotating member 440 may be caused by the rotation of the second set of gears 330, and the rotation of the second rotating member 440 may cause rotation of a first rotating member 410.

The second rotating member 440 illustrated in FIG. 8B may include a first arm support 441 and a second arm support 442. For example, a structure of the first arm support 441 and a structure of the second arm support 442 may be symmetrical with respect to a second folding axis 242. For example, the first arm support 441 and the second arm support 442 may be disposed symmetrically with the second folding axis 242 interposed therebetween.

For example, the first arm support 441 may be coupled to the third shaft 813. For example, the first arm support 441 may include a first connecting portion 821 and a second connecting portion 822, into which the third shaft 813 is inserted. For example, the third shaft 813 may be coupled to the first arm support 441 by penetrating a first opening 831 formed in the first connecting portion 821 and a second opening 832 formed in the second connecting portion 822. For example, the second arm support 442 may be coupled to the fourth shaft 814. For example, the second arm support 442 may include a third connecting portion 823 and a fourth connecting portion 824, into which the fourth shaft 814 is inserted. For example, the third shaft 813 may be coupled to the first arm support 441 by penetrating a third opening 833 formed in the third connecting portion 823 and a fourth opening 834 formed in the fourth connecting portion 824. As the third shaft 813 and the fourth shaft 814 are stably coupled to the first arm support 441 and the second arm support 442 through two openings, respectively, damage to the third shaft 813 and the fourth shaft 814 due to torsion may be reduced.

For example, the second rotating member 440 may rotate with respect to a second rotational axis 402. For example, the second rotational axis 402 may include a third axis 841 that is a rotational axis of the first arm support 441 and a fourth axis 842 that is a rotational axis of the second arm support 442. For example, the third axis 841 may overlap the third shaft 813, and the fourth axis 842 may overlap the fourth shaft 814.

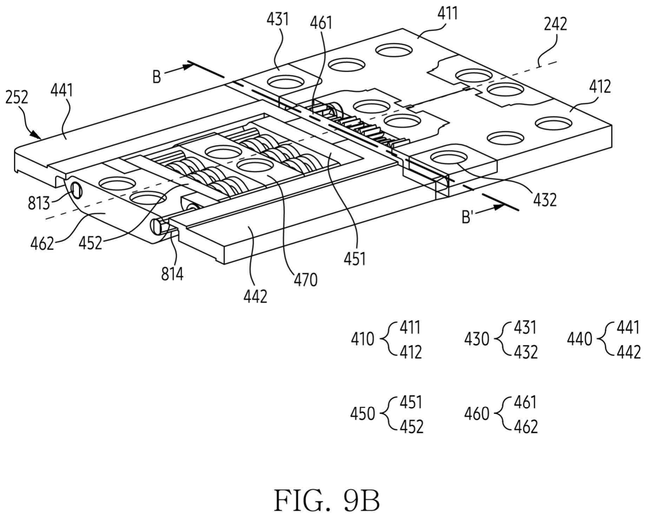

For example, as an external force is applied, the first arm support 441 may rotate clockwise with respect to the third axis 841. The rotation of the first arm support 441 clockwise may cause rotation of the first arm 411 clockwise. For example, as a first protrusion (e.g., a first protrusion 911 of FIG. 9B) to be described later moves in a first slot (e.g., a first slot 921 of FIG. 9B), the rotation of the first arm 411 clockwise may occur. When the first arm support 441 rotates clockwise with respect to the third axis 841, the third shaft 813 coupled to the first arm support 441 may rotate. Since the third shaft 813 overlaps the third axis 841, the third shaft 813 may rotate clockwise in place. The rotation of the third shaft 813 clockwise may cause rotation of the fifth gear 705 connected to the third shaft 813 clockwise. Since the second set of gears 330 operates by being linked to each other, the rotation of the fifth gear 705 clockwise may cause rotation of the sixth gear 706 counterclockwise. The rotation of the sixth gear 706 counterclockwise may cause rotation of the fourth shaft 814 coupled to the sixth gear 706 counterclockwise. Since the fourth shaft 814 overlaps the fourth axis 842, the fourth shaft 814 may rotate counterclockwise in place. When the fourth shaft 814 rotates counterclockwise, the second arm support 442 coupled to the fourth shaft 814 may rotate counterclockwise. The rotation of the fourth shaft 814 counterclockwise may cause rotation of the second arm 412 clockwise. For example, as a second protrusion 912 to be described later moves in a second slot 922, the rotation of the second arm 412 counterclockwise may occur. By the above-described process, the second housing part 220 and the third housing part 230 may be folded by being linked to each other. In the above-described process, when a rotational direction is reversed, the second housing part 220 and the third housing part 230 may be unfolded by being linked to each other.

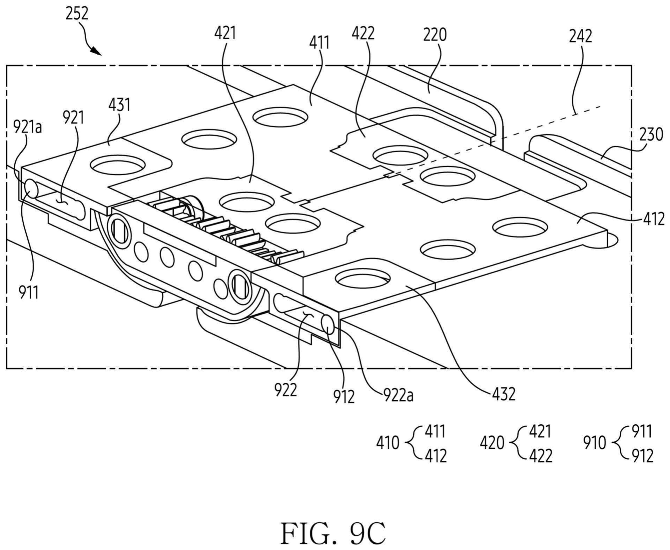

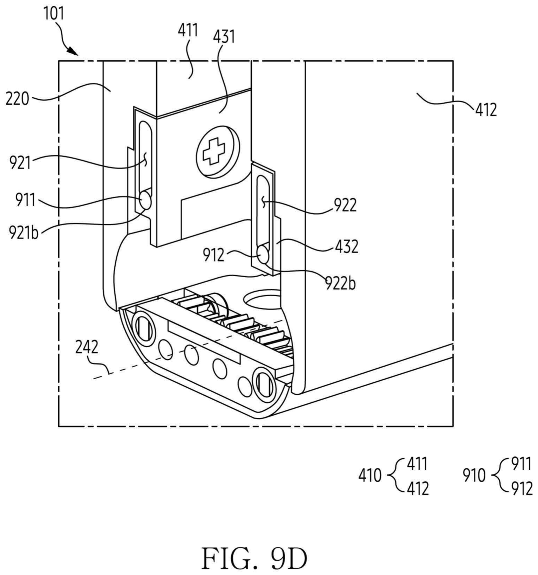

FIG. 9A illustrates a coupling relationship between a first rotating member, a connecting member, and a second rotating member of a second hinge assembly. FIG. 9B is a perspective view of a portion of a second hinge assembly. FIG. 9C illustrates a portion of a second hinge assembly in a first state or a second state. FIG. 9D illustrates a portion of a second hinge assembly in a third state.

Referring to FIGS. 9A and 9B, a connecting member 430 may link a first rotating member 410 and a second rotating member 440, and may limit a limit angle of the first rotating member 410 and a rotational angle of the second rotating member 440.

For example, the connecting member 430 may be coupled to each of the first rotating member 410 and the second rotating member 440. For example, the connecting member 430 may include a first connecting member 431 and a second connecting member 432. For example, the first connecting member 431 may be coupled to a first arm 411 and a first arm support 441, respectively.

For example, the first connecting member 431 may be coupled to the first arm 411. For example, a portion of the connecting member 430 may be coupled on a first recess 511a. For example, the first connecting member 431 may include a fifth through hole 901 aligned with at least one first through hole 501 formed in the first recess 511a. For example, a screw (e.g., the screw S of FIG. 4A) may couple the first arm 411 and the first connecting member 431 by passing through the at least one first through hole 501 and the fifth through hole 901, which are aligned with each other, and being inserted into a second support member (e.g., the second support member 221 of FIG. 4A).

For example, the connecting member 430 may include a slot 920 into which a protrusion 910 of the second rotating member 440 is inserted. For example, when the second rotating member 440 rotates, the protrusion 910 may move within the slot 920. Since a moving range of the protrusion 910 is limited to a length of the slot 920, a rotation range of the first rotating member 410 and the second rotating member 440 may be limited by the protrusion 910.

For example, the first connecting member 431 may include a first slot 921. For example, the first arm support 441 may include a first protrusion 911 inserted into the first slot 921. For example, the first protrusion 911 may be coupled to the first slot 921 so as to be movable in the first slot 921 by being tightly fitted into the first slot 921. For example, since the first protrusion 911 is movable in the first slot 921, a moving range of the first protrusion 911 may be limited to a length of the first slot 921. For example, the moving range of the first protrusion 911 may be limited from an end 921a of the first slot 921 to another end 921b of the first slot 921 opposite to the end 921a.

The first arm 411, the first arm support 441, and the first connecting member 431 illustrated in FIG. 9A may be symmetrical to a second arm (e.g., the second arm 412 of FIG. 9B), a second arm support (e.g., the second arm support 442 of FIG. 9B), and a second connecting member (e.g., the second connecting member 432 of FIG. 9B) that are not illustrated in FIG. 9A, with respect to a second folding axis (e.g., the second folding axis 242 of FIG. 5C). Descriptions regarding the first arm 411, the first arm support 441, and the first connection member 431 may be applied substantially the same to the second arm 412, the second arm support 442, and the second connecting member 432. For example, the second connecting member 432 may be coupled to the second arm 412. For example, the second arm support 442 may include a second protrusion 912 inserted into a second slot 922 of the second connecting member 432.

Referring to FIG. 9B, at least two second elastic members 480 may be coupled to a third shaft 813 and a fourth shaft 814. For example, the at least two second elastic members 480 may include a spring but are not limited thereto. For example, the two second elastic members 480 may include six springs. For example, the at least two second elastic members 480 may be disposed in a compressed state between a friction body 450 and a holder 470. For example, a restoring force of the at least two second elastic members 480 may enable a flex mode to be described later by providing a frictional force.

For example, the holder 470 may fix the at least two second elastic members 480. For example, the friction body 450 may include a first friction body 451 and a second friction body 452, spaced apart from the holder 470 along an extension direction (e.g., y-axis direction) of the second folding axis 242. For example, the holder 470 may be disposed between the first friction body 451 and the second friction body 452. For example, the at least two second elastic members 480 may be disposed in a compressed state between the first friction body 451 and the holder 470 and between the second friction body 452 and the holder 470. For example, three springs may be disposed between the first friction body 451 and the holder 470, and three springs may be disposed between the second friction body 452 and the holder 470. The holder 470 and the second friction body 452 may be coupled to a second hinge cover (e.g., the second hinge cover 312 of FIG. 4A) by a screw (e.g., the screw S of FIG. 4A). For example, a cover 460 may be in contact with the friction body 450. For example, the cover 460 may include a first cover 461 in contact with the first friction body 451, and a second cover 462 in contact with the second friction body 452.

Referring to FIG. 9C, in the first state or the second state, the protrusion 910 of the second rotating member (e.g., the second rotating member 440 of FIG. 4A) may be positioned at an end 921a or 922a of the slot 920 of the connecting member 430. A cross-section of the second hinge assembly 252 illustrated in FIG. 9C may correspond to a cross-section cut along B-B' of FIG. 9B.

For example, in the first state or the second state, the first protrusion 911 may be in contact with the end 921a of the first slot 921. For example, in the first state or the second state, the second protrusion 912 may be in contact with the end 922a of the second slot 922. For example, in the first state or the second state, a distance between the first protrusion 911 and the second protrusion 912 may be the farthest. For example, in the first state or the second state, the first protrusion 911 and the second protrusion 912 may be positioned farthest from the second folding axis 242. In the first state or the second state, a second housing part 220 and a third housing part 230 may be unfolded.

Referring to FIG. 9D, in the third state, the protrusion 910 of the second rotating member (e.g., the second rotating member 440 of FIG. 4A) may be positioned at another end 921b or 922b of the slot 920 of the connecting member 430 opposite to the end 921a or 922a. A cross-section of the second hinge assembly 252 illustrated in FIG. 9D may correspond to the cross-section cut along B-B' of FIG. 9B. For example, in the third state, the first protrusion 911 may be in contact with the other end 921b of the first slot 921. For example, in the third state, the second protrusion 912 may be in contact with the other end 922b of the second slot 922. For example, a distance between the first protrusion 911 and the second protrusion 912 may be the closest in a state in which the second housing part 220 and the third housing part 230 are folded. For example, in the third state, the first protrusion 911 and the second protrusion 912 may be positioned closest to the second folding axis 242.

For example, when the foldable electronic device 101 switches from the first state to the third state, or from the third state to the first state, the protrusion 910 may move along the slot 920. For example, the protrusion 910 may linearly move within the slot 920. For example, in a state in which the protrusion 910 is blocked by the end 921a, or 922a or the other end 921b, or 922b of the slot 920 and it is impossible to move, rotation of the second rotating member 440 may be limited. As the rotation of the second rotating member 440 is limited, rotation of the first rotating member 410 may also be limited. Since the first rotating member 410 and the second rotating member 440 may not rotate, rotation of the second housing part 220 and rotation of the third housing part 230 may be limited.

For example, the length of the slot 920 may be set so that a foldable housing 200 is deformable between the first state (or the second state) and the third state. For example, a length between the end 921a or 922a and the other end 921b or 922b may be set so that the foldable housing 200 may be in the first state (or the second state) when the protrusion 910 is positioned at the end 921a or 922a of the slot 920, and the foldable housing 200 may be in the third state when the protrusion 910 is positioned at the other end 921b or 922b of the slot 920. For example, as movement of the protrusion 910 is limited by the slot 920, the first rotating member 410 may not be separated from a guide member 420.

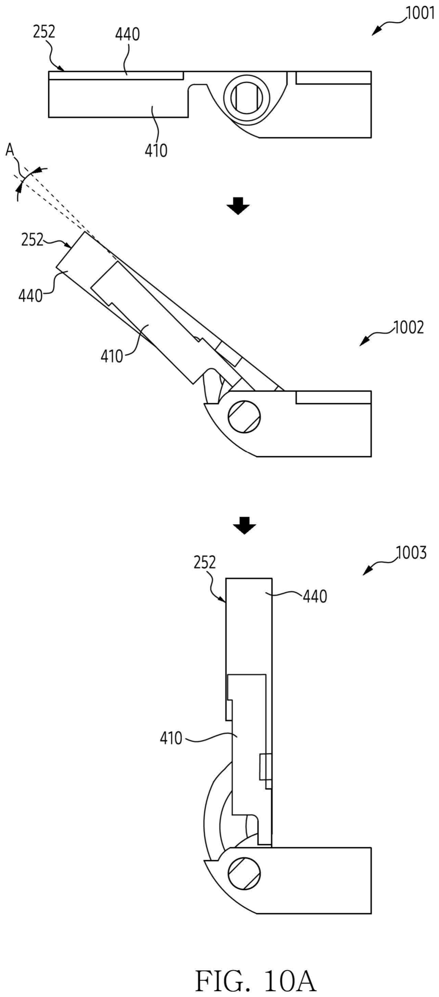

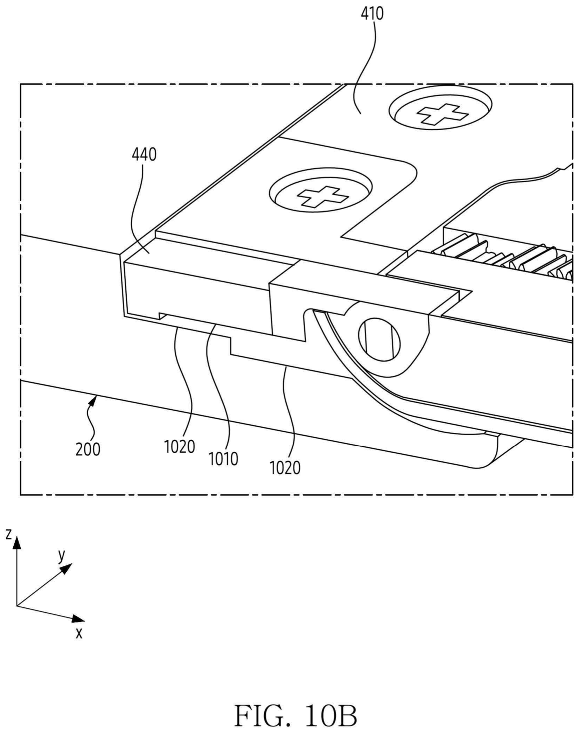

FIG. 10A illustrates an operation process of a second hinge assembly. FIG. 10B illustrates a cross-section between a foldable housing and a second hinge assembly.

1001 of FIG. 10A schematically illustrates a second hinge assembly 252 in a first state or a second state. 1003 of FIG. 10A schematically illustrates the second hinge assembly 252 in a third state. 1002 of FIG. 10A schematically illustrates the second hinge assembly 252 in an intermediate state between the first state or the second state, and the third state. Referring to FIG. 10A, when a second rotating member 440 moves linearly along a slot 920 of a connecting member 430, a first rotating member 410 may rotate with respect to a first rotational axis (e.g., the first rotational axis 401 of FIG. 4B), and the second rotating member 440 may rotate with respect to a second rotational axis (e.g., the second rotational axis 402 of FIG. 4B).

Referring to 1001 of FIG. 10A, in the first state or the second state, the first rotating member 410 and the second rotating member 440 may be aligned in parallel. For example, in the first state or the second state, the first rotating member 410 and the second rotating member 440 may be disposed on substantially the same plane.

Referring to 1002 of FIG. 10A, the first rotating member 410 may rotate with respect to the first rotational axis 401 while switching from the first state or the second state to the intermediate state. For example, the second rotating member 440 may rotate with respect to the second rotational axis 402 while switching from the first state or the second state to the intermediate state. In the intermediate state, as the first rotational axis 401 for the first rotating member 410 and the second rotational axis 402 for the second rotating member 440 are different, an angle A may be formed between the first rotating member 410 and the second rotating member 440. For example, a protrusion 910 of the second rotating member 440 may move along the slot 920 of the connecting member 430 while switching from the first state or the second state to the intermediate state.

Referring to 1003 of FIG. 10A, in the third state, the first rotating member 410 and the second rotating member 440 may be aligned again in parallel. For example, the angle A between the first rotating member 410 and the second rotating member 440 may be reduced while switching from the intermediate state to the third state. When a foldable housing 200 is switched to the third state, the first rotating member 410 and the second rotating member 440 may be disposed on substantially the same plane.

For example, the second rotating member 440 may protrude in the intermediate state in which the first rotating member 410 and the second rotating member 440 are not parallel to each other. As the second rotating member 440 protrudes toward a flexible display (e.g., the flexible display 271 of FIG. 2), damage may be caused to the flexible display 271. Referring to FIG. 10B, even if the second rotating member 440 protrudes by an angle (e.g., the angle A of FIG. 10A) between the first rotating member 410 and the second rotating member 440, the foldable housing 200 and the second rotating member 440 may have a partially recessed structure so as not to be in contact with the flexible display (e.g., the flexible display 271 of FIG. 2). For example, the second rotating member 440 may include a third recess 1010 that is recessed in a direction (e.g., -z direction) opposite to a direction in which the flexible display 271 is disposed. For example, a third housing part 230 (and/or a second housing part 220) may include a fourth recess 1020 that is recessed in the direction (e.g., the -z direction). For example, in a case that the second rotating member 440 protrudes as the angle A is formed between the first rotating member 410 and the second rotating member 440, the protruding portion may be accommodated in the third recess 1010 and the fourth recess 1020, thereby reducing a contact with respect to the flexible display 271. As the contact by the flexible display 271 is reduced, damage to the flexible display 271 may be reduced.

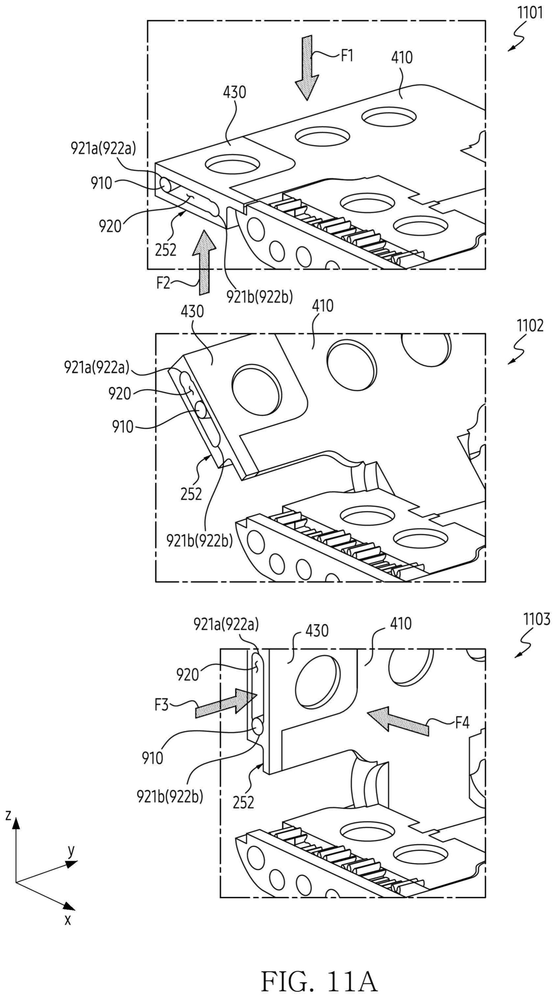

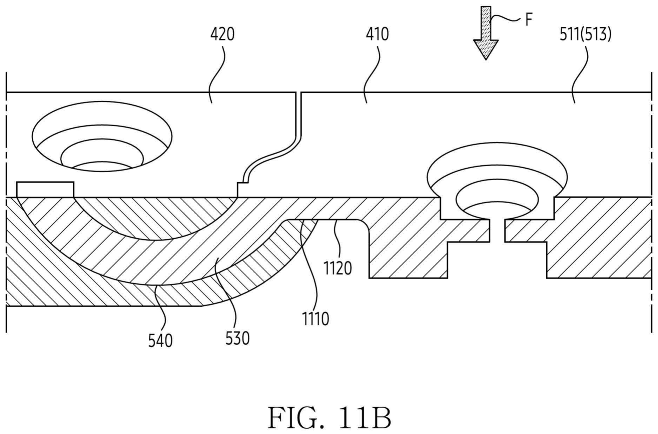

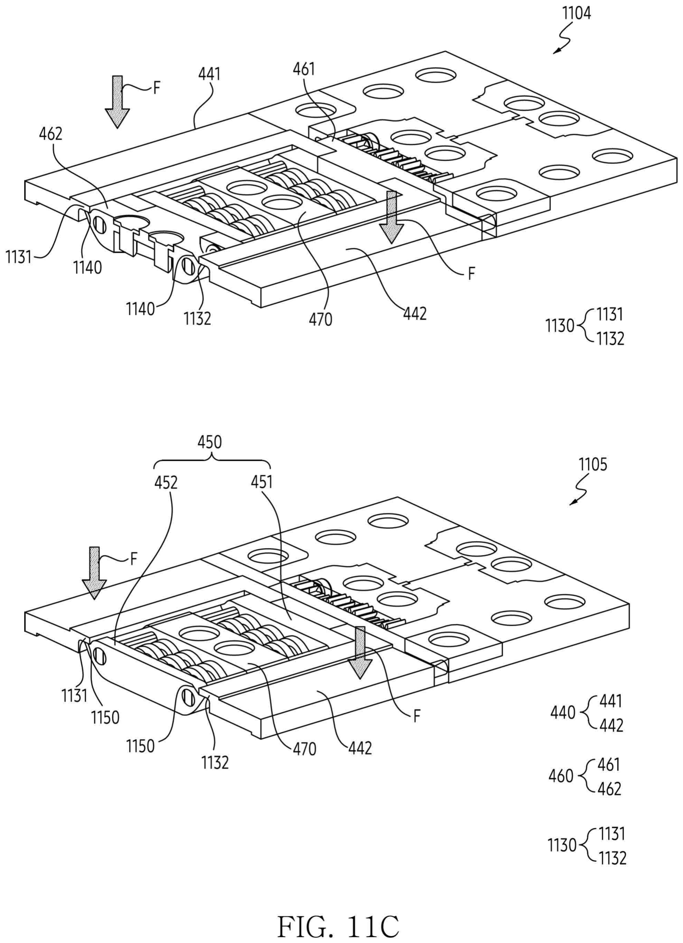

FIG. 11A illustrates an operation process of a second hinge assembly. FIG. 11B is a cross-sectional view of a connecting portion between a first rotating member and a guide member in a first state or a second state. FIG. 11C illustrates a portion of a second hinge assembly.

Referring to FIG. 11A, rotational angles of a second housing part (e.g., the second housing part 220 of FIG. 3A) and a third housing part (e.g., the third housing part 230 of FIG. 3A) may be limited by a slot 920 of a connecting member 430, and a protrusion 910 of a second rotating member (e.g., the second rotating member 440 of FIG. 4A).

1101 of FIG. 11A illustrates the protrusion 910 inserted into the slot 920 of the connecting member 430 in the first state or the second state. For example, in the first state or the second state, the protrusion 910 may be in contact with an end 921a or 922a of the slot 920. In a state in which the protrusion 910 is in contact with the end 921a or 922a of the slot 920, even if a first external force F1 applied from a top to a bottom (e.g., -z direction) of a second hinge assembly 252 is applied, since the protrusion 910 may not move by being blocked by the end 921a or 922a, a first rotating member 410 and the second rotating member 440 may not rotate. For example, the second housing part 220 may not be unfolded more than 180 degrees with respect to the third housing part 230. For example, in the first or second state, in a case that a second external force F2 applied from the bottom to the top (e.g., +z direction) of the second hinge assembly 252 is applied, the protrusion 910 may be moved toward another end 921b or 922b of the slot 920.

1102 of FIG. 11A illustrates the protrusion 910 inserted into the slot 920 of the connecting member 430 in an intermediate state. For example, in the intermediate state, the protrusion 910 may be positioned between the end 921a or 922a and the other end 921b or 922b of the slot 920. Since the protrusion 910 may move from the end 921a or 922a to the other end 921b or 922b by the second external force F2, the first rotating member 410 and the second rotating member 440 may rotate. For example, the second housing part 220 may be folded with respect to the third housing part 230.

1103 of FIG. 11A illustrates the protrusion 910 inserted into the slot 920 of the connecting member 430 in a third state. For example, in the third state, the protrusion 910 may be in contact with the other end 921b or 922b of the slot 920. In a state in which the protrusion 910 is in contact with the other end 921b or 922b of the slot 920, even if a third external force F3 is applied in a direction (e.g., +x direction) that causes the second housing part 220 to fold inward with respect to the third housing part 230, since the protrusion 910 may not move by being blocked by the other end, the first rotating member 410 and the second rotating member 440 may not rotate. For example, the second housing part 220 may not be folded less than or equal to 0° with respect to the third housing part 230. For example, in the third state, in a case that a fourth external force F4 is applied in a direction (e.g., -x direction) that causes the second housing part 220 to unfold outward with respect to the third housing part 230, the protrusion 910 may be moved toward the end 921a or 922a of the slot 920.

Referring to FIG. 11B, a rotational angle may be limited by a connection structure between the first rotating member 410 and a guide member 420.

For example, a rotary rail 530 of the first rotating member 410 may be inserted into a guide groove 540 of the guide member 420. As described above, the rotary rail 530 may enable the first rotating member 410 to rotate by moving along the guide groove 540. For example, in the first state or the second state, the guide member 420 may include a stepped portion 1110 to limit the rotation of the first rotating member 410 in a direction in which the second housing part (e.g., the second housing part 220 of FIG. 3A) is further unfolded. For example, the rotary rail 530 having a curvature, and a first portion 511 (and a third portion 513) of the first rotating member 410 may be separated. For example, a straight portion 1120 extending linearly may be formed between the rotary rail 530 and the first portion 511 (and the third portion 513). For example, the stepped portion 1110 of the guide member 420 may be in contact with the straight portion 1120. For example, in the first state or the second state in which the second housing part 220 and the third housing part 230 are unfolded, even if an external force F pressing the first rotating member 410 is applied, since the straight portion 1120 is blocked by the stepped portion 1110, the second housing part 220 may not be unfolded more than 180 degrees with respect to the third housing part 230.

Referring to FIG. 11C, a rotational angle may be limited by a cover 460, a friction body 450, and the second rotating member 440.

Referring to 1104 of FIG. 11C, the second rotating member 440 may include a protrusion 1130 in contact with the cover 460 in the first state or the second state. For example, a first arm 411 supporter may include a first protrusion 1131 extending toward the cover 460. For example, a second arm 412 supporter may include a second protrusion 1132 extending toward the cover 460. In the first state or the second state, the first protrusion 1131 and the second protrusion 1132 may be in contact with a groove 1140 of the cover 460. For example, in the first state or the second state in which the second housing part 220 and the third housing part 230 are unfolded, even if the external force F pressing the second rotating member 330 is applied, as the first protrusion 1131 and the second protrusion 1132 are blocked by the cover 460, a second housing (e.g., the second housing part 220 of FIG. 3A) may not be unfolded more than 180 degrees with respect to a third housing (e.g., the third housing part 230 of FIG. 3A). In 1104 of FIG. 11C, the rotational angle is illustrated to be limited by a second cover 462, but it is not limited thereto. For example, the first cover 461 may also include the groove 1140 in contact with the protrusion 1130 in the first state or the second state.

Referring to 1105 of FIG. 11C, a protrusion may be in contact with the friction body 450 in the first state or the second state. For example, in the first state or the second state, the first protrusion 1131 and the second protrusion 1132 may be in contact with a groove 1150 of the friction body 450. For example, in the first state or the second state in which the third housing part 230 and the second housing part 220 are unfolded, even if the external force F pressing the second rotating member 440 is applied, as the first protrusion 1131 and the second protrusion 1132 are blocked by the friction body 450, the second housing part 220 may not be unfolded more than 180 degrees with respect to the third housing part 230. In 1105 of FIG. 11C, the rotational angle is illustrated to be limited by a second friction body 452, but it is not limited thereto. For example, the second friction body 452 may also include the groove 1150 in contact with the protrusion 1130 in the first state or the second state. Although not illustrated, a holder 470 may also include a groove in contact with the protrusion 1130 in the first state or the second state. The rotational angle may be limited by the groove of the holder 470.

As described above, the rotational angle of the second housing part 220 with respect to the third housing part 230 may be limited. For example, in the first state or the second state in which the second housing part 220 and the third housing part 230 are unfolded, in a case that the second housing part further rotates with respect to the third housing part 230 by an external force (e.g., touch input) applied to a flexible display 271, a foldable housing 200 may be damaged by the rotational angle greater than 180 degrees. For example, as the rotational angle is limited by the above-described structures, a strength capable of withstanding the external force may be improved.

For example, in the third state in which the second housing part 220 and the third housing part 230 are folded, in a case that the second housing part 220 further rotates inward with respect to the third housing part 230, a foldable housing (e.g., the foldable housing 200 of FIG. 3A) may be damaged due to the rotational angle less than 0 degrees. For example, in a case that an order (e.g., the first state - the second state - the third state) of folding the foldable housing 200 switched from the first state to the third state via the second state is not observed, and the second housing part 220 further rotates inward after directly switched from the first state to the third state (e.g., the first state - the third state), the foldable housing 200 may be damaged by additionally rotating a first housing part 210. For example, in a case that the second housing part 220 does not rotate further in a state in which the second housing part 220 is folded inward, since a rotational angle of the first housing part 210 is limited by the second housing part 220, a user may easily recognize that the foldable housing 200 is folded in a wrong order. For example, damage to the foldable housing 200 due to folding the foldable housing 200 in the wrong order may be reduced.

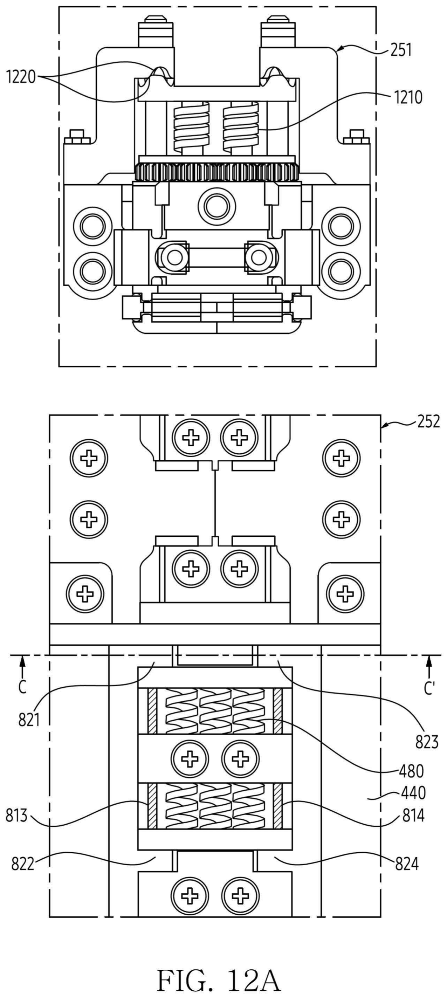

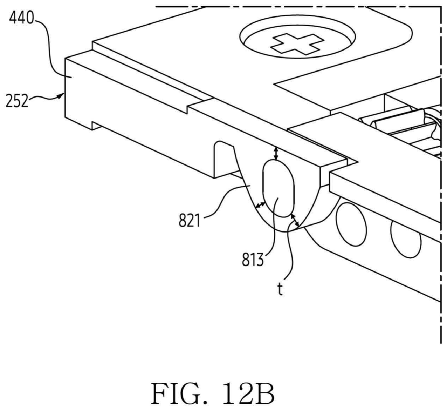

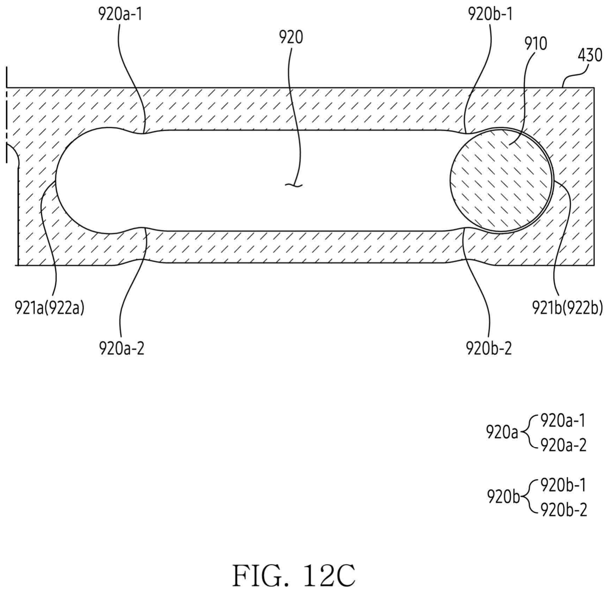

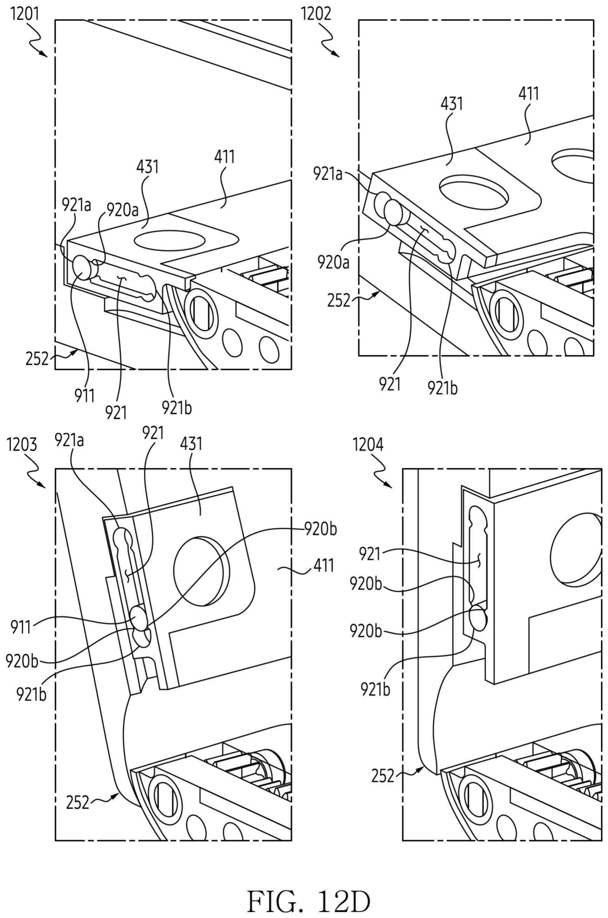

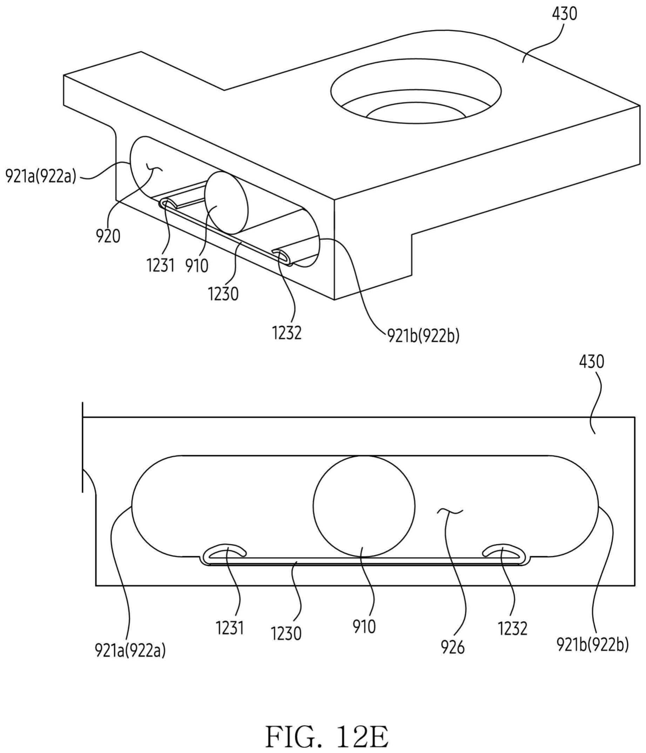

FIG. 12A illustrates a portion of a first hinge assembly and a portion of a second hinge assembly. FIG. 12B is a cross-sectional view of a second hinge assembly cut along line C-C' of FIG. 12A. FIG. 12C illustrates a slot and a protrusion of a second hinge assembly. FIG. 12D illustrates states of a second hinge assembly according to a rotational angle of the second hinge assembly. FIG. 12E illustrates a third elastic member disposed in a slot.

Referring to FIG. 12A, an exemplary first hinge assembly 251 may include at least one first elastic member 1210. For example, the at least one first elastic member 1210 may include a spring that may be compressed or extended by an external force, but it is not limited thereto. The at least one first elastic member 1210 may have a restoring force for restoring to its original shape when compressed or extended.

For example, the at least one first elastic member 1210 may be compressed by a CAM mechanism. For example, the CAM mechanism may include CAM detents 1220 engaged with each other, including a ridge. For example, when the first hinge assembly 251 rotates, as the CAM detents 1220 engaged with each other move along the ridge, the compression or the extension of the at least one first elastic member 1210 may be caused. A frictional force may be generated between the CAM detents 1220 by the compression or the extension of the at least one first elastic member 1210. The frictional force may maintain a folding angle of the first hinge assembly 251 by acting as a force (e.g., torque) that resists rotation of the first hinge assembly 251. By maintaining the folding angle of the first hinge assembly 251, in an intermediate state between a state in which a second housing part (e.g., the second housing part 220 of FIG. 3A) and a third housing part (e.g., the third housing part 230 of FIG. 3A) are unfolded and a state in which a first housing part 210 and the third housing part 230 are folded, a free-stop or flex mode in which the first housing part 210 and the third housing part 230 are fixed may be possible. For example, the first hinge assembly 251 may provide tactile feedback to a user when the first hinge assembly 251 is folded or unfolded by the frictional force. For example, the user may feel that the first housing part 210 is folded or unfolded with respect to the third housing part 230 through the tactile feedback by the friction force.

Referring to FIG. 12A, an exemplary second hinge assembly 252 may include at least two second elastic members 480. For example, the at least two second elastic members 480 may include a spring that may be compressed or extended by an external force, but it is not limited thereto. The at least two second elastic members 480 may have a restoring force for restoring to their original shapes when compressed or stretched. For example, the number of the at least two second elastic members 480 may be greater than the number of the at least one first elastic member 1210.

Referring to FIGS. 12A and 12B, the second hinge assembly 252 may have a structure for having a thin thickness. For example, thicknesses of structures overlapping with a second rotational axis 402 for a second rotating member 440 may be relatively thin. For example, thicknesses of a first connecting portion 821, a second connecting portion 822, a third connecting portion 823, and a fourth connecting portion 824, supporting a third shaft 813 and a fourth shaft 814 may be relatively thin. For example, the first connecting portion 821 surrounding the third shaft 813 may have a relatively thin thickness t. Since the thicknesses of the first connecting portion 821, the second connecting portion 822, the third connecting portion 823, and the fourth connecting portion 824 are relatively thin, it may be difficult to apply a CAM mechanism to the second rotating member 440.

For example, in a case that a thickness of the second hinge assembly 252 for a rotational operation of a third housing part 230 and a second housing (e.g., the second housing part 220 of FIG. 3A) is thick, an overall thickness of a foldable housing (e.g., the foldable housing 200 of FIG. 3A) may be thick. Since a foldable electronic device (e.g., the foldable electronic device 101 of FIG. 3A) according to an embodiment includes the foldable housing 200 having a structure in which three housing parts are folded, in a case that the thickness of the foldable housing 200 is thick, it may be difficult to carry the foldable electronic device 101 in a third state. For example, in the third state in which the three housings are folded, in order to reduce the thickness of the foldable housing 200, the second hinge assembly 252 may not include the CAM mechanism.

For example, in a case of the CAM mechanism, in a case that a folding or unfolding operation is repeated, damage (e.g., wear) may be caused by the protruding ridge. For example, since the second hinge assembly 252 includes more components than components included in a first hinge assembly 251, in a case of applying the CAM mechanism to the second hinge assembly 252, durability of the second hinge assembly 252 may be weakened. For example, the second hinge assembly 252 may not include the CAM mechanism.

Referring to FIG. 12C, the second hinge assembly 252 may provide tactile feedback to the user when the second hinge assembly 252 is folded or unfolded, using a shape of a slot 920 formed in a connecting member 430 instead of the CAM mechanism.

For example, the slot 920 may include a first locking portion 920a and a second locking portion 920b. For example, the first locking portion 920a may be spaced apart from an end 921a or 922a of the slot 920 by a designated distance. For example, the first locking portion 920a may protrude toward an inside of the slot 920. For example, the first locking portion 920a may include a first portion 920a-1 protruding from a top toward a bottom of a periphery of the slot 920 and/or a second portion 920a-2 protruding from the bottom toward the top of the periphery of the slot 920. For example, the second locking portion 920b may be spaced apart from another end 921b or 922b of the slot 920 by the designated distance. For example, the second locking portion 920b may protrude toward the inside of the slot 920. For example, the second locking portion 920b may include a third portion 920b-1 protruding from the top toward the bottom of the periphery of the slot 920 and/or a fourth portion 920b-2 protruding from the bottom toward the top of the periphery of the slot 920.

For example, a force for moving a protrusion 910 may increase by the first locking portion 920a and the second locking portion 920b. For example, a width of the slot 920 may decrease in an area where the first locking portion 920a and the second locking portion 920b are formed. For example, in an area where the first locking portion 920a is formed, the width of the slot 920 may be reduced by a height of the first portion 920a-1 and the second portion 920a-2 protruding toward the inside of the slot 920. For example, in an area where the second locking portion 920b is formed, the width of the slot 920 may be reduced by a height of the third portion 920b-1 and the fourth portion 920b-2 protruding toward the inside of the slot 920. For example, the protrusion 910 may require an additional force when passing through the first locking portion 920a and the second locking portion 920b forming the relatively narrow width of the slot 920. For example, when the protrusion 910 passes through the first locking portion 920a and/or the second locking portion 920b, the additional force may be required to pass through the relatively narrow width of the slot 920. By the additional force, the protrusion 910 may pass through the first locking portion 920a and/or the second locking portion 920b. For example, when the protrusion 910 passes through the first locking portion 920a and/or the second locking portion 920b, the protrusion 910 may interfere with the first locking portion 920a and/or the second locking portion 920b, thereby providing the user with the feeling of unfolding or folding the second hinge assembly 252. For example, the second hinge assembly 252 may provide tactile feedback to the user through the first locking portion 920a and the second locking portion 920b in the slot 920 even if it does not include the CAM mechanism.

For example, a position of the first locking portion 920a and a position of the second locking portion 920b may be set to a position capable of providing tactile feedback according to a rotational angle of the second hinge assembly 252. For example, a length of the slot 920 may be set to correspond to a first state (or a second state) and a third state of the foldable housing (e.g., the foldable housing 200 of FIG. 3A). For example, the length of the slot 920 may be set so that the foldable housing 200 may be in the first state (or the second state) when the protrusion 910 is in contact with the end 921a or 922a of the slot 920, and the foldable housing 200 may be in the third state when the protrusion 910 is positioned at the other end 921b or 922b of the slot 920. For example, the position of the first locking portion 920a may be set to a position where tactile feedback is provided when the foldable housing 200 rotates at a designated angle (e.g., about 15 degrees) from the first state (or the second state). For example, the position of the second locking portion 920b may be set to a position where tactile feedback is provided when the foldable housing 200 rotates at a designated angle (e.g., about 75 degrees) from the first state (or the second state).

Referring to FIG. 12D, the position of the first locking portion 920a and the position of the second locking portion 920b may be set to provide tactile feedback according to the rotational angle of the second hinge assembly 252. In FIG. 12D, only a first protrusion 911 and a first slot 921 of the second hinge assembly 252 are illustrated, but a second protrusion 912 and a second slot 922 may be symmetrical to the first protrusion 911 and the first slot 921 with respect to a second folding axis 242.

1201 of FIG. 12D illustrates a state in which the protrusion 910 is in contact with the end 921a of the first slot 921. Referring to 1201 of FIG. 12D, the foldable electronic device 101 may be in the first state or the second state. For example, in the first state or the second state, the first protrusion 911 may be positioned at the farthest position from a second folding axis (e.g., the second folding axis 242 of FIG. 3A). For example, in the first state or the second state, since movement of the first protrusion 911 may be limited by the first locking portion 920a, in a case that an external force enough for the first protrusion 911 to pass through the first locking portion 920a is not provided, rotation of the second hinge assembly 252 may be limited.

1202 of FIG. 12D illustrates a state in which the protrusion 910 passes through the first locking portion 920a. For example, 1202 of FIG. 12D may indicate a state rotated from 1201 of FIG. 12D at an angle of about 15 degrees, but it is not limited thereto. Referring to 1202 of FIG. 12D, as a first arm 411 and a first arm support (e.g., the first arm support 441 of FIG. 4A) rotate, the first protrusion 911 may move from the end 921a toward the other end 921b within the first slot 921. For example, the first protrusion 911 may be in contact with the first locking portion 920a by moving toward the other end 921b. For example, when the first protrusion 911 passes through the first locking portion 920a, since it should pass through an area of the slot 920 having a relatively narrow width, an additional external force may be required. By the additional external force, tactile feedback may be provided to the user by interference between the first locking portion 920a and the first protrusion 911 while the first protrusion 911 passes through the first locking portion 920a. The user may feel that the second hinge assembly 252 is folded through the tactile feedback.

1203 of FIG. 12D illustrates a state in which the protrusion 910 passes through the second locking portion 920b. For example, 1203 of FIG. 12D may indicate a state rotated from 1201 of FIG. 12D at an angle of about 75 degrees, but it is not limited thereto. Referring to 1203 of FIG. 12D, as the first arm 411 and the first arm support 441 further rotate, the first protrusion 911 may be in contact with the second locking portion 920b within the slot 920. For example, when the first protrusion 911 passes through the second locking portion 920b, since it should pass through the area of the slot 920 having a relatively narrow width, an additional external force may be required. By the additional external force, tactile feedback may be provided to the user by interference between the second locking portion 920b and the first protrusion 911 while the first protrusion 911 passes through the second locking portion 920b. The user may feel that the second hinge assembly 252 is folded through the tactile feedback.

1204 of FIG. 12D illustrates a state in which the protrusion 910 is in contact with the other end 921b of the first slot 921. Referring to 1204 of FIG. 12D, the foldable electronic device 101 may be in the third state. For example, in the third state, the first protrusion 911 may be positioned at the closest position to the second folding axis 242. For example, in the third state, since the movement of the first protrusion 911 may be limited by the second locking portion 920b, in a case that an external force enough for the first protrusion 911 to pass through the second locking portion 920b is not provided, the rotation of the second hinge assembly 252 may be limited.

Referring to FIG. 12E, in order to provide tactile feedback to the user, a third elastic member 1230 may be disposed within the slot 920 instead of forming the first locking portion 920a and/or the second locking portion 920b within the slot 920.

For example, the third elastic member 1230 may be disposed within the slot 920. For example, the third elastic member 1230 may be disposed at a lower portion of a periphery of the slot 920, but it is not limited thereto. For example, the third elastic member 1230 may be a leaf spring, but it is not limited thereto. For example, the third elastic member 1230 may include a third locking portion 1231 and a fourth locking portion 1232. For example, the third locking portion 1231 may be spaced apart from the end 921a or 922a of the slot 920 by a designated distance. For example, the third locking portion 1231 may protrude toward the inside of the slot 920. For example, the fourth locking portion 1232 may be spaced apart from the end 921a or 922a of the slot 920 by the designated distance. For example, the fourth locking portion 1232 may protrude toward the inside of the slot 920.

For example, the width of the slot 920 may decrease in an area where the third locking portion 1231 and the fourth locking portion 1232 are formed. For example, when the protrusion 910 passes through the third locking portion 1231 and/or the fourth locking portion 1232, an additional force may be required to pass through the relatively narrow width of the slot 920. By the additional force, the protrusion 910 may pass through the third locking portion 1231 and/or the fourth locking portion 1232. For example, when the protrusion 910 passes through the third locking portion 1231 and/or the fourth locking portion 1232, the protrusion 910 may interfere with the third locking portion 1231 and/or the fourth locking portion 1232, thereby providing the user with the feeling of unfolding or folding the second hinge assembly 252. For example, the second hinge assembly 252 may provide tactile feedback to the user through the third elastic member 1230 in the slot 920, even if it does not include the CAM mechanism.

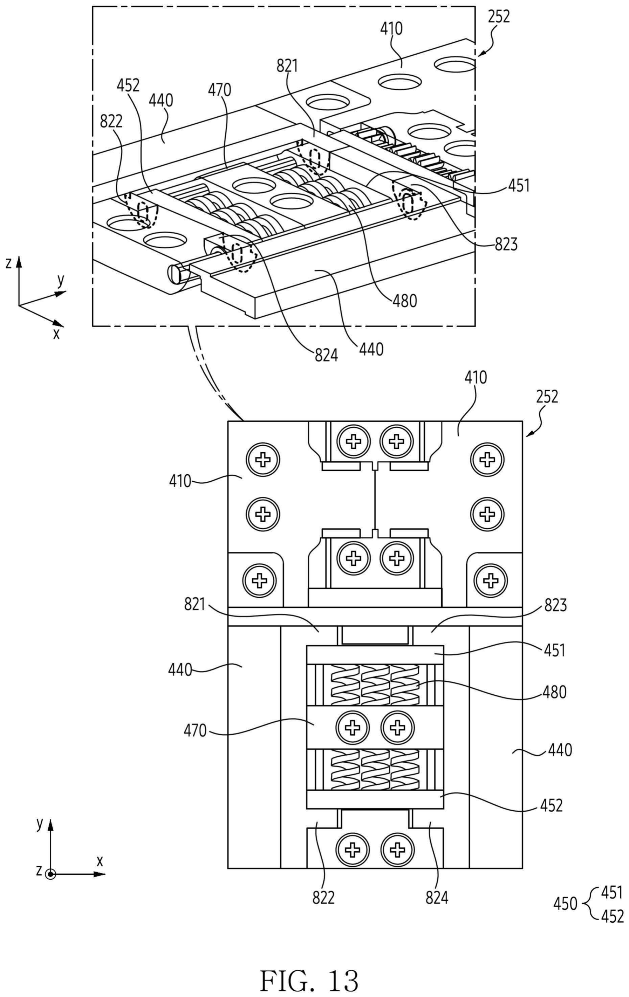

FIG. 13 illustrates a portion of a second hinge assembly.

Referring to FIG. 13, a second hinge assembly 252 may include at least two second elastic members 480. For example, the at least two second elastic members 480 may include six springs, but it is not limited thereto.

For example, the at least two second elastic members 480 may be disposed between a friction body 450 and a holder 470. For example, the at least two second elastic members 480 may be disposed between a first friction body 451 and the holder 470, and between the holder 470 and a second friction body 452.

For example, the at least two second elastic members 480 may be disposed in a compressed state between the friction body 450 and the holder 470. For example, a distance between the friction body 450 and the holder 470 may be shorter than a length of an original shape of the at least two second elastic members 480. When the at least two second elastic members 480 are disposed between the friction body 450 and the holder 470, the at least two second elastic members 480 may be disposed in a compressed state by the friction body 450 and the holder 470. Since the at least two second elastic members 480 are disposed in the compressed state, a restoring force of the at least two second elastic members 480 to be restored to their original shape may act on the second hinge assembly 252.

For example, a first restoring force by at least one second elastic member 480 disposed between the first friction body 451 and the holder 470 may push the first friction body 451 upward (e.g., +y direction). By the first restoring force, the first friction body 451 may be pressed on a surface in contact with a second rotating member 440. For example, the first restoring force may press a first connecting portion 821 and a third connecting portion 823 of the first friction body 451 and the second rotating member 440 face-to-face.

For example, a second restoring force by at least one second elastic member 480 disposed between the second friction body 452 and the holder 470 may push the second friction body 452 downward (e.g., -y direction). By the second restoring force, the second friction body 452 may be pressed on a surface in contact with the second rotating member 440. For example, the second restoring force may press a second connecting portion 822 and a fourth connecting portion 824 of the second friction body 452 and the second rotating member 440 face-to-face.

For example, face-to-face pressing by the first restoring force and the second restoring force may cause a frictional force. For example, the first restoring force may cause a frictional force between the first friction body 451, and the first connecting portion 821 and the third connecting portion 823. For example, the second restoring force may cause a frictional force between the second friction body 452, and the second connecting portion 822 and the fourth connecting portion 824. The frictional forces may maintain a folding angle of the second hinge assembly 252 by acting as a force (e.g., torque) that resists rotation of the second rotating member 440. For example, in a third state, when an external force is removed after a first rotating member 410 and the second rotating member 440 rotate by about 45 degrees by the external force, the second rotating member 440 may not rotate by the frictional forces. Since the second rotating member 440 may be fixed without rotating, the first rotating member 410 and the second rotating member 440 may be maintained in a rotated state by about 45 degrees. Due to the frictional forces, a free-stop or flex mode may be possible.

The exemplary second hinge assembly 252 may provide the free-stop or flex mode without including a CAM mechanism, by using the locking portions (e.g., the first locking portion 920a and/or the second locking portion 920b of FIG. 12C) in a slot 920, a third elastic member (e.g., the third elastic member 1230 of FIG. 12E) disposed in the slot 920, and/or the frictional forces by the at least two second elastic members 480, described above. As the exemplary second hinge assembly 252 does not include the CAM mechanism, it may be possible to implement a relatively thin thickness of a foldable housing 200, facilitate a manufacturing process, and solve weakening of durability due to wear of the CAM mechanism.

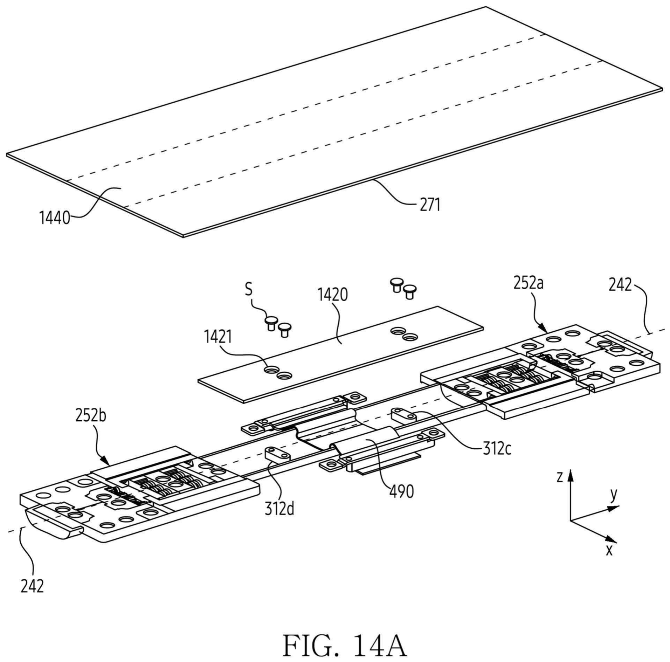

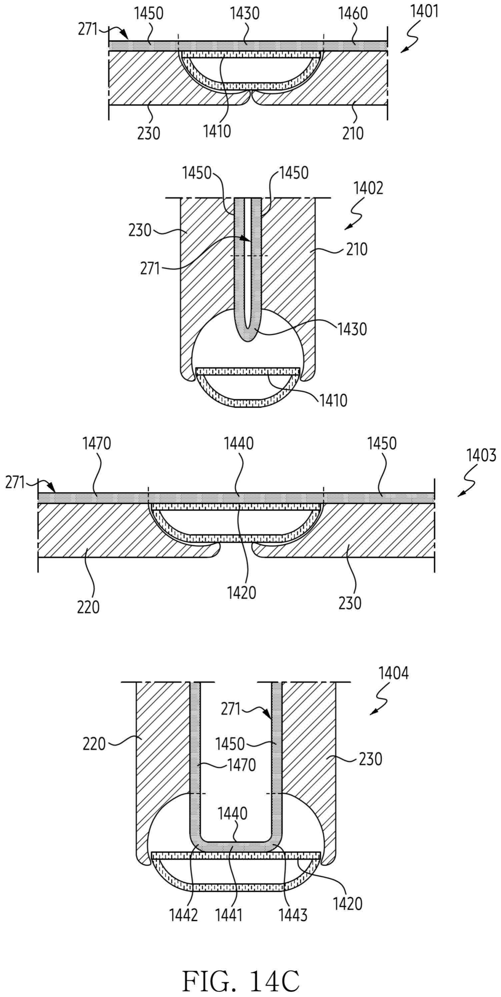

FIG. 14A is an exploded perspective view of a second hinge assembly and an exemplary second support plate. FIG. 14B illustrates a state in which a second support plate is coupled to a second hinge cover. FIG. 14C illustrates a flexible display according to a state of a foldable electronic device according to an embodiment.

Referring to FIGS. 14A and 14B, a foldable electronic device (e.g., the foldable electronic device 101 of FIG. 3A) according to an embodiment may include two second hinge assemblies 252a and 252b. For example, the two second hinge assemblies 252a and 252b may be substantially the same as the second hinge assemblies 252a and 252b described above. For example, the two second hinge assemblies 252a and 252b) may be symmetrically disposed between a second housing part (e.g., the second housing part 220 of FIG. 3A) and a third housing part (e.g., the third housing part 230 of FIG. 3A). For example, the two second hinge assemblies 252a and 252b may be disposed symmetrically with respect to an x-axis. For example, the two second hinge assemblies 252a and 252b may be spaced apart from each other along an extension direction (e.g., y-axis direction) of a second folding axis 242. For example, a flexible printed circuit board 490 for electrically connecting a printed circuit board disposed in the second housing part 220 and a printed circuit board disposed in the third housing part 230, may be disposed between the two second hinge assemblies 252a and 252b. For example, a portion of the flexible printed circuit board 490 may cross a second hinge cover 312.

The foldable electronic device 101 according to an embodiment may include a second support plate 1420. For example, the second support plate 1420 may be disposed between the two second hinge assemblies 252a and 252b. For example, the second support plate 1420 may be coupled to the second hinge cover 312. For example, the second support plate 1420 may include at least one through hole 1421 into which a screw S may be inserted. For example, the second hinge cover 312 may include coupling portions 312c and 312d to which the screw S may be coupled. For example, the second support plate 1420 may be disposed above (e.g., +z direction) the second hinge cover 312, and the screw S may pass through the at least one through hole 1421 to be coupled to the coupling portions 312c and 312d. For example, the second support plate 1420 may overlap the portion of the flexible printed circuit board 490 across the second hinge cover 312.

For example, the second support plate 1420 may support a portion of the flexible display 271. For example, the flexible display 271 may include a second bending portion 1440 that is folded or unfolded by the second housing part 220 and the third housing part 230. The second bending portion 1440 may be referred to as a deformable area of the flexible display 271. The second bending portion 1440 may be flat in a first state or a second state, and at least partially curved in a third state. For example, the second bending portion 1440 may be disposed above (e.g., the +z direction) the second hinge assembly 252. For example, the second support plate 1420 may at least partially support the second bending portion 1440 that is disposed above the second hinge assembly 252 and is deformed based on a state of a foldable housing 200. For example, the second support plate 1420 may be at least partially contact in the second bending portion 1440. For example, by supporting the second bending portion 1440, the second support plate 1420 may maintain a curved shape of the second bending portion 1440 constant and reduce damage to the second bending portion 1440.

Referring to FIG. 14C, the flexible display 271 may be partially deformed according to a state of the foldable electronic device 101.

1401 and 1402 of FIG. 14C illustrate the flexible display 271 according to a rotational operation of a first housing part 210 and the third housing part 230. For example, 1401 of FIG. 14C illustrates the flexible display 271 in the first state. For example, 1402 of FIG. 14C illustrates the flexible display 271 in the second state or the third state. For example, a first bending portion 1430 of the flexible display 271 may be flat in the first state. For example, as the foldable electronic device 101 is switched from the first state to the second state or the third state, the first bending portion 1430 may be at least partially curved. The first bending portion 1430 may be referred to as a deformable area of the flexible display 271. For example, an area 1450 of the flexible display 271 disposed on the third housing part 230 and an area 1460 of the flexible display 271 disposed on the first housing part 210 may be flat in the second state or the third state, and the first bending portion 1430 between the areas 1450 and 1460 may be at least partially curved in the second state or the third state. The first bending portion 1430 curved according to the state of the foldable electronic device 101 may not be attached to the third housing part 230 and the first housing part 210.

For example, in the first state, a first support plate 1410 may support the first bending portion 1430. For example, in the first state, the first support plate 1410 may support the flat first bending portion 1430. In the first state, in a case that an external force is applied to the first bending portion 1430 or a hard object falls, the first support plate 1410 supports the first bending portion 1430, thereby reducing damage to the first bending portion 1430 due to the external force or the object. For example, in the second state or the third state, the first support plate 1410 may be spaced apart from the curved second bending portion 1440. For example, in the second state or the third state, the first support plate 1410 may be moved to a position where the first bending portion 1430 is not supported.

1403 and 1404 of FIG. 14C illustrate the flexible display 271 according to a rotational operation of the third housing part 230 and the second housing part 220. For example, 1403 of FIG. 14C illustrates the flexible display 271 in the first state or the second state. For example, 1404 of FIG. 14C illustrates the flexible display 271 in the third state. For example, the second bending portion 1440 of the flexible display 271 may be flat in the first state or the second state. For example, as the foldable electronic device 101 is switched from the first state or the second state to the third state, the second bending portion 1440 may be at least partially curved. For example, the area 1450 of the flexible display 271 disposed on the third housing part 230 and an area 1470 of the flexible display 271 disposed on the second housing part 220 may be flat in the third state, and the second bending portion 1440 between the areas 1450 and 1470 may be at least partially curved in the third state. For example, in a folded state of the foldable electronic device 101, the second bending portion 1440 may include a flat portion 1441 in contact with the second support plate 1420, and a curved portion 1442 or 1443 spaced apart from the second support plate 1420. The second bending portion 1440 curved according to the state of the foldable electronic device 101 may not be attached to the third housing part 230 and the second housing part 220. For example, the second bending portion 1440 may be wider than the first bending portion 1430.

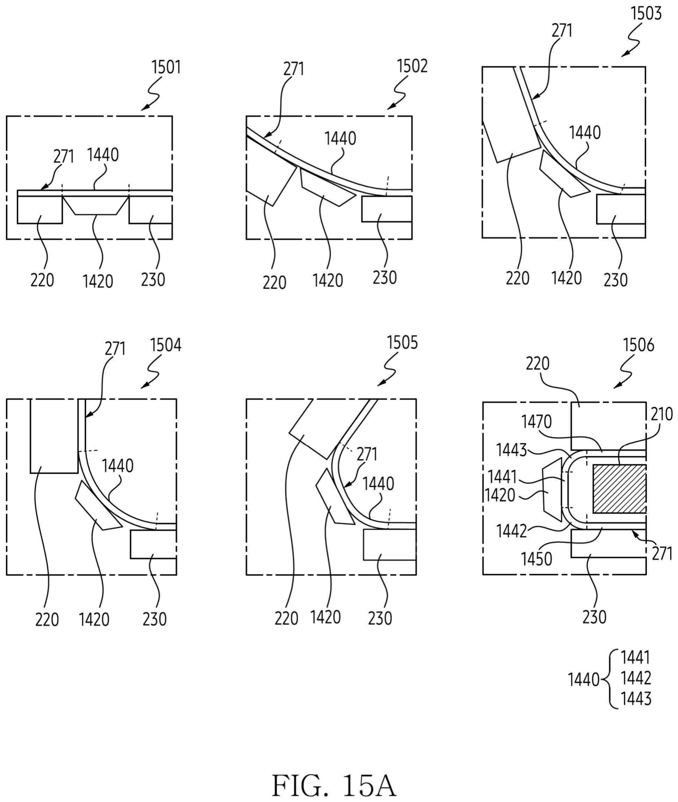

For example, the second support plate 1420 may at least partially support the second bending portion 1440. For example, in the first state or the second state, the second support plate 1420 may support the flat second bending portion 1440. In the first state of the second state, in a case that an external force is applied to the second bending portion 1440 or a hard object falls, the second support plate 1420 supports the second bending portion 1440, thereby reducing damage to the second bending portion 1440 due to the external force or the object. For example, in the third state, the second support plate 1420 may support a portion (e.g., the first portion 1441 of FIG. 15A) of the curved second bending portion 1440. For example, in a case that there is no second support plate 1420 in the third state, the second bending portion 1440 may protrude toward the second hinge cover 312. In a case that the second bending portion 1440 protrudes, as a curvature of the second bending portion 1440 increases, damage to a plurality of pixels in the second bending portion 1440 may be caused. For example, the second support plate 1420 may reduce the damage to the second bending portion 1440 by supporting the second bending portion 1440.

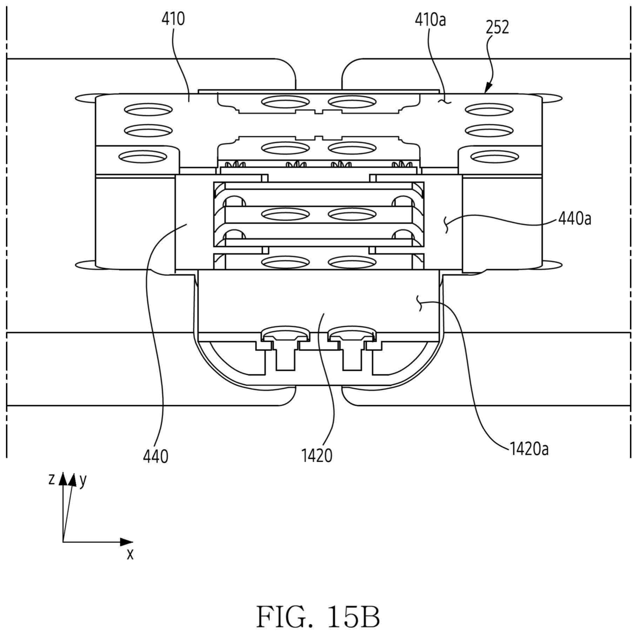

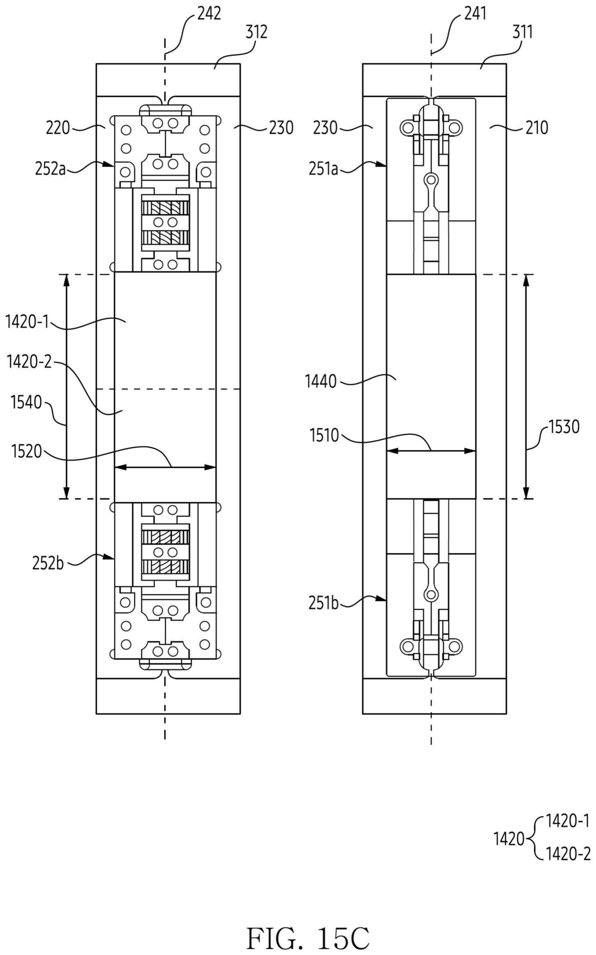

FIG. 15A schematically illustrates a deformation process of a flexible display according to an operation of a second hinge assembly. FIG. 15B illustrates a second hinge assembly and a second support plate. FIG. 15C illustrates a first hinge assembly and a second hinge assembly.

Referring to FIG. 15A, when a third housing part 230 and a second housing part 220 rotate, a second bending portion 1440 of a flexible display 271 may be at least partially curved.

For example, a second support plate 1420 may move by being linked to a second set of gears (e.g., the second set of gears 330 of FIG. 4A). For example, when the second set of gears 330 is operated by rotation of the third housing part 230 and/or the second housing part 220, the second support plate 1420 may move by linked to the second set of gears 330. For example, according to a rotational angle of the third housing part 230 and the second housing part 220, a position of the second support plate 1420 may be different.

For example, 1501 of FIG. 15A illustrates a portion of the flexible display 271 in a first state or a second state. Referring to 1501 of FIG. 15A, in the first state or the second state, the portion of the flexible display 271 supported by the third housing part 230 and the second housing part 220 may be flat. In the first state or the second state, the second bending portion 1440 may be flat. For example, the second support plate 1420 may support the flat second bending portion 1440.

1502 of FIG. 15A illustrates a state in which the third housing part 230 and the second housing part 220 rotate by about 15 degrees. 1503 of FIG. 15A illustrates a state in which the third housing part 230 and the second housing part 220 rotate by about 30 degrees. Referring to 1502 and 1503 of FIG. 15A, the second bending portion 1440 may be curved in a state in which the third housing part 230 and the second housing part 220 rotate by about 15 to 30 degrees. For example, when the second bending portion 1440 is curved, it may be curved unevenly without being curved evenly. For example, in the second bending portion 1440, a degree of curvature of a portion close to the third housing part 230 may be greater than a degree of curvature of a portion close to the second housing part 220. For example, the second support plate 1420 may support the unevenly curved second bending portion 1440.

1504 of FIG. 15A illustrates a state in which the third housing part 230 and the second housing part 220 rotate by about 45 degrees. 1505 of FIG. 15A illustrates a state in which the second housing part 220 rotates by about 60 degrees. Referring to 1504 and 1505 of FIG. 15A, the second bending portion 1440 may be unevenly curved in a state in which the third housing part 230 and the second housing part 220 rotate by about 45 to 60 degrees. For example, the second support plate 1420 may support the unevenly curved second bending portion 1440.

1506 of FIG. 15A illustrates a third state in which the third housing part 230 and the second housing part 220 rotate by about 90 degrees from the first state or the second state. For example, in the third state, the second bending portion 1440 may be partially curved. For example, in the third state, the second support plate 1420 may support a portion (e.g., a first portion 1441) of the second bending portion 1440 that is partially curved.

For example, in the third state, the second bending portion 1440 may include the first portion 1441, a second portion 1442, and a third portion 1443. For example, the first portion 1441 may be a portion of the second bending portion 1440 supported by the second support plate 1420. For example, the second portion 1442 may be a portion of the second bending portion 1440 positioned between the first portion 1441 and the area 1450 of the flexible display 271 disposed on the third housing part 230. The second portion 1442 may be at least partially curved in the third state. For example, the third portion 1443 may be a portion of the second bending portion 1440 positioned between the first portion 1441 and the area 1470 of the flexible display 271 disposed on the second housing part 220. The third portion 1443 may be at least partially curved in the third state. For example, in the first state, the first portion 1441, the second portion 1442, and the third portion 1443 may be undistinguished by being disposed substantially flat.

For example, in the third state, the first portion 1441 may be substantially flat. For example, the first portion 1441 may be flat by being supported by the second support plate 1420. For example, in the third state, a distance between the area 1450 of the flexible display 271 disposed on the third housing part 230 and the area 1470 of the flexible display 271 disposed on the second housing part 220 may be greater than a thickness of a first housing part 210. For example, in the third state, a width of the first portion 1441 supported by the second support plate 1420 may be smaller than the thickness of the first housing part 210 positioned between the third housing part 230 and the second housing part 220. For example, since the first housing part 210 should be positioned in a space between the third housing part 230 and the second housing part 220 formed by the first portion 1441, the second portion 1442, and the third portion 1443, the width of the first portion 1441 may be smaller than the thickness of the first housing part 210.

For example, the second portion 1442 and the third portion 1443 may be curved. For example, in the third state, the third housing part 230 and the second housing part 220 may be disposed substantially perpendicular to the first portion 1441. For example, the area 1450 of the flexible display 271 disposed on the third housing part 230 and the area 1470 of the flexible display 271 disposed on the second housing part 220 may be disposed substantially perpendicular to the first portion 1441. For example, the second portion 1442 positioned between the areas 1450 and the first portion 1441 perpendicular to each other may be curved with a constant curvature. For example, the third portion 1443 positioned between the area 1470 and the first portion 1441 perpendicular to each other may be curved with a constant curvature. For example, as the first portion 1441 is flattened by the second support plate 1420, the curvature of the second portion 1442 and the curvature of the third portion 1443 may be constant. Since the curvature of the second portion 1442 and the curvature of the third portion 1443 are constantly formed, a space in which the first housing part 210 may be positioned may be stably formed in the third state.

Similar to the positional movement of the second support plate 1420 illustrated in FIG. 15A, the first support plate 1410 may move by linked to a first set 320 of gears. The first support plate 1410 may move by being linked to the first set of gears 320. For example, when the first set of gears 320 is operated by rotation of the third housing part 230 and/or the first housing part 210, the first support plate 1410 may move by being linked to the first set of gears 320. For example, according to a rotational angle of the third housing part 230 and the first housing part 210, a position of the first support plate 1410 may be different.

Referring to FIG. 15B, an upper surface (e.g., a surface facing a +z direction) 1410a of the second support plate 1420 may form substantially the same plane as an upper surface of a second hinge assembly 252. For example, an upper surface 410a of a first rotating member 410, an upper surface 440a of a second rotating member 440, and the upper surface 1410a of the second support plate 1420 may form substantially the same plane.

For example, a flexible display (e.g., the flexible display 271 of FIG. 15A) may be disposed above (e.g., the +z direction) the second hinge assembly 252 and the second hinge plate. In a case that the upper surface 1420a of the second support plate 1420 and the upper surface of the second hinge assembly 252 (e.g., the upper surface 410a of the first rotating member 410 and the upper surface 440a of the second rotating member 440) are positioned at different heights, deterioration in quality of a screen displayed on the flexible display 271 may be caused by causing unevenness of a surface of the flexible display 271. As the upper surface of the second support plate 1420 and the upper surface of the second hinge assembly 252 form substantially the same plane, the surface of the flexible display 271 may be evenly maintained.

Referring to FIG. 15C, a foldable electronic device 101 according to an embodiment may include two first hinge assemblies 251a and 251b. For example, the two first hinge assemblies 251a and 251b may be symmetrically disposed between the first housing part 210 and the third housing part 230. For example, the two first hinge assemblies 251a and 251b may be disposed symmetrically with respect to an x-axis. For example, the two first hinge assemblies 251a and 251b may be spaced apart from each other along an extension direction (e.g., y-axis direction) of a first folding axis 241.

A foldable electronic device (e.g., the foldable electronic device 101 of FIG. 3A) according to an embodiment may include the first support plate 1410. For example, the first support plate 1410 may be disposed between the two first hinge assemblies 251a and 251b. For example, the first support plate 1410 may be coupled to a first hinge cover 311.

For example, the first support plate 1410 may support a portion of the flexible display 271 in the first state. For example, the flexible display 271 may include a first area (e.g., the first bending portion 1430 of FIG. 14C) that is folded or unfolded by the first housing part 210 and the third housing part 230. The first bending portion 1430 may be flat in the first state and curved in the second state or the third state. For example, the first bending portion 1430 may be disposed above (e.g., the +z direction) a first hinge assembly 251. For example, in the first state, the first support plate 1410 may support the first bending portion 1430 that is disposed above the first hinge assembly 251 and is flat. For example, in the first state, the first support plate 1410 may be at least partially in contact with the first bending portion 1430. For example, by supporting the first bending portion 1430, the first support plate 1410 may reduce damage to the first bending portion 1430 in the first state and improve quality of a screen displayed on the first bending portion 1430.

Referring to FIG. 15C, the first support plate 1410 between the two first hinge assemblies 251a and 251b and the second support plate 1420 between two second hinge assemblies 252a and 252b may have different sizes. For example, a width 1520 of the second support plate 1420 may be wider than a width 1510 of the first support plate 1410. For example, a length 1540 of the second support plate 1420 may be different from a length 1530 of the first support plate 1410. For example, the length 1540 of the second support plate 1420 may be longer than the length 1530 of the first support plate 1410, but it is not limited thereto.

For example, the second support plate 1420 may include a first sub support plate 1420-1 and a second sub support plate 1420-2. For example, the first sub support plate 1420-1 and the second sub support plate 1420-2 may be configured to move by being linked to the second set of gears 330. For example, the first sub support plate 1420-1 and the second sub support plate 1420-2 may support the second bending portion 1440 by forming substantially the same plane. For example, the first sub support plate 1420-1 and the second sub support plate 1420-2 may support the second bending portion 1440 by moving in the same direction by being linked to the second set of gears 330.

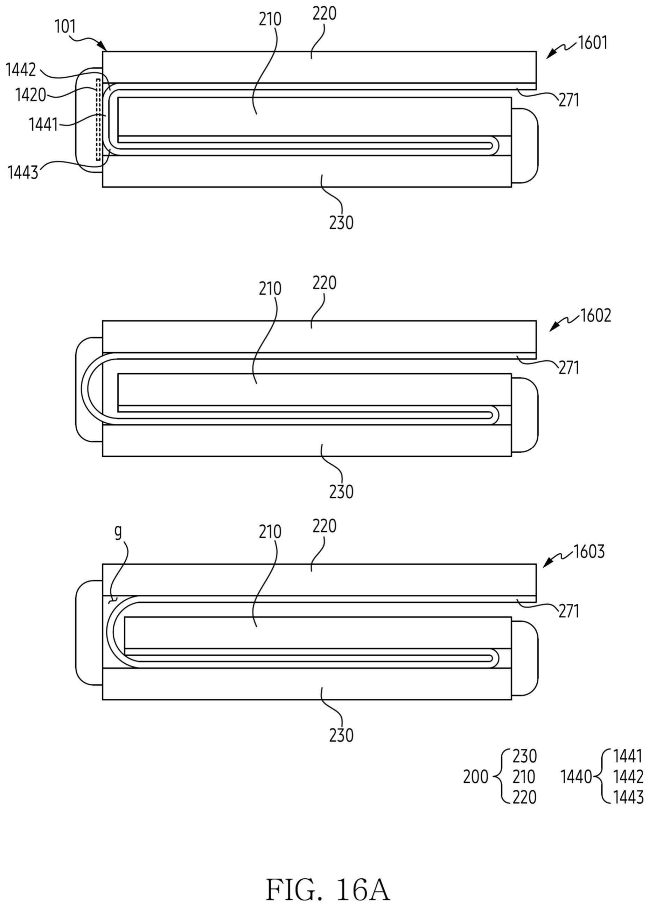

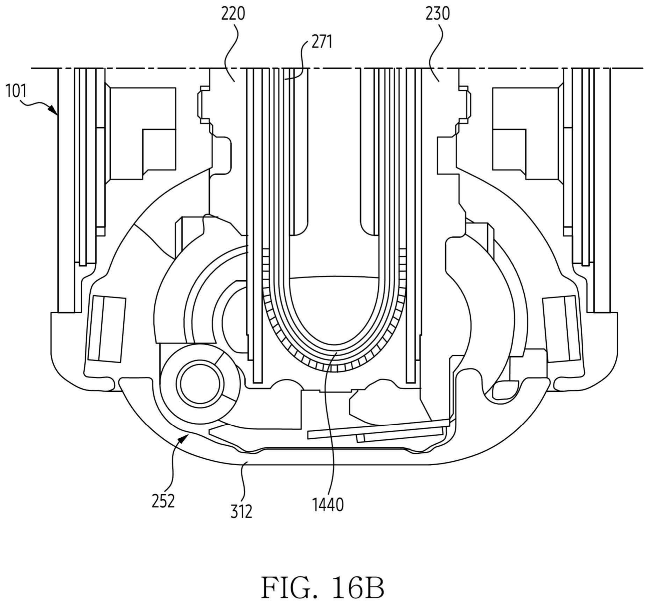

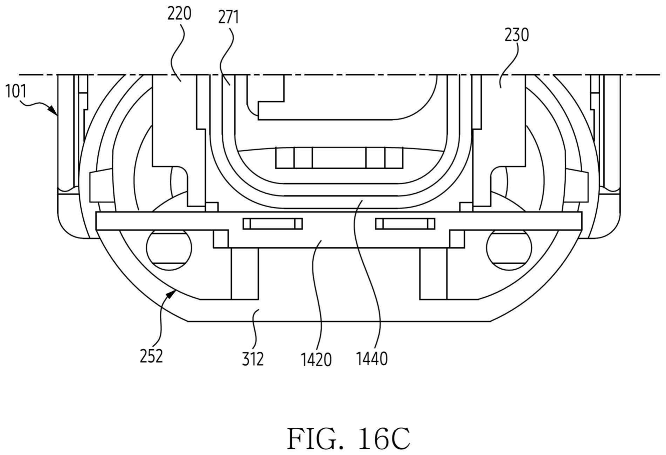

FIG. 16A is a view for comparing a foldable electronic device including a second support plate and a foldable electronic device not including the second support plate. FIGS. 16B and 16C illustrate a portion of a foldable electronic device including a second support plate.

For example, 1601 of FIG. 16A schematically illustrates a foldable electronic device 101 including a second support plate 1420. For example, as the second support plate 1420 supports a second bending portion 1440, the second bending portion 1440 may include a second portion 1442 and a third portion 1443 having a relatively small curvature. By the second portion 1442 and the third portion 1443 having a relatively small curvature, the second bending portion 1440 may provide a space in which a first housing part 210 may be positioned between a second housing part 220 and a third housing part 230. For example, a width of the first portion 1441 supported by the second support plate 1420 may be smaller than a thickness of the first housing part 210. For example, since the space in which the first housing part 210 may be positioned may be formed, it may be possible to secure a thickness of a foldable housing 200. For example, in a case that the thickness of the foldable housing 200 is limited, a size of electronic components (e.g., a battery) disposed in the foldable housing 200 may be limited. For example, since the space in which the first housing part 210 may be positioned may be provided by the second support plate 1420, the thickness of the foldable housing 200 and the size of the electronic components may be secured. For example, since a gap between a flexible display 271 and the foldable housing 200 may be reduced by the second portion 1442 and the third portion 1443 having a relatively small curvature, an inflow of a foreign substance from the outside may be reduced.

For example, 1602 of FIG. 16A schematically illustrates a foldable electronic device without the second support plate 1420. For example, since the second bending portion 1440 is not supported by the second support plate 1420, the second bending portion 1440 may protrude toward a second hinge assembly 252. Since friction between components of the second hinge assembly 252 and the second bending portion 1440 may be caused as the second bending portion 1440 protrudes toward the second hinge assembly 252, damage to the flexible display 271 may occur.

For example, 1603 of FIG. 16A schematically illustrates a foldable electronic device without the second support plate 1420. For example, in a case that there is no second support plate 1420, the second bending portion 1440 may be curved having a relatively large curvature. As interference between the first housing part 210 and the flexible display 271 may be caused by the second bending portion 1440 having a relatively large curvature, damage to the flexible display 271 may occur. Due to the relatively large second bending portion 1440, an inflow of a foreign substance into a gap g between the flexible display 271 and the foldable housing 200 may be caused.

Referring to FIG. 16B, in a case of an electronic device 101 without the second support plate 1420, the second bending portion 1440 may protrude toward the second hinge cover 312 in a third state in which the second housing part 220 and the third housing part 230 are folded. As described above, as the second bending portion 1440 protrudes, due to interference between the second hinge assembly 252 and the second bending portion 1440, damage to the flexible display 271 may be caused. As the second bending portion 1440 protrudes, since a curvature of the second bending portion 1440 is relatively large, damage to the flexible display 271 may be caused.

Referring to FIG. 16C, in a case of the foldable electronic device 101 including the second support plate 1420, the second bending portion 1440 may be supported by the second support plate 1420 in the third state in which the second housing part 220 and the third housing part 230 are folded (e.g., a folded state of the foldable electronic device 101). In the third state, the second bending portion 1440 may form a relatively small curvature without protruding by the second support plate 1420. As described above, since the second bending portion 1440 is supported by the second support plate 1420, interference between the second hinge assembly 252 and the second bending portion 1440 may be reduced. As the curvature of the second curved portion 1440 is reduced, damage to the flexible display 271 may be reduced.

FIG. 17 illustrates a process in which a foldable electronic device is deformed from an unfolded state to a folded state according to an embodiment.

Referring to FIG. 17, a foldable housing 1701 (e.g., the foldable housing 200 of FIG. 2) may be configured to provide a first state, a second state, and a third state. The first state may be referred to as an unfolded state of a foldable electronic device 101. The third state may be referred to as a folded state of the foldable electronic device 101. The second state may be referred to as an intermediate state between the first state and the second state.

A state 1700a of FIG. 17 indicates the first state. In the first state, a first housing part 1710 (e.g., corresponding to the second housing part 220 of FIG. 2), a second housing part 1720 (e.g., corresponding to the third housing part 230 of FIG. 2), and a third housing part 1730 (e.g., corresponding to the first housing part 210 of FIG. 2) may be disposed on substantially the same plane. For example, in the first state, a first angle between a first display area 1761 and a second display area 1762, and a second angle between the second display area 1762 and a third display area 1763 may be substantially a straight angle (e.g., about 180 degrees). The first state may be referred to as an opened state, a flat state, and/or an outspread state in terms of the first housing part 1710, the second housing part 1720, and the third housing part 1730 being fully unfolded. In the first state, a flexible display 1760 (e.g., the flexible display 271 of FIG. 2) may be substantially flat.

A state 1700b of FIG. 17 indicates the second state. In the second state, the first angle may substantially maintain a straight angle, and the second angle may be substantially 0 degrees. For example, as the third housing part 1730 rotates with respect to the second housing part 1720, the foldable electronic device 101 may change from the first state to the second state. For example, when a user applies an external force to fold the third housing part 1730, the third housing part 1730 may rotate counterclockwise with respect to the first housing part 1710 through a second hinge assembly 1750 (e.g., corresponding to the first hinge assembly 251 of FIG. 3B). The second hinge assembly 1750 may rotatably connect the second housing part 1720 and the third housing part 1730 so that the third housing part 1730 is folded inward with respect to the second housing part 1720. The second state may be referred to as a semi-folded state, a sub-folded state (or a sub-fold state), a first folded state, an intermediate state, and/or a concave state in terms of a portion of the foldable housing 1701 being folded.

A state 1700c of FIG. 17 indicates the third state. In the third state, the first angle and the second angle may be substantially 0 degrees. For example, in the second state, as the first housing part 1710 rotates with respect to the second housing part 1720, the foldable electronic device 101 may change from the second state to the third state. For example, when a user applies an external force to fold the first housing part 1710, the first housing part 1710 may rotate clockwise with respect to the second housing part 1720 through a first hinge assembly 1740 (e.g., corresponding to the second hinge assembly 252 of FIG. 3B). The first hinge assembly 1740 may rotatably connect the first housing part 1710 and the second housing part 1720 so that the first housing part 1710 is folded inward with respect to the second housing part 1720. The third state may be referred to as a second folded state, a folded state and/or a closed state in terms of the foldable housing 1701 being completely folded. For example, the second folded state may be formed as the first housing part 1710 is folded, in the first folded state.

According to an embodiment, the foldable housing 1701 may be referred to as an in-fold structure in terms of the first housing part 1710 and the third housing part 1730 being folded inward. For example, the first folded state and the second folded state may be a state in which the foldable housing 1701 is folded inward with respect to the flexible display 1760. In the folded third state of the foldable housing 1701, the third housing part 1730 may be positioned between the first housing part 1710 and the second housing part 1720. For example, referring to the state 1700c of FIG. 17, the first housing part 1710, the third housing part 1730, and the second housing part 1720 may be positioned sequentially in a direction (e.g., -z direction) from a top to a bottom.

The foldable electronic device 101 may be used in the first state in order to use the flexible display 1760 of a large screen. The foldable electronic device 101 may be switched from the first state to the third state so that it may be easily carried by the user. For example, the foldable housing 1701 may be switched from the first state to the third state via the second state. For example, in the first state, the third housing part 1730 may be first folded inward with respect to the second housing part 1720 (the second state), and then the first housing part 1710 may be folded inward with respect to the second housing part 1720 (the third state).

For example, in order to provide the third state, the first hinge assembly 1740 and the second hinge assembly 1750 may be different from each other. In a case that a size of the first hinge assembly 1740 is substantially the same as or similar to a size of the second hinge assembly 1750, when the first housing part 1710 and the second housing part 1720 are folded, a space in which the third housing part 1730 is to be positioned may not be formed. In the third state, in order to provide a space in which the third housing part 1730 may be positioned between the first housing part 1710 and the second housing part 1720, the size of the first hinge assembly 1740 may be larger than the size of the second hinge assembly 1750. The size of the first hinge assembly 1740 may be larger than the size of the second hinge assembly 1750. Due to a difference in the size, a size of a first hinge cover 1771 (e.g., the second hinge cover 312 of FIG. 3B) may be different from a size of a second hinge cover 1772 (e.g., the first hinge cover 311 of FIG. 3B). For example, a width (e.g., a fourth width W4) of the first hinge cover 1771 may be wider than a width (e.g., the fifth width W5 of FIG. 3B) of the second hinge cover 1772. In terms of having different widths, the first hinge assembly 1740 may be referred to as a wide hinge, and the second hinge assembly 1750 may be referred to as a narrow hinge.

As described above, the foldable electronic device 101 according to an embodiment may include the foldable housing 1701 in a method of being folded inward. The foldable housing 1701 in the unfolded state may be folded in an order in which the third housing part 1730 is folded inward with respect to the second housing part 1720, and then the first housing part 1710 is folded inward with respect to the second housing part 1720. In the third state, in order for the third housing part 1730 to be positioned between the first housing part 1710 and the second housing part 1720, a space in which the third housing part 1730 may be positioned between the first housing part 1710 and the second housing part 1720 may be required.

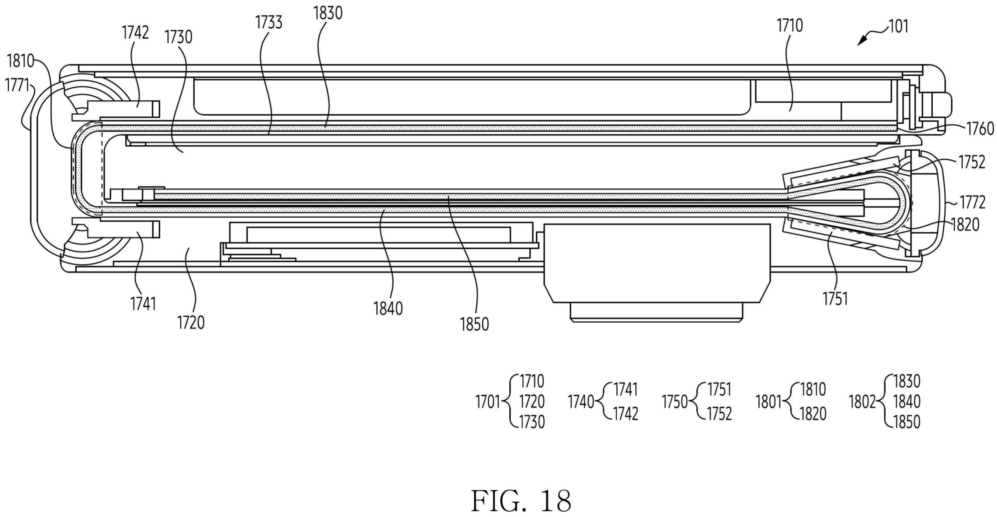

FIG. 18 is a cross-sectional view of a foldable electronic device according to an embodiment.

Referring to FIG. 18, a flexible display 1760 may include partially curved portions in a folded state of a foldable electronic device 101. The flexible display 1760 being partially curved may be referred to such that a portion of the flexible display 1760 is deformed and a remaining portion of the flexible display 1760 is not deformed.

According to an embodiment, as the foldable electronic device 101 is changed from an unfolded state to the folded state, the flexible display 1760 may be divided into a deformed area 1801 that may be deformed and an undeformed area 1802 that is not deformed. The deformed area 1801 and the undeformed area 1802 may be divided by whether a shape of the flexible display 1760 is deformed according to a state of a foldable housing 1701.

The deformed area 1801 may be referred to as an area of the flexible display 1760 that is deformable as the foldable housing 1701 is folded or unfolded. For example, the flexible display 1760 may include a structure (e.g., a lattice structure) capable of being deformed by folding or unfolding the deformed area 1801. The deformed area 1801 may be at least partially curved by the foldable housing 1701 and/or a hinge assembly (e.g., a first hinge assembly 1740 or a second hinge assembly 1750).

The deformed area 1801 being at least partially curved may be referred to such that a portion of the deformed area 1801 may form a curved surface having a curvature, and another portion of the deformed area 1801 may form a flat plane. For example, in the folded state of the foldable electronic device 101, a portion of the deformed area 1801 may form a curved surface having a curvature, and another portion of the deformed area 1801 may form a flat plane. The deformed area 1801 may be a portion of the flexible display 1760 that is deformed by a folding operation of the foldable housing 1701 by including a boundary between a first display area (e.g., the first display area 1761 of FIG. 17) and a second display area (e.g., the second display area 1762 of FIG. 17) or a boundary between the second display area 1762 and a third display area (e.g., the third display area 1763 of FIG. 17).

The undeformed area 1802 may be referred to as a remaining area of the flexible display 1760 that is different from the deformed area 1801. The undeformed area 1802 may maintain a fixed shape by being attached to the foldable housing 1701. The undeformed area 1802 may be substantially flat, independent of the state of the foldable electronic device 101. For example, in all of the unfolded state, the folded state, and/or the intermediate state of the foldable electronic device 101, the undeformed area 1802 may be substantially flat without being curved.

According to an embodiment, the deformed area 1801 may include a first deformed area 1810 and a second deformed area 1820. The first deformed area 1810 may correspond to the first bending portion 1430 of FIG. 14C. The second deformed area 1820 may correspond to the second bending portion 1440 of FIG. 14C. In the folded state of the foldable electronic device 101, the first deformed area 1810 and the second deformed area 1820 may be formed as a portion of the flexible display 1760 is folded. For example, the first deformed area 1810 may be formed between the first display area 1761 and the second display area 1762. A portion of the first deformed area 1810 may be formed as the first display area 1761 is partially deformed, and a remaining portion of the first deformed area 1810 may be formed as the second display area 1762 is partially deformed. For example, the second deformed area 1820 may be formed between the second display area 1762 and the third display area 1763. A portion of the second deformed area 1820 may be formed as the second display area 1762 is partially deformed, and a remaining portion of the second deformed area 1820 may be formed as the third display area 1763 is partially deformed.

For example, the undeformed area 1802, different from the first deformed area 1810 and the second deformed area 1820 may be divided into a first area 1830, a second area 1840, and a third area 1850. For example, the first area 1830, which is an undeformed area in the first display area 1761, may be in contact with the first deformed area 1810. For example, the second area 1840, which is an undeformed area in the second display area 1762, may be positioned between the first deformed area 1810 and the second deformed area 1820. For example, the third area 1850, which is an undeformed area in the third display area 1763, may be in contact with the second deformed area 1820. For example, in the folded state of the foldable electronic device 101, the first deformed area 1810 may be positioned between the first area 1830 and the second area 1840, and the second deformed area 1820 may be positioned between the second area 1840 and the third area 1850.

When the foldable electronic device 101 is changed from the unfolded state to the folded state, since a third housing part 1730 is first folded inward, the first area 1830 may face a rear surface 1733 of the third housing part 1730. Since the third housing part 1730 is folded inward after the third housing part 1730 is folded, the rear surface 1733 of the third housing part 1730 may be referred to as a surface of the third housing part 1730 opposite a front surface on which the third display area 1763 is disposed. According to an embodiment, in the folded state of the foldable electronic device 101, the second area 1840 may face the third area 1850.

Since the first area 1830 faces the rear surface 1733 of the third housing part 1730, and the second area 1840 faces the third area 1850, a distance between the areas 1830, 1840, and 1850 in the folded state of the foldable electronic device 101 may be different. According to an embodiment, in the folded state, a distance between the first area 1830 and the third area 1850 may be greater than a distance between the second area 1840 and the third area 1850.

Since the third housing part 1730 is positioned between the first area 1830 and the third area 1850, the distance between the first area 1830 and the third area 1850 may be designed to be more than a predetermined distance so that the third housing part 1730 may be positioned between a first housing part 1710 and a second housing part 1720. According to an embodiment, the spacing between the first area 1830 and the third area 1850 may be greater than a thickness of the third housing part 1730.

For example, in a case that the distance is less than or equal to the thickness of the third housing part 1730, when the first housing part 1710 is folded inward (e.g., the state 1700b of FIG. 17) in a state in which the third housing part 1730 is first folded, the first housing part 1710 may not be fully folded or damage to the flexible display 1760 may be caused. As the distance is formed larger than the thickness of the third housing part 1730, the first housing part 1710 may be fully folded, and the third housing part 1730 may be positioned between the first housing part 1710 and the second housing part 1720 in the folded state of the foldable electronic device 101. For example, in a case that the foldable electronic device 101 includes a frame, a distance between the first area 1830 and the third area 1850 may be larger than a sum of the thickness of the third housing part 1730 and a thickness of the frame.

In order for the third housing part 1730 to be positioned between the first housing part 1710 and the second housing part 1720 in the folded state of the foldable electronic device 101, a width of the first deformed area 1810 may be larger than the thickness of the third housing part 1730. For example, in a case that the width of the first deformed area 1810 is smaller than the thickness of the third housing part 1730, the foldable housing 1701 may not be fully folded.

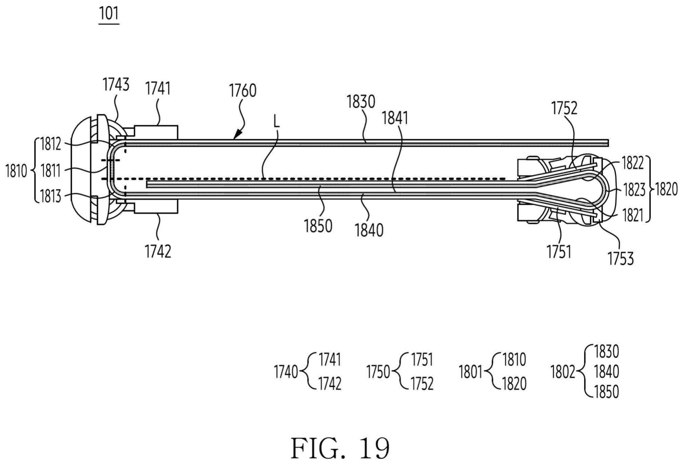

FIG. 19 illustrates a flexible display, a first hinge assembly, and a second hinge assembly in a folded state.

Referring to FIG. 19, in a folded state of a foldable housing (e.g., the foldable housing 1701 of FIG. 17), a flexible display 1760 may be divided into a deformed area 1801 and a undeformed area 1802. As described above, the division between the deformed area 1801 and the undeformed area 1802 may be divided by whether a shape is deformed. For example, the deformed area 1801 may be an area of the flexible display 1760 that is at least partially curved as a foldable electronic device 101 changes from an unfolded state to the folded state. For example, the undeformed area 1802 may be an area of the flexible display 1760 that is substantially flat, independent of a state of the foldable housing 1701. For example, the deformed area 1801 may include a first deformed area 1810 and a second deformed area 1820. For example, the undeformed area 1802 may include a first area 1830, a second area 1840, and a third area 1850.

For example, the first deformed area 1810 may be formed by A first hinge assembly 1740. According to an embodiment, the first hinge assembly 1740 may include first hinge plates (e.g., a first plate 1741 and a second plate 1742) and a first hinge bracket 1743. Each of the first plate 1741 and the second plate 1742 may be rotatably connected to the first hinge bracket 1743. The first plate 1741 may be coupled to a first housing part 1710. The second plate 1742 may be coupled to a second housing part 1720. For example, when an external force causing rotation of the first housing part 1710 is applied, the first plate 1741 and the second plate 1742 may rotate by the external force. Although not illustrated, the first hinge assembly 1740 may include gears (e.g., the second set of gears 330 of FIG. 7B) that link a rotational operation of the first plate 1741 and the second plate 1742. For example, as the first plate 1741 rotates, a portion of a first display area 1761 may be curved, and as the second plate 1742 rotates, a portion of a second display area 1762 may be curved. The first deformed area 1810 may be formed by the portion of the first display area 1761 and the portion of the second display area 1762. The first deformed area 1810 may be curved by the first hinge plates (e.g., the first plate 1741 and the second plate 1742).

For example, the second deformed area 1820 may be formed by a second hinge assembly 1750. According to an embodiment, the second hinge assembly 1750 may include second hinge plates (e.g., third plate 1751 and fourth plate 1752) and a second hinge bracket 1753. Each of the third plate 1751 and the fourth plate 1752 may be rotatably connected to the second hinge bracket 1753. The third plate 1751 may be coupled to the second housing part 1720. The fourth plate 1752 may be coupled to the third housing part 1730. For example, when an external force causing rotation of the third housing part 1730 is applied, the third plate 1751 and the fourth plate 1752 may rotate by the external force. For example, as the third plate 1751 rotates, another portion of the second display area 1762 may be curved, and as the fourth plate 1752 rotates, a portion of the third display area 1763 may be curved. The second deformed area 1820 may be formed by the other portion of the second display area 1762 and the portion of the third display area 1763. The second deformed area 1820 may be curved by the second plates (e.g., the third plate 1751 and the fourth plate 1752).

Since the first deformed area 1810 is deformed (e.g., curved) by the first hinge assembly 1740, a shape of the first deformed area 1810 may be determined based on a state of the first hinge assembly 1740 in the folded state. According to an embodiment, the first deformed area 1810 may include a first curved portion 1812, a second curved portion 1813, and a first flat portion 1811. The first flat portion 1811 may correspond to the flat portion 1441 of FIG. 15A. The first curved portion 1812 and the second curved portion 1813 may correspond to the curved portion 1442 or 1443 of FIG. 15A.

For example, the first curved portion 1812 may be formed as the first display area 1761 is partially curved. For example, the first curved portion 1812 may be a portion curved to have a curvature (e.g., a first maximum curvature) in a portion of the first display area 1761 curved by the first plate 1741.

For example, the second curved portion 1813 may be formed as the second display area 1762 is partially curved. For example, the second curved portion 1813 may be a portion curved to have a curvature (e.g., a second maximum curvature) in a portion of the second display area 1762 curved by the second plate 1742. According to an embodiment, the first maximum curvature of the first curved portion 1812 may correspond to the second maximum curvature of the second curved portion 1813. In the present disclosure, the "maximum curvature" may be referred to as a curvature of a point having the largest curvature among curvatures in a curved portion (e.g., the first curved portion 1812, the second curved portion 1813, and/or a third curved portion 423). For example, in a case that the curved portion is curved to have a constant curvature, the curvature in the curved portion may be substantially the same as the maximum curvature. For example, in a case that the curved portion is curved to have an inconsistent curvature, a point having the maximum curvature may be formed in the curved portion.

For example, the first curved portion 1812 and the second curved portion 1813 may be formed by a rotational operation of the first plate 1741 and the second plate 1742. Since the rotational operation of the first plate 1741 and the rotational operation of the second plate 1742 are linked by gears, the first curved portion 1812 and the second curved portion 1813 may be formed in substantially the same shape.

According to an embodiment, the first maximum curvature of the first curved portion 1812 and the second maximum curvature of the second curved portion 1813, in which the flexible display 1760 is deformed, may be set in consideration of marketability of the flexible display 1760. For example, in a case that the first maximum curvature and the second maximum curvature is increased, an total width of the flexible display 1760 may be reduced. In a case that the total width of the flexible display 1760 is reduced, a size of a display area for providing visual information may be reduced. The first curved portion 1812 and the second curved portion 1813 may have a maximum curvature less than or equal to about 1.5R so as to provide a large screen using the compact foldable housing 1701. For example, the first maximum curvature and/or the second maximum curvature may be less than or equal to about 1.5R. For example, the first maximum curvature and the second maximum curvature may be the same as or similar to a limit curvature of the flexible display 1760.

The first flat portion 1811 may be positioned between the first curved portion 1812 and the second curved portion 1813. According to an embodiment, the first flat portion 1811 may be substantially flat.

According to an embodiment, for a maximum curvature in which the first maximum curvature and the second maximum curvature are less than or equal to about 1.5R, the first flat portion 1811 may be spaced apart from the first area 1830 and the second area 1840 by an inner diameter corresponding to the first maximum curvature and the second maximum curvature or more. For example, on a boundary between the first flat portion 1811 and the second curved portion 1813, an imaginary line L extending in a direction perpendicular to the first flat portion 1811 may be positioned above a surface 1841 (e.g., a front surface) of the second area 1840. As described above, in order for the first maximum curvature and/or the second maximum curvature to be less than or equal to about 1.5R, a distance between the virtual line L and the surface 1841 of the second area 1840 may be greater than or equal to about 1.5 mm, which is the inner diameter corresponding to the first maximum curvature and/or the second maximum curvature. In a case that the distance is less than about 1.5 mm, since the first maximum curvature and/or the second maximum curvature is greater than about 1.5R, the size of the display area of the flexible display 1760 may be reduced. According to an embodiment, since the virtual line L is positioned above the surface 1841 of the second area 1840, and the distance is formed to be greater than or equal to about 1.5 mm, the first maximum curvature and/or the second maximum curvature may be less than or equal to about 1.5R.

According to an embodiment, since the first flat portion 1811 is formed between the first curved portion 1812 and the second curved portion 1813, a length of the first flat portion 1811 may be smaller than the thickness of the third housing part 1730 positioned between the first area 1830 and the third area 1850.

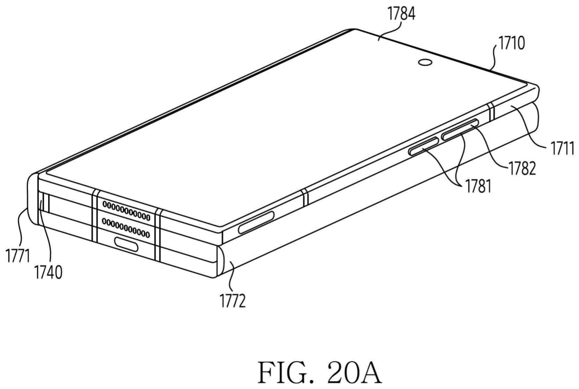

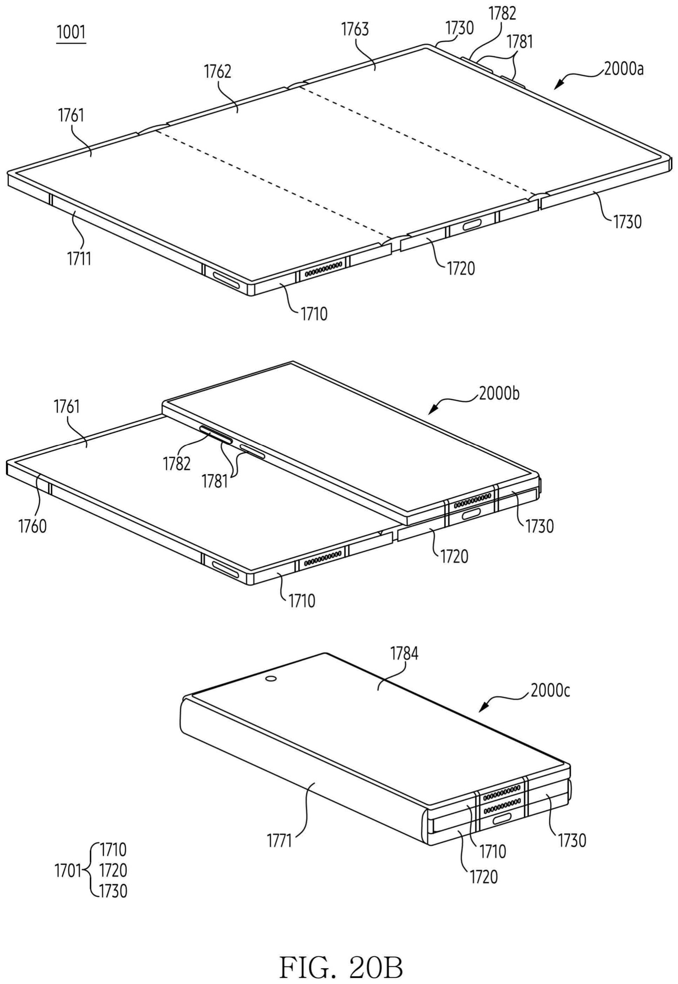

FIG. 20A is a perspective view of a foldable electronic device according to an embodiment. FIG. 20B illustrates a foldable electronic device according to a comparative example.

Referring to FIG. 20A, a foldable electronic device 101 may include a key button 1781 and/or a fingerprint recognition unit 1782. The key button 1781 may be used to receive a user input. For example, the foldable electronic device 101 may be in an inactive state. For example, the inactive state, which is a state in which a power management integrated circuit of the foldable electronic device 101 ceases to provide power, may be referred to as a turn-off state that requires booting to switch to an active state. The inactive state may be referred to as an idle state, a standby state, or a low power state. A user may press the key button 1781 to switch the foldable electronic device 101 from the inactive state to the active state. A processor may be configured to switch the foldable electronic device 101 from the inactive state to the active state based on identifying a user input to the key button 1781. For example, as the foldable electronic device 101 is switched from he inactive state to the active state, a cover display 1784 (e.g., the cover display 272 of FIG. 2) may be configured to display visual information. In addition to this, the key button 1781 may be used to receive a designated user input. For example, the key button 1781 may be used to receive a user input for adjusting a volume of an audio signal outputted from a speaker.

The fingerprint recognition unit 1782 may be used to identify a designated user of the foldable electronic device 101. When a user contacting a finger to the fingerprint recognition unit 1782, the fingerprint recognition unit 1782 may provide data indicating a fingerprint pattern to a processor (e.g., the processor 120 of FIG. 1). The processor may be configured to identify whether a first pattern of the fingerprint identified through the data corresponds to a second pattern of the fingerprint registered in memory. According to an embodiment, the fingerprint recognition unit 1782 may use the key button 1781. For example, the processor may be configured to identify whether the first pattern of the fingerprint identified through the key button 1781 corresponds to the second pattern of the fingerprint registered in the memory. The processor may be configured to perform an operation (e.g., unlocking) of allowing the use of the foldable electronic device 101 based on identifying the first pattern corresponding to the second pattern.

The foldable electronic device 101 may be used in a folded state. For example, the foldable electronic device 101 may provide visual information (e.g., an image and/or a video) provided through the cover display 1784 in the folded state. For example, the foldable electronic device 101 may be configured to control the speaker to emit an audio signal in the folded state.

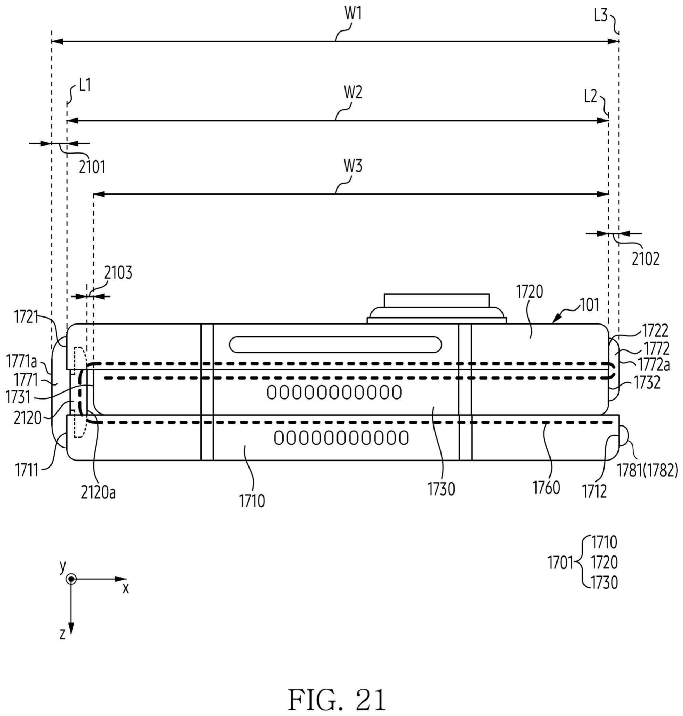

According to an embodiment, in the folded state, the key button 1781 and/or the fingerprint recognition unit 1782 may be disposed so that the user may use the key button 1781 and/or the fingerprint recognition unit 1782. For example, in the folded state, the key button 1781 may be positioned outside the folded foldable housing 1701 so that the user may press the key button 1781. According to an embodiment, the key button 1781 and/or the fingerprint recognition unit 1782 may be disposed on a lateral surface (e.g., a second side surface 1712 of FIG. 21) of a first housing part 1710 opposite a first hinge assembly 1740. For example, in the folded state, as a portion of the key button 1781 and/or the fingerprint recognition unit 1782 is exposed to the lateral surface 1712 of the first housing part 1710, the user may use the key button 1781 and/or the fingerprint recognition unit 1782. For example, in the folded state, the key button 1781 and/or the fingerprint recognition unit 1782 may be positioned on a second hinge cover 1772.

An electronic device 1001 according to a comparative example illustrated in FIG. 20B indicates an electronic device in which the key button 1781 and/or the fingerprint recognition unit 1782 is disposed on a lateral surface 1732 of a third housing part 1730. Referring to FIG. 20B, in a case that the key button 1781 and/or the fingerprint recognition unit 1782 is disposed on a lateral surface (e.g., a fifth lateral surface 1731 of FIG. 21) of the third housing part 1730 , the key button 1781 and/or the fingerprint recognition unit 1782 may be exposed to the outside of the foldable electronic device 101 in an unfolded state 2000a of the foldable electronic device 101. In an intermediate state 2000b in which the third housing part 1730 is folded with respect to a second housing part 1720, the key button 1781 and/or the fingerprint recognition unit 1782 may be exposed to the outside of the foldable electronic device 101. In a folded state 2000c of the foldable electronic device 101, since the third housing part 1730 is positioned between the first housing part 1710 and the second housing part 1720, the lateral surface 1732 of the third housing part 1730 may be covered by a first hinge cover 1771, without being exposed to the outside of the foldable electronic device 101. Since the lateral surface 1732 of the third housing part 1730 is covered, the key button 1781 and/or the fingerprint recognition unit 1782 may not be used.

According to an embodiment, the key button 1781 and/or the fingerprint recognition unit 1782 may be disposed on the lateral surface 1712 of the first housing part 1710 so that the key button 1781 and/or the fingerprint recognition unit 1782 may be used not only in the unfolded state, the intermediate state, but also in the folded state.

FIG. 21 illustrates a foldable electronic device according to an embodiment in a folded state.

Referring to FIG. 21, in a folded state, a first housing part 1710, a second housing part 1720, and a third housing part 1730 may overlap each other. For example, the third housing part 1730 may be positioned between the first housing part 1710 and the second housing part 1720. A space may be formed between the first housing part 1710 and the second housing part 1720 in the folded state so that the third housing part 1730 may be positioned between the first housing part 1710 and the second housing part 1720.

In the folded state of a foldable electronic device 101, a first hinge cover 1771 may face a second hinge cover 1772 with a foldable housing 1701 interposed therebetween. For example, the first hinge cover 1771 may be disposed on a side (e.g., -x direction) of the foldable housing 1701, and the second hinge cover 1772 may be disposed on another side (e.g., +x direction) of the foldable housing 1701. The first hinge cover 1771 may be opposite to the second hinge cover 1772. The first housing part 1710 and the second housing part 1720 may partially surround the first hinge cover 1771. For example, the first housing part 1710 and the second housing part 1720 may rotate outside the first hinge cover 1771 when unfolded or folded. The second housing part 1720 and the third housing part 1730 may partially surround the second hinge cover 1772. For example, the second housing part 1720 and the third housing part 1730 may rotate outside the second hinge cover 1772 when unfolded or folded.

As illustrated in FIG. 21, the first hinge cover 1771 and the second hinge cover 1772 may protrude from the foldable housing 1701 in the folded state.

For example, the first housing part 1710 may include a first lateral surface 1711 adjacent to the first hinge cover 1771 and a second lateral surface 1712 opposite to the first lateral surface 1711 in the folded state. At least one key button 1781 and/or a fingerprint recognition unit 1782 may be exposed outside the foldable housing 1701 through the second lateral surface 1712. The second housing part 1720 may include a third lateral surface 1721 adjacent to the first hinge cover 1771 and a fourth lateral surface 1722 opposite to the third lateral surface 1721 in the folded state. The fourth lateral surface 1722 may be adjacent to the second hinge cover 1772. The third housing part 1730 may include a fifth lateral surface 1731 facing the first hinge cover 1771 and a sixth lateral surface 1732 opposite the fifth lateral surface 1731, in the folded state. The sixth lateral surface 1732 may be adjacent to the second hinge cover 1772.

For example, the first hinge cover 1771 may protrude from the first lateral surface 1711 and the third lateral surface 1721. For example, the first lateral surface 1711 and the third lateral surface 1721 may be substantially aligned in the folded state. The first lateral surface 1711 and the third lateral surface 1721 being substantially aligned may be referred to as the first lateral surface 1711 and the third lateral surface 1721 being positioned on the same line L1 in the folded state. A portion of the first hinge cover 1771 protruding from the first lateral surface 1711 and the third lateral surface 1721 may protrude from about 2.0 mm to about 2.5 mm. For example, a distance (e.g., a first distance 2101) from an outer surface 1771a of the first hinge cover 1771 to the first lateral surface 1711 (or the third lateral surface 1721) may be about 2.3 mm, but it is not limited thereto.

For example, an outer surface 1772a of the second hinge cover 1772 may protrude from the fourth lateral surface 1722 and the sixth lateral surface 1732. For example, the fourth lateral surface 1722 and the sixth lateral surface 1732 may be substantially aligned in the folded state. The fourth lateral surface 1722 and the sixth lateral surface 1732 being substantially aligned may be referred to as the fourth lateral surface 1722 and the sixth lateral surface 1732 being positioned on the same line L2 in the folded state. A portion of the second hinge cover 1772 protruding from the fourth lateral surface 1722 and the sixth lateral surface 1732 may protrude from about 1.5 mm to about 2.0 mm. For example, a distance (e.g., a second distance 2102) from the outer surface 1772a of the second hinge cover 1772 to the fourth lateral surface 1722 (or the sixth lateral surface 1732) may be about 1.7 mm, but it is not limited thereto.

The first distance 2101 and the second distance 2102 may be different according to a structure of the foldable electronic device 101. For example, the first distance 2101 and the second distance 2102 may vary according to a design of a first hinge assembly 1740 and a second hinge assembly 1750, and a thickness of the foldable housing 1701. The first distance 2101 and the second distance 2102 may be greater than 0. The first distance 2101 and the second distance 2102 may be smaller than a first thickness T1 of the first housing part 1710, a second thickness T2 of the second housing part 1720, and a third thickness T3 of the third housing part 1730.

According to an embodiment, widths of the first housing part 1710, the second housing part 1720, and the third housing part 1730 may be different from each other. In the present disclosure, a width may be referred to as a length in a direction perpendicular to a rotational axis of the foldable housing 1701. The first housing part 1710 may have a first width W1. The second housing part 1720 may have a second width W2. The third housing part 1730 may have a third width W3.

According to an embodiment, when the third housing part 1730 is positioned between the first housing part 1710 and the second housing part 1720 in the folded state, the third width W3 may be narrower than the first width W1 and the second width W2 so that the third housing part 1730 does not interfere with a flexible display 1760. Since the third width W3 is narrower than the first width W1 and the second width W2, the fifth lateral surface 1731 may not be aligned with the third lateral surface 1721 and the first lateral surface 1711 in the folded state. The fifth lateral surface 1731 may be spaced apart from the virtual line L1 connecting the first lateral surface 1711 and the third lateral surface 1721 toward the second hinge cover 1772 (e.g., +x direction).

According to an embodiment, the first width W1 may be wider than the second width W2 and the third width W3. In the folded state, the second lateral surface 1712 of the first housing part 1710 may be substantially aligned with the outer surface 1772a of the second hinge cover 1772. The first lateral surface 1711 and the outer surface 1772a of the second hinge cover 1772 being substantially aligned may be referred to as the first lateral surface 1711 and the outer surface 1772a of the second hinge cover 1772 being positioned on the same line L3 in the folded state. In a case that the second lateral surface 1712 is not substantially aligned with the outer surface 1772a of the second hinge cover 1772, and is positioned outside the outer surface 1772a of the second hinge cover 1772 (e.g., +x direction), the first housing part 1710 may be easily damaged by impact since the first housing part 1710 protrudes outward. As the second lateral surface 1712 is substantially aligned with the outer surface 1772a of the second hinge cover 1772, the foldable housing 1701 may be compact in the folded state. The at least one key button 1781 and/or the fingerprint recognition unit 1782 exposed through the second lateral surface 1712 may protrude from the line L3 so that the user may easily press the at least one key button 1781 and/or the fingerprint recognition unit 1782.

For example, since the first lateral surface 1711 and the third lateral surface 1721 are substantially aligned, the second width W2 may correspond to a value obtained by subtracting the second distance 2102 from the first width W1. For example, in a case that the first width W1 is about 67.2 mm and the second distance 2102 is about 1.7 mm, the second width W2 may be about 65.5 mm (67.2 mm - 1.7 mm), but it is not limited thereto.

For example, the foldable electronic device 101 may include a cap 2120 for reducing an inflow of a foreign substance. The cap 2120 may be positioned close to the fifth lateral surface 1731 of the third housing part 1730 in the folded state. In the folded state, the fifth lateral surface 1731 of the third housing part 1730 may be spaced apart from the cap 2120 (e.g., a protrusion 2120a). In a case that the fifth lateral surface 1731 contacts the protrusion 2120a of the cap 2120, when the third housing part 1730 is unfolded or folded, it physically collides with the cap 2120, causing damage to the foldable electronic device 101. As the fifth lateral surface 1731 is spaced apart from the cap 2120, the damage may be prevented. For example, as the fifth lateral surface 1731 may be spaced from the cap 2120 toward the second hinge cover 1772 (e.g., +x direction), a gap 2103 between the fifth lateral surface 1731 and the cap 2120 may be formed. For example, the gap 2103 may be about 3 mm or less (e.g., about 0.75 mm), but it is not limited thereto.

For example, since the fourth lateral surface 1722 and the sixth lateral surface 1732 are substantially aligned, the third width W3 may correspond to a value obtained by subtracting, from the second width W2, a height of the cap 2120 with respect to the virtual line L1 and the gap 2103 between the fifth lateral surface 1731 and the cap 2120. For example, in a case that the second width W2 is about 65.5mm, the height of the cap 2120 is about 2.5mm, and the gap 2103 is about 0.8mm, the third width W3 may be about 62.2mm (65.5mm-2.5mm-0.8mm), but it is not limited thereto.

According to an embodiment, as the first housing part 1710, the second housing part 1720, and the third housing part 1730 each have different widths, the foldable housing 1701 having an inwardly folded structure may be formed. As the third housing part 1730 has a structure capable of being positioned between the first housing part 1710 and the second housing part 1720, the three housings may be stably folded or unfolded.

A foldable electronic device 101 is provided. The foldable electronic device 101 may comprise a housing 200 including a first housing part 210, a second housing part 220, and a third housing part 230. For example, the third housing part 230 may be positioned between the first housing part 210 and the second housing part 220 in an unfolded state of the foldable electronic device 101. The foldable electronic device 101 may comprise a first hinge assembly 251 rotatably connecting the third housing part 230 to the first housing part 210, the first hinge assembly 251 including a first set 320 of gears to rotate the third housing part 230 in conjunction with rotation of the first housing part 210. The foldable electronic device 101 may comprise a second hinge assembly 252 rotatably connecting the third housing part 230 to the second housing part 220, the second hinge assembly 252 including a second set of gears 330 to rotate the third housing part 230 in conjunction with rotation of the second housing part 220. The number of gears included in the second set of gears 330 may be greater than the number of gears included in the first set of gears 320 to provide a folded state in which a front side of the first housing part 210 faces a front side of the third housing part 230 and a rear side of the first housing part 210 faces a front side of the second housing part 220.

The first hinge assembly 251 may include a first rotating plate 251-1 coupled to the first housing part 210, a second rotating plate 251-2 coupled to the third housing part 230, a first shaft 811 coupled to the first rotating plate 251-1, and a second shaft 812 coupled to the second rotating plate 251-2. The first set of gears 320 may include a first gear 701 coupled to the first shaft 811, a second gear 702 coupled to the second shaft 812, a third gear 703 engaged with the first gear 701, and a fourth gear 704 engaged with the second gear 702 and engaged with the third gear 703. The second hinge assembly 252 may include a third rotating plate 252-1 coupled to the second housing part 220, a fourth rotating plate 252-2 coupled to the third housing part 230, a third shaft 813 coupled to the third rotating plate 252-1, and a fourth shaft 814 coupled to the fourth rotating plate 252-2. The second set of gears 330 may include a fifth gear 705 coupled to the third shaft 813, a sixth gear 706 coupled to the fourth shaft 814, a seventh gear engaged 707 with the fifth gear 705, an eighth gear 708 engaged with the seventh gear 707, a ninth gear 709 engaged with the eighth gear 708, and a tenth gear 710 engaged with the sixth gear 706 and engaged with the ninth gear 709. The first hinge assembly 251 may be configured to rotate the third housing part 230 in conjunction with the rotation of the first housing part 210 by rotating the first shaft 811 according to the rotation of the first housing part 210, rotating the first gear 701 according to the rotation of the first shaft 811, rotating the third gear 703 according to the rotation of the first gear 701, rotating the fourth gear 704 according to the rotation of the third gear 703, rotating the second gear 702 according to the rotation of the fourth gear 704, rotating the second shaft 812 according to the rotation of the fourth gear 704, and rotating the third housing part 230 according to the rotation of the second shaft 812. The second hinge assembly 252 may be configured to rotate the third housing part 230 in conjunction with the rotation of the second housing part 220 by rotating the third shaft 813 according to the rotation of the second housing part 220, rotating the fifth gear 705 according to the rotation of the third shaft 813, rotating the seventh gear 707 according to the rotation of the fifth gear 705, rotating the eighth gear 708 according to the rotation of the seventh gear 707, rotating the ninth gear 709 according to the rotation of the eighth gear 708, rotating the tenth gear 710 according to the rotation of the ninth gear 709, rotating the sixth gear 706 according to the rotation of the tenth gear 710, rotating the fourth shaft 814 according to the rotation of the sixth gear 706, and rotating the third housing part 230 according to the rotation of the fourth shaft 814.

A distance between the third shaft 813 and the fourth shaft 814 may be longer than a distance between the first shaft 811 and the second shaft 812.

A diameter of the third shaft 813 may be larger than a diameter of the first shaft 811.

The fifth gear 705 may be paired with the sixth gear 706. The seventh gear 707 may be paired with the tenth gear 710. The eighth gear 708 may be paired with the ninth gear 709. For example, a size of the fifth gear 705 may correspond to a size of the sixth gear 706. A size of the seventh gear 707 may correspond to a size of the tenth gear 710. A size of the eighth gear 708 may correspond to a size of the ninth gear 709.

The size of the seventh gear 707 may be larger than the size of the fifth gear 705. The size of the seventh gear 707 may be smaller than the size of the ninth gear 709.

The foldable electronic device 101 may further comprise a flexible display 271, disposed on the first housing part 210, the second housing part 220, and the third housing part 230. A distance between a rotational axis 708a of the eight gear 708 and a rear side 720 of the flexible display 271 may be longer than a distance between a rotational axis 705a of the fifth gear 705 and the rear side of the flexible display 271, and shorter than a distance between a rotational axis 707a of the seventh gear 707 and the rear side of the flexible display 271, in the folded state of the foldable electronic device 101.

The foldable electronic device 101 may further comprise a flexible display 271, disposed on the first housing part 210, the second housing part 220, and the third housing part 230. A distance between a rotational axis 701a of the first gear 701 and a rear side 720 of the flexible display 271 may be shorter than a distance between a rotational axis 703a of the third gear 703 and the rear side 720 of the flexible display 271, in the folded state of the foldable electronic device 101.

The foldable electronic device 101 may further comprise a flexible display 271 disposed on the first housing part 210, the second housing part 220, and the third housing part 230, the flexible display 271 including a first bending portion 1430 to be bent by rotation of the first housing part 210 with respect to the third housing part 230, and a second bending portion 1440 to be bent by rotation of the second housing part 220 with respect to the third housing part 230. The foldable electronic device 101 may comprise a first support plate 1410, coupled to the first hinge assembly 251, disposed under the first bending portion 1430 of the flexible display 271, and configured to, in the folded state of the foldable electronic device 101, be spaced apart from the first bending portion 1430 of the flexible display 271. The foldable electronic device 101 may comprise a second support plate 1420, coupled with the second hinge assembly 252, disposed under the second bending portion 1440 of the flexible display 271, and configured to, in the folded state of the foldable electronic device 101, be contacted with the second bending portion 1440 of the flexible display 271. The first bending portion 1430 may be supported by the first support plate 1410 in an unfolded state of the foldable electronic device 101, different from the folded state of the foldable electronic device 101. In the unfolded state of the foldable electronic device 101, the second bending portion 1440 may be supported by the second support plate 1420.

The second support plate 1420 may include a first sub support plate 1420-1 and a second sub support plate 1420-2 that are configured to move, based on the rotation of the second set of gears 330.

The second bending portion 1440 configured to, in the folded state of the foldable electronic device 101, be contacted with the second support plate 1420, may include a flat portion 1441 contacted with the second support plate 1420 to be supported by the second support plate 1420, and a curved portion 1442 or 1443, extending from the flat portion 1441, spaced apart from the second support plate 1420. In the folded state of the foldable electronic device 101, the flat portion 1441 of the second bending portion 1440 may be supported by the second support plate 1420.

A width of the flat portion 1441 may be smaller than a thickness of the second housing part 220 positioned between the first housing part 210 and the third housing part 230, in the folded state of the foldable electronic device 101.

An area (e.g., the second bending portion 1440) of the flexible display 271 supported by the second support plate 1420 may be wider than an area (e.g., the first bending portion 1430) of the flexible display 271 supported by the first support plate 1410, in the unfolded state of the foldable electronic device 101.

The foldable electronic device 101 may comprise a first hinge cover 311 at least partially accommodating the first hinge assembly 251. The foldable electronic device 101 may comprise a second hinge cover 312 at least partially accommodating the second hinge assembly 252. A width of the second hinge cover 312 may be wider than a width of the first hinge cover 311.

The first hinge cover 311 may be substantially covered by the first housing part 210 and the third housing part 230, in the folded state. At least a portion of the second hinge cover 312 may be exposed between the second housing part 220 and the third housing part 230, in the folded state.

The first hinge assembly 251 may include at least one first elastic member 1210. The second hinge assembly 252 may include at least two second elastic members 480. The number of the at least two second elastic members 480 may be greater than the number of the at least one first elastic member 1210.

The second hinge assembly 252 may include a third rotating plate 252-1 coupled to the second housing part 220, and a fourth rotating plate 252-2 coupled to the third housing part 230. Each of the third rotating plate 252-1 and the fourth rotating plate 252-2 may include a first rotating member 410, including a rotary rail 530, coupled to the second housing part 220 or the third housing part 230, a guide member 420, coupled to the second housing part 220 or the third housing part 230, including a guide groove 540, into which the rotary rail 530 is inserted, guiding rotation of the first rotating member 410, a connecting member 430, including a slot 920, coupled to the first rotating member 410, and a second rotating member 440 including a protrusion 910 inserted into the slot 920 and movable within the slot 920 to limit a rotation range of the first rotating member 410, wherein the second rotating member 440 provides a torque of the second set of gears 330 to the first rotating member 410 through the connecting member 430, by being coupled with a shaft connected to a portion of the second set of gears 330.

The slot 920 may include a first locking portion 920a, spaced apart from an end 921a or 922a of the slot 920 by a designated distance, protruding toward an inside of the slot 920, and a second locking portion 920b, spaced apart from another end 921b or 922b of the slot 920 opposite to the end by the designated distance, protruding toward the inside of the slot 920.

For example, the foldable electronic device 101 may further include the flexible display 271 disposed on the foldable housing 200. The foldable electronic device 101 may further include the first support plate 1410 moved in conjunction with the first set of gears 320. The foldable electronic device 101 may further include the second support plate 1420 moved by being linked to the second set of gears 330. The first support plate 1410 may support the first bending portion 1430 of the flexible display 271, in the first state. The second support plate 1420 may support the second bending portion 1440 of the flexible display 271, in the first state or the second state. The second bending portion 1440 may be wider than the first bending portion 1430.

For example, in the third state, a width of the second bending portion 1440 supported by the second support plate 1420 may be less than a thickness of the first housing part 210 positioned between the third housing part 230 and the second housing part 220.

For example, a width of the second support plate 1420 may be wider than a width of the first support plate 1410.

For example, a length of the second support plate 1420 may be different from a length of the first support plate 1410.

For example, the second bending portion 1440 may include a first portion 1441 vertically disposed with the third housing part 230 and the second housing part 220 by being supported by the second support plate 1420, in the third state. The second bending portion 1440 may include, in the third state, a second portion 1442, positioned between the first portion 1441 and an area of the flexible display 271 disposed on the third housing part 230, and at least partially bent. The second bending portion 1440 may include, in the third state, a third portion 1443, positioned between the first portion 1441 and an area of the flexible display 271 disposed on the second housing part 220, and at least partially bent. A width of the first portion 1441 may be greater than a thickness of the first housing part 210 positioned between the third housing part 230 and the second housing part 220 in the third state.

For example, the first hinge assembly 251 may include at least one first elastic member 1210. The second hinge assembly 252 may include at least two second elastic members 480. The number of the at least two second elastic members 480 may be greater than the number of the at least one first elastic member 1210.

For example, the second hinge assembly 252 may include the first rotating member 410, including the rotary rail 530, coupled to the second housing part 220 or the third housing part 230. The second hinge assembly 252 may include the guide member 420, coupled to the second housing part 220 or the third housing part 230, including the guide groove 540, into which the rotary rail 530 is inserted, guiding rotation of the first rotating member 410. The second hinge assembly 252 may include the connecting member 430, including the slot 920, coupled to the first rotating member 410. The second hinge assembly 252 may include the second rotating member 440. The second rotating member 440 may include the protrusion 910. The protrusion 910 may be inserted into the slot 920. The protrusion 910 may be movable within the slot 920 to limit the rotation range of the first rotating member 410. The second rotating member 440 may transmit the torque of the second set of gears 330 to the first rotating member 410 through the connecting member 430 by being coupled with a shaft connected to at least a portion of the second set of gears 330.

For example, the slot 920 may include the first locking portion 920a, spaced apart from the end 921a or 922a of the slot 920 by a designated distance, protruding toward an inside of the slot 920, and the second locking portion 920b, spaced apart from the other end 921b or 922b of the slot 920 opposite to the end 921a or 922a by the designated distance, protruding toward the inside of the slot 920.

For example, the connecting member 430 may include a third elastic member 1230 disposed within the slot 920. The third elastic member 1230 may include a third locking portion 1231, spaced apart from the end 921a or 922a of the slot 920 by the designated distance, protruding toward the inside of the slot 920. The third elastic member 1230 may include a fourth locking portion 1232, spaced apart from the other end 921b or 922b of the slot 920 opposite to the end 921a or 922a by the designated distance, protruding toward the inside of the slot 920.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.  A foldable electronic device comprising:

    a housing including:

    a first housing part;
    a second housing part; and
    a third housing part,

    a first hinge assembly rotatably connecting the third housing part to the first housing part, the first hinge assembly including a first set of gears to rotate the third housing part in conjunction with rotation of the first housing part, and a second hinge assembly rotatably connecting the third housing part to the second housing part, the second hinge assembly including a second set of gears to rotate the third housing part in conjunction with rotation of the second housing part,
    wherein the number of gears included in the second set of gears is greater than the number of gears included in the first set of gears to provide a folded state of the foldable electronic device, in which a front side of the first housing part faces a front side of the third housing part and a rear side of the first housing part faces a front side of the second housing part.

2.  The foldable electronic device of claim 1,

    wherein the first hinge assembly includes:

    a first rotating plate coupled to the first housing part;
    a second rotating plate coupled to the third housing part;
    a first shaft coupled to the first rotating plate; and
    a second shaft coupled to the second rotating plate,

    wherein the first set of gears include:

    a first gear coupled to the first shaft;
    a second gear coupled to the second shaft;
    a third gear engaged with the first gear; and
    a fourth gear engaged with the second gear and engaged with the third gear,

    wherein the second hinge assembly includes:

    a third rotating plate coupled to the second housing part;
    a fourth rotating plate coupled to the third housing part;
    a third shaft coupled to the third rotating plate; and

a fourth shaft coupled to the fourth rotating plate,

wherein the second set of gears include:

a fifth gear coupled to the third shaft;
a sixth gear coupled to the fourth shaft;
a seventh gear engaged with the fifth gear;
an eighth gear engaged with the seventh gear;
a ninth gear engaged with the eighth gear; and
a tenth gear engaged with the sixth gear and engaged with the ninth gear,

wherein the first hinge assembly is configured to rotate the third housing part in conjunction with the rotation of the first housing part by:

rotating the first shaft according to the rotation of the first housing part,
rotating the first gear according to the rotation of the first shaft;
rotating the third gear according to the rotation of the first gear;
rotating the fourth gear according to the rotation of the third gear;
rotating the second gear according to the rotation of the fourth gear;
rotating the second shaft according to the rotation of the fourth gear; and
rotating the third housing part according to the rotation of the second shaft, and

wherein the second hinge assembly is configured to rotate the third housing part in conjunction with the rotation of the second housing part by:

rotating the third shaft according to the rotation of the second housing part,
rotating the fifth gear according to the rotation of the third shaft;
rotating the seventh gear according to the rotation of the fifth gear;
rotating the eighth gear according to the rotation of the seventh gear;
rotating the ninth gear according to the rotation of the eighth gear;
rotating the tenth gear according to the rotation of the ninth gear;
rotating the sixth gear according to the rotation of the tenth gear;
rotating the fourth shaft according to the rotation of the sixth gear; and
rotating the third housing part according to the rotation of the fourth shaft.

3. The foldable electronic device of claim 2,
wherein a distance between the third shaft and the fourth shaft is longer than a distance between the first shaft and the second shaft.

4. The foldable electronic device of claim 2 or 3,

wherein the fifth gear is paired with the sixth gear,
wherein the seventh gear is paired with the tenth gear, and
wherein the eighth gear is paired with the ninth gear.

5. The foldable electronic device of claim 4,
wherein a size of the seventh gear is larger than a size of the fifth gear, and smaller than a size of the ninth gear.

6. The foldable electronic device of claim 4 or 5, further comprising a flexible display, disposed on the first housing part, the second housing part, and the third housing part,
wherein a distance between a rotational axis of the eight gear and a rear side of the flexible display is:

longer than a distance between a rotational axis of the fifth gear and the rear side of the flexible display, and
shorter than a distance between a rotational axis of the seventh gear and the rear side of the flexible display, in the folded state of the foldable electronic device.

7. The foldable electronic device of any one of claims 4 to 6, further comprising a flexible display, disposed on the first housing part, the second housing part, and the third housing part,

wherein a distance between a rotational axis of the first gear and a rear side of the flexible display is shorter than a distance between a rotational axis of the third gear and the rear side of the flexible display, in the folded state of the foldable electronic device.

8. The foldable electronic device of any one of claims 1 to 7, further comprising:
a flexible display disposed on the first housing part, the second housing part, and the third housing part, the flexible display including:

a first bending portion to be bent by rotation of the first housing part with respect to the third housing part, and a second bending portion to be bent by rotation of the second housing part with respect to the third housing part, a first support plate, coupled to the first hinge assembly, disposed under the first bending portion of the flexible display, and configured to, in the folded state of the foldable electronic device, be spaced apart from the first bending portion of the flexible display, and
a second support plate, coupled with the second hinge assembly, disposed under the second bending portion of the flexible display, and configured to, in the folded state of the foldable electronic device, be contacted with the second bending portion of the flexible display.

9. The foldable electronic device of claim 8,
wherein the second support plate includes a first sub support plate and a second sub support plate that are configured to move, based on the rotation of the second set of gears.

10. The foldable electronic device of claim 8 or 9,
wherein the second bending portion of the flexible display configured to, in the folded state of the foldable electronic device, be contacted with the second support plate, includes:

a flat portion contacted with the second support plate to be supported by the second support plate; and
a curved portion, extending from the flat portion, spaced apart from the second support plate.

11. The electronic device of any one of claims 1 to 10, further comprising:

a first hinge cover at least partially accommodating the first hinge assembly, and
a second hinge cover at least partially accommodating the second hinge assembly, and
wherein a width of the second hinge cover is wider than a width of the first hinge cover.

12. The foldable electronic device of claim 11,

wherein, the first hinge cover is substantially covered by the first housing part and the third housing part, in the folded state of the foldable electronic device, and
wherein at least a portion of the second hinge cover is exposed between the second housing part and the third housing part, in the folded state of the foldable electronic device.

13. The electronic device of any one of claims 1 to 12,

wherein the first hinge assembly includes at least one first elastic member,
wherein the second hinge assembly includes at least two second elastic members, and
wherein the number of the at least two second elastic members is greater than the number of the at least one first elastic member.

14. The electronic device of any one of claims 1 to 13,

wherein the second hinge assembly includes:

a third rotating plate coupled to the second housing part, and
a fourth rotating plate coupled to the third housing part,

wherein each of the third rotating plate and the fourth rotating plate includes:

a first rotating member, including a rotary rail, coupled to the second housing part or the third housing part,

a guide member, coupled to the second housing part or the third housing part, including a guide groove, into which the rotary rail is inserted, guiding rotation of the first rotating member,

a connecting member, including a slot, coupled to the first rotating member, and

a second rotating member including a protrusion inserted into the slot and movable within the slot to limit a rotation range of the first rotating member, wherein the second rotating member provides a torque of the second set of gears to the first rotating member through the connecting member, by being coupled with a shaft connected to a portion of the second set of gears.

15. The electronic device of claim 14,
wherein the slot includes:

a first locking portion, spaced apart from an end of the slot by a designated distance, protruding toward an inside of the slot, and

a second locking portion, spaced apart from another end of the slot opposite to the end by the designated distance, protruding toward the inside of the slot.

FIG. 1

FIG. 2

FIG. 3A

FIG. 3B

FIG. 4A

FIG. 4B

FIG. 5A

FIG. 5B

FIG. 5C

FIG. 6A

FIG. 6B

FIG. 6C

FIG. 7A

FIG. 7B

FIG. 7C

FIG. 8A

FIG. 8B

FIG. 9A

410 { 411 412    430 { 431 432    440 { 441 442

450 { 451 452    460 { 461 462

FIG. 9B

FIG. 9C

FIG. 9D

FIG. 10A

FIG. 10B

FIG. 11A

FIG. 11B

FIG. 11C

FIG. 12A

FIG. 12B

920a-1    920    920b-1    910    430

921a(922a)    920a-2    920b-2    921b(922b)

920a { 920a-1
       920a-2

920b { 920b-1
       920b-2

FIG. 12C

FIG. 12D

FIG. 12E

FIG. 13

FIG. 14A

FIG. 14B

FIG. 14C

FIG. 15A

FIG. 15B

FIG. 15C

FIG. 16A

FIG. 16B

FIG. 16C

FIG. 17

FIG. 18

FIG. 19

FIG. 20A

FIG. 20B

FIG. 21

## INTERNATIONAL SEARCH REPORT

| International application No. |
| --- |
| **PCT/KR2024/011529** |

### A. CLASSIFICATION OF SUBJECT MATTER

**G06F 1/16**(2006.01)i; **G06V 40/13**(2022.01)i; **H04M 1/23**(2006.01)i; **H04M 1/02**(2006.01)i

According to International Patent Classification (IPC) or to both national classification and IPC

### B. FIELDS SEARCHED

Minimum documentation searched (classification system followed by classification symbols)

G06F 1/16(2006.01); G06F 3/0481(2013.01); G06F 3/14(2006.01); G09F 9/30(2006.01); H04M 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴더블(foldable), 하우징(housing), 다중 힌지(multi hinge), 기어 개수(the number of gears), 디스플레이(display)

### C. DOCUMENTS CONSIDERED TO BE RELEVANT

| Category* | Citation of document, with indication, where appropriate, of the relevant passages | Relevant to claim No. |
| --- | --- | --- |
| A | US 2020-0371553 A1 (JARLLYTEC CO., LTD.) 26 November 2020 (2020-11-26)<br>See paragraphs [0006]-[0009], [0028] and [0056]; and figures 3-6 and 17. | 1-15 |
| A | KR 10-1320150 B1 (QUALCOMM INCORPORATED) 22 October 2013 (2013-10-22)<br>See paragraphs [0052]-[0060]; and figures 5 and 15-20. | 1-15 |
| A | KR 10-2022-0099784 A (SAMSUNG ELECTRONICS CO., LTD.) 14 July 2022 (2022-07-14)<br>See paragraphs [0049]-[0052]; and figure 2. | 1-15 |
| A | KR 10-1834793 B1 (LG DISPLAY CO., LTD.) 06 March 2018 (2018-03-06)<br>See paragraphs [0154]-[0155] and [0173]-[0177]; and figures 12-13b. | 1-15 |
| A | US 2021-0109572 A1 (GOOGLE LLC) 15 April 2021 (2021-04-15)<br>See paragraphs [0031] and [0043]; and figure 2A. | 1-15 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 November 2024** | **12 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011529**

| Patent document cited in search report | | | Publication date (day/month/year) | Patent family member(s) | | | Publication date (day/month/year) |
|---|---|---|---|---|---|---|---|
| US | 2020-0371553 | A1 | 26 November 2020 | US | 11048296 | B2 | 29 June 2021 |
| KR | 10-1320150 | B1 | 22 October 2013 | CN | 102150094 | A | 10 August 2011 |
| | | | | CN | 104077076 | A | 01 October 2014 |
| | | | | CN | 105302241 | A | 03 February 2016 |
| | | | | CN | 107092304 | A | 25 August 2017 |
| | | | | EP | 2332038 | A1 | 15 June 2011 |
| | | | | EP | 2997434 | A1 | 23 March 2016 |
| | | | | EP | 3190476 | A1 | 12 July 2017 |
| | | | | JP | 2012-502321 | A | 26 January 2012 |
| | | | | JP | 2014-041637 | A | 06 March 2014 |
| | | | | JP | 2015-038746 | A | 26 February 2015 |
| | | | | JP | 2016-035756 | A | 17 March 2016 |
| | | | | JP | 2017-102945 | A | 08 June 2017 |
| | | | | KR | 10-2011-0066165 | A | 16 June 2011 |
| | | | | KR | 10-2013-0079563 | A | 10 July 2013 |
| | | | | US | 2010-0060664 | A1 | 11 March 2010 |
| | | | | US | 2011-0126141 | A1 | 26 May 2011 |
| | | | | WO | 2010-028394 | A1 | 11 March 2010 |
| KR | 10-2022-0099784 | A | 14 July 2022 | WO | 2022-149866 | A1 | 14 July 2022 |
| KR | 10-1834793 | B1 | 06 March 2018 | CN | 109308850 | A | 05 February 2019 |
| | | | | JP | 2019-028467 | A | 21 February 2019 |
| | | | | JP | 2020-021092 | A | 06 February 2020 |
| | | | | JP | 6603764 | B2 | 06 November 2019 |
| | | | | JP | 7269862 | B2 | 09 May 2023 |
| | | | | US | 10727435 | B2 | 28 July 2020 |
| | | | | US | 11258035 | B2 | 22 February 2022 |
| | | | | US | 2019-0036068 | A1 | 31 January 2019 |
| | | | | US | 2020-0321551 | A1 | 08 October 2020 |
| US | 2021-0109572 | A1 | 15 April 2021 | CN | 113015947 | A | 22 June 2021 |
| | | | | CN | 118192761 | A | 14 June 2024 |
| | | | | EP | 3837593 | A1 | 23 June 2021 |
| | | | | US | 10890949 | B2 | 12 January 2021 |
| | | | | US | 11216044 | B2 | 04 January 2022 |
| | | | | US | 2020-0117245 | A1 | 16 April 2020 |
| | | | | WO | 2020-076940 | A1 | 16 April 2020 |

Form PCT/ISA/210 (patent family annex) (July 2022)